(19) Europäisches Patentamt
European Patent Office
Office européen des brevets

(11) Veröffentlichungsnummer : **0 387 201 B1**

(12) **EUROPÄISCHE PATENTSCHRIFT**

(45) Veröffentlichungstag der Patentschrift :
**02.02.94 Patentblatt 94/05**

(51) Int. Cl.$^5$ : **C09B 67/22,** C09B 1/26

(21) Anmeldenummer : **90810164.5**

(22) Anmeldetag : **02.03.90**

(54) **Farbstoffmischung und deren Verwendung.**

(30) Priorität : **10.03.89 CH 905/89**

(43) Veröffentlichungstag der Anmeldung :
**12.09.90 Patentblatt 90/37**

(45) Bekanntmachung des Hinweises auf die Patenterteilung :
**02.02.94 Patentblatt 94/05**

(84) Benannte Vertragsstaaten :
**BE CH DE DK ES FR GB IT LI NL**

(56) Entgegenhaltungen :
**EP-A- 0 083 299**
**EP-A- 0 083 300**

(73) Patentinhaber : **CIBA-GEIGY AG**
**Klybeckstrasse 141**
**CH-4002 Basel (CH)**

(72) Erfinder : **Mäusezahl, Dieter, Dr.**
**Langgartenstrasse 19**
**CH-4105 Biel-Benken (CH)**

EP 0 387 201 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die der vorliegenden Erfindung zugrunde liegende Aufgabe war es, Anthrachinon-Farbstoffe oder -Farbstoffmischungen zu finden, die zum Färben von natürlichen und synthetischen Polyamidmaterialien aus wässrigem Bad geeignet sind, die sehr gute Echtheitseigenschaften, insbesondere in der Lichtechtheit, aufweisen und die insbesondere in Kombination mit anderen Farbstoffen ein gutes Ziehverhalten insbesondere aus Kurzflotten zeigen.

Es wurde nun gefunden, dass die Farbstoffmischung der Farbstoffe der Formeln (1) und (2) den genannten Anforderungen genügt.

Gegenstand der vorliegenden Erfindung ist somit eine Farbstoffmischung, die einen Farbstoff der Formel

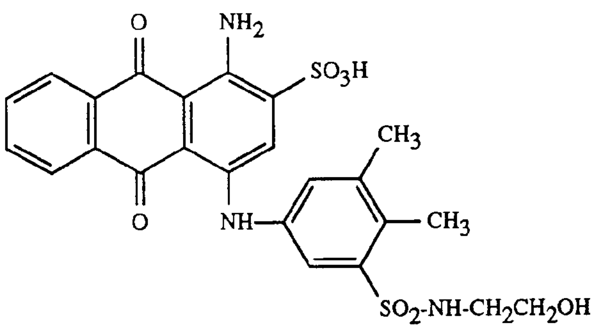

(1)

und einen Farbstoff der Formel

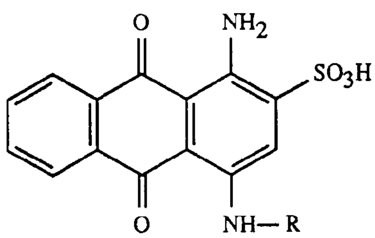

(2)

enthält,
worin R Cyclohexyl oder Phenyl ist, wobei jeder der für R genannten Reste substituiert sein kann durch $C_1$-$C_4$-Alkyl, Acetylamino, N-$C_1$-$C_4$-Alkylacetylamino, Benzoylamino, Ureido oder gegebenenfalls im Phenylring durch $C_1$-$C_4$-Alkyl substituiertes Phenylsulfonylamino oder Phenylsulfonyloxy.

Somit kann die erfindungsgemässe Farbstoffmischung einen Farbstoff der Formel (1) und einen der Farbstoffe der Formel (2) enthalten.

Als $C_1$-$C_4$-Alkyl kommt als Substituent des Restes R in Formel (2) Methyl, Aethyl, Propyl, Isopropyl, Butyl, Isobutyl, sek.-Butyl und tert.-Butyl in Betracht.

Als N-$C_1$-$C_4$-Alkylacetylamino kommt als Substituent des Restes R in Formel (2) z.B. N-Methyl-, N-Aethyl-, N-Propyl-, N-Isopropyl-, N-Butyl- und N-Isobutylacetylamino in Betracht.

Bevorzugt ist eine Farbstoffmischung die einen Farbstoff der Formel (1) und einen Farbstoff der Formel (2), worin
R Cyclohexyl, Phenyl, 2-Methylphenyl, 2,4,6-Trimethylphenyl, 3- oder 4- Acetylaminophenyl, 3-Acetylamino-4-methylphenyl, 4-(N-Methylacetylamino)phenyl, 3-Ureidophenyl, 4-Benzoylaminophenyl, 3-Phenylsulfonylaminophenyl, 2-Methyl-5-(4'-methylphenylsulfonylamino)phenyl oder 4-(4'-Methylphenylsulfonyloxy)phenyl ist, enthält.

Besonders bevorzugt ist eine Farbstoffmischung die einen Farbstoff der Formel (1) und einen Farbstoff der Formel

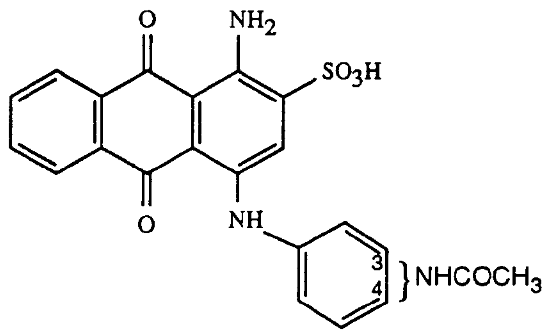

(3)

enthält, wobei die Acetylaminogruppe in 3- oder 4-Position an den Benzring gebunden ist.

Die besonders bevorzugte erfindungsgemässe Farbstoffmischung kann somit einen Farbstoff der Formel (1) und einen Farbstoff der Formel

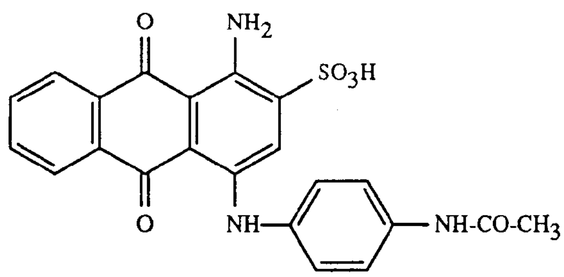

(4)

oder einen Farbstoff der Formel (1) und einen Farbstoff der Formel

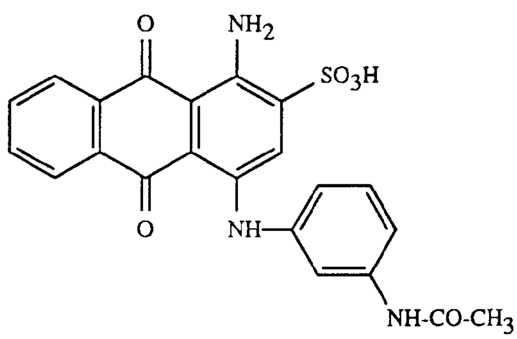

(5)

enthalten.

In den erfindungsgemässen Farbstoffmischungen ist das Verhältnis der Farbstoffe der Formeln (1) und (2) bzw. (1) und (3) von 95:5 bis 5:95, insbesondere von 80:20 bis 20:80, vorzugsweise 60:40 bis 40:60, bevorzugt. Das Verhältnis der Farbstoffe der Formeln (1) und (4) und (1) und (5) von 60:40 bis 40:60 ist besonders bevorzugt.

Die Anthrachinonfarbstoffe der Formeln (1), (2), (4) und (5) sind bekannt oder können in Analogie zu bekannten Farbstoffen hergestellt werden; so kann der Farbstoff der Formel (1) gemäss den Angaben aus der U.S.-Patentschrift 3,778,453 und der Farbstoff der Formel (4) analog den Angaben aus der deutschen Patentschrift 945,643 hergestellt werden. Der Farbstoff der Formel (5) kann in Analogie zu dem in der deutschen Patentschrift 538 310 angegebenen Verfahren hergestellt werden.

Die erfindungsgemässe Farbstoffmischung kann durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner kann die erfindungsgemässe Farbstoffmischung durch Mischsynthese hergestellt werden, z.B. durch Umsetzung von 1-Amino-4-bromanthrachinon-2-sulfonsäure mit 4,5-Dimethyl-3-β-hydroxyäthylaminosulfonylanilin und einer Verbindung der Formel $NH_2$-R, worin R die unter Formel (2) angegebenen Bedeutungen hat. Als Beispiele für Verbindungen der Formel $NH_2$-R seien 3- oder 4-Acetylaminoanilin genannt. Die Umsetzung erfolgt z.B. in Gegenwart von Wasser, Alkohol, wie Methanol, einer Base, wie Natriumhydrogencarbonat, und einem Katalysator, wie z.B. einem Kupfersalz. Als Beispiele seien Kupferhalogenide wie CuCl genannt.

Gegenstand der Erfindung ist ferner ein Verfahren zum Färben und Bedrucken von natürlichen oder synthetischen Polyamidmaterialien mit einer Farbstoffmischung, die die Farbstoffe der Formeln (1) und (2) enthält. Als synthetische Polyamidmaterialien kommen z.B. Polyamid-6- oder Polyamid-6,6-Materialien (Nylon, Perlon) in Betracht und als natürliche Polyamidmaterialien z.B. Wolle. Zum Färben und Bedrucken werden dabei die üblichen Färbe- bzw. Druckverfahren angewendet.

Besonders geeignet ist die erfindungsgemässe Farbstoffmischung zum Färben aus Kurzflotten wie z.B. bei Kontinuefärbeverfahren oder diskontinuierlichen und kontinuierlichen Schaumfärbeverfahren.

Die erfindungsgemässen Farbstoffmischung zeichnet sich durch allgemein gute Eigenschaften wie z.B. gute Löslichkeit, Kaltlösungsbeständigkeit, gutes Aufziehverhalten und insbesondere durch gute Kombinierbarkeit mit anderen Farbstoffen aus.

In der erfindungsgemässen Farbstoffmischung liegen die Farbstoffe der Formeln (1) und (2) entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffmischung enthält in der Regel weitere Zusätze wie z.B. Kochsalz, Dispergatoren oder Dextrin.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- oder öl-abweisende Mittel sowie wasserenthärtende Mittel und natürliche oder synthetische Verdicker wie z.B. Alginate und Celluloseäther, enthalten.

Die Farbstoffmischung mit den Farbstoffen der Formeln (1) und (2) eignet sich besonders zum Färben und Bedrucken in Kombination mit anderen Farbstoffen und insbesondere zum Färben und Bedrucken nach dem Trichromie-Prinzip. Unter Trichromie ist dabei die additive Farbmischung von passend gewählten gelb-, rot- und blaufärbenden Farbstoffen in den zur Erzielung der gewünschten Nuance notwendigen Mengen zu verstehen.

Gegenstand der Erfindung ist ferner ein Verfahren zum Trichromie-Färben oder -Bedrucken mit einer Farbstoffmischung, die die Farbstoffe der Formeln (1) und (2) enthält, in Kombination mit mindestens einem rotfärbenden Farbstoff und mindestens einem gelb- oder orangefärbenden Farbstoff, wobei für die erfindungsgemässe Farbstoffmischung der Farbstoffe der Formeln (1) und (2) die zuvor angegebenen Bevorzugungen gelten.

Bevorzugt verwendet man in dem erfindungsgemässen Verfahren zum Trichromie-Färben oder -Bedrucken eine Farbstoffmischung der Farbstoffe der Formeln (1) und (2) in Kombination mit mindestens einem rotfärbenden Farbstoff der Formeln (6), (7) und (8):

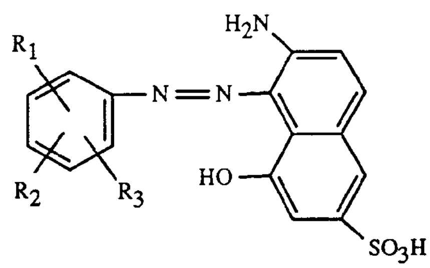

(6),

worin $R_1$ gegebenenfalls substituiertes $C_1$-$C_8$-Alkyl, Halogen, gegebenenfalls im Phenylring durch $C_1$-$C_4$-Alkyl substituiertes Phenylsulfonyl oder Phenoxysulfonyl, Cyclohexyloxycarbonylamino, $C_2$-$C_4$-Alkanoylamino, gegebenenfalls im Phenylring durch Halogen substituiertes Benzoylamino, 1-Azacycloheptan-N-sulfonyl oder

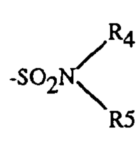

ist, wobei $R_4$ $C_1$-$C_8$-Alkyl oder gegebenenfalls durch $C_1$-$C_4$-Alkyl substituiertes Phenyl oder Cyclohexyl und $R_5$ Wasserstoff oder $C_1$-$C_8$-Alkyl ist, $R_2$ Wasserstoff, Halogen, $C_1$-$C_8$-Alkyl oder $C_2$-$C_4$-Alkanoylamino und $R_3$ Was-

serstoff oder Halogen ist,

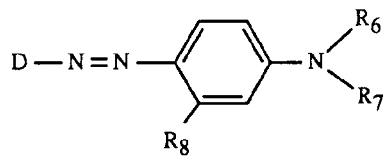

(7),

worin D gegebenenfalls substituiertes Phenyl, Thiophenyl oder Benzthiazolyl, $R_6$ $C_1$-$C_8$-Alkyl, $R_7$ gegebenenfalls substituiertes $C_1$-$C_8$-Alkyl und $R_8$ Wasserstoff oder $C_1$-$C_4$-Alkyl ist, und

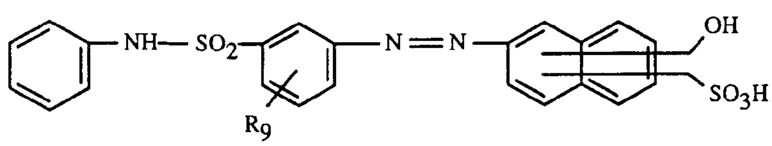

(8),

worin $R_9$ $C_1$-$C_4$-Alkyl ist, und in Kombination mit mindestens einem gelb- oder orangefärbenden Farbstoff der Formeln (9), (10), (11), (12) und (13):

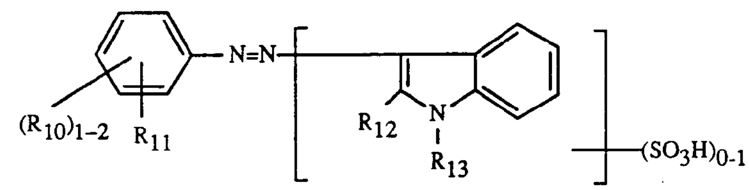

(9),

worin $R_{10}$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $R_{11}$ Wasserstoff, Halogen, ein gegebenenfalls substituierter Alkyl-, Aryloxy- oder Aryloxysulfonylrest oder ein Rest der Formel

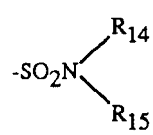 oder 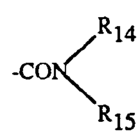 ,

$R_{12}$ ein gegebenenfalls substituierter Alkyl- oder Arylrest, $R_{13}$ Wasserstoff oder Alkyl und $R_{14}$ und $R_{15}$ unabhängig voneinander Wasserstoff oder ein gegebenenfalls substituierter Alkyl-, Cycloalkyl- oder Arylrest ist, wobei der Farbstoff der Formel (9) bevorzugt nur einen Rest $R_{10}$ enthält,

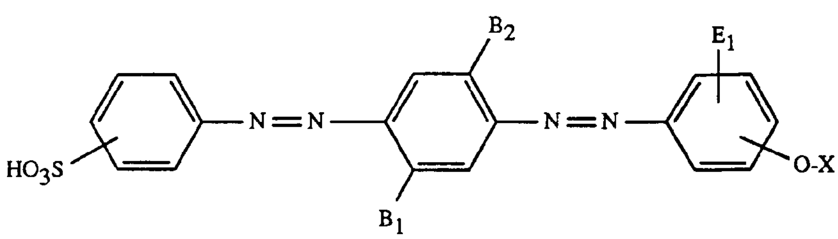

(10),

worin $B_1$, $B_2$ und $E_1$ Wasserstoff, $C_{1-4}$-Alkyl, $C_{1-4}$-Alkoxy oder $C_{2-4}$-Hydroxyalkoxy und X geradkettiges oder verzweigtes $C_{1-4}$-Alkyl oder geradkettiges oder verzweigtes $C_{2-4}$-Hydroxylalkyl bedeuten,

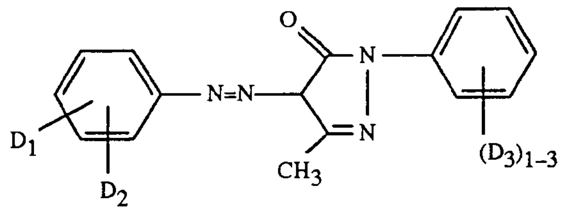

(11),

worin $D_1$ Sulfo ist oder die für $R_{10}$ in Formel (9) angegebene Bedeutung, und $D_2$ die für $R_{11}$ in Formel (9) angegebene Bedeutung hat und $(D_3)_{1-3}$ für 1 bis 3 Substituenten $D_3$ steht und $D_3$ Wasserstoff, Halogen, $C_{1-4}$-Alkyl, $C_{1-4}$-Alkoxy oder Sulfo ist,

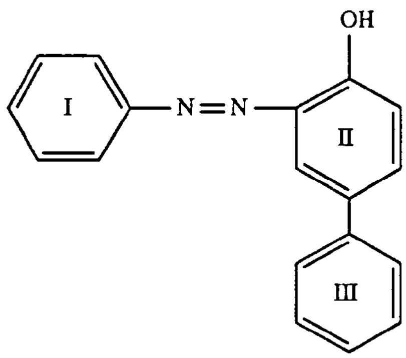

(12),

worin die Benzringe I, II und III substituiert sein können, und

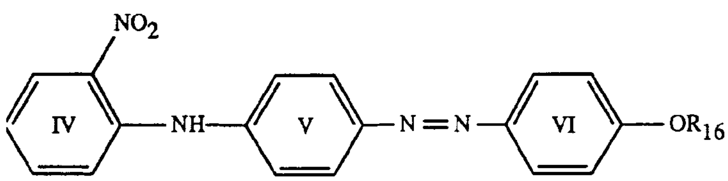

(13),

worin die Benzringe IV, V und VI substituiert sein können und $R_{16}$ Wasserstoff oder Arylsulfonyl ist, wobei für die erfindungsgemässe Farbstoffmischung der Farbstoffe der Formeln (1) und (2) die zuvor angegebenen Bevorzugungen gelten.

Als $C_1$-$C_8$-Alkyl kommen für $R_1$, $R_2$, $R_4$ und $R_5$ in der Formel (6) und für $R_6$ und $R_7$ in Formel (7) unabhängig voneinander z. B. Methyl, Äthyl, Propyl, Isopropyl, Butyl, sek.-Butyl, tert.-Butyl, Isobutyl, Pentyl, Hexyl, Heptyl und Octyl in Betracht. Vorzugsweise sind $R_1$, $R_2$, $R_4$, $R_5$, $R_6$ und $R_7$ $C_1$-$C_4$-Alkyl.

Der Rest $R_1$ in Formel (6) als $C_1$-$C_8$-Alkyl kann substituiert sein z.B. durch Halogen, wie z.B. Chlor oder Brom und insbesondere Fluor. Als Beispiel sei der Trifluormethylrest genannt.

Der Rest $R_7$ in Formel (7) als $C_1$-$C_8$-Alkyl kann substituiert sein z.B. durch Sulfo, Sulfato oder Phenyl. Als Beispiele seien Benzyl, β-Sulfoäthyl, γ-Sulfopropyl und β-Sulfatoäthyl genannt.

Als Halogen kommen für $R_1$, $R_2$ und $R_3$ in Formel (6) unabhängig voneinander z.B. Fluor, Brom oder insbesondere Chlor in Betracht.

Der Rest $R_1$ in Formel (6) als Benzoylamino kann im Phenylring durch Halogen, wie z.B. Fluor, Brom oder insbesondere Chlor, substituiert sein.

Der Rest $R_4$ als Phenyl oder Cyclohexyl sowie der Rest $R_1$ als Phenylsulfonyl oder Phenoxysulfonyl kann durch $C_1$-$C_4$-Alkyl, wie z. B. Methyl, Äthyl, Propyl, Isopropyl, Butyl, sek.-Butyl, tert.-Butyl oder Isobutyl, insbesondere Methyl, substituiert sein.

Als $C_1$-$C_4$-Alkyl kommen für $R_6$ in Formel (7) und für $R_9$ in Formel (8) unabhängig voneinander z. B. Methyl, Äthyl, Propyl, Isopropyl, Butyl, sek.-Butyl, tert.-Butyl oder Isobutyl, insbesondere Methyl, in Betracht.

Als $C_2$-$C_4$-Alkanoylamino kommen für $R_1$ und $R_2$ in Formel (6) unabhängig voneinander z.B. Acetylamino, Propionylamino oder Butyrylamino in Betracht.

Der Rest D in Formel (7) kann z.B. durch Halogen, wie Fluor, Chlor oder Brom, $C_1$-$C_4$-Alkyl, wie Methyl,

Äthyl, Propyl, Isopropyl, Butyl, sek.-Butyl, tert.-Butyl oder Isobutyl, $C_1$-$C_4$-Alkoxy, wie z.B. Methoxy, Äthoxy, Propoxy oder Butoxy, $C_1$-$C_4$-Alkoxycarbonyl, wie z.B. Methoxycarbonyl oder Aethoxycarbonyl, Sulfo oder gegebenenfalls im Alkylteil durch Sulfo substituiertes $C_1$-$C_4$-Alkylaminosulfonyl, wie z.B. Methylaminosulfonyl, Aethylaminosulfonyl oder β-Sulfoäthylaminosulfonyl, substituiert sein.

Bedeuten $R_{10}$ im Farbstoff der Formel (9) sowie $D_1$ oder $D_3$ im Farbstoff der Formel (11) $C_{1-4}$-Alkyl, so handelt es sich um Methyl, Äthyl, n-Propyl, Isopropyl, n-Butyl, sek.-Butyl, Isobutyl oder tert.-Butyl.

Bedeuten $R_{10}$ im Farbstoff der Formel (9) sowie $D_1$ oder $D_3$ im Farbstoff der Formel (11) $C_{1-4}$-Alkoxy, so handelt es sich um Methoxy, Äthoxy, n-Propoxy, Isopropoxy, n-Butoxy, sek.-Butoxy, Isobutoxy oder tert.-Butoxy.

Bedeuten $R_{10}$ im Farbstoff der Formel (9) oder $D_1$ im Farbstoff der Formel (11) $C_{2-4}$-Alkanoylamino, so handelt es sich beispielsweise um Acetylamino, Propionylamino oder Butyrylamino.

Bedeutet $R_{10}$ im Farbstoff der Formel (9) oder $D_1$ im Farbstoff der Formel (11) einen gegebenenfalls substituierten Arylsulfonyl-, Aryloxy- oder Arylcarbonylrest, so bedeutet Aryl vorzugsweise einen Rest der Benzol- oder Naphthalinreihe, der weitersubstituiert sein kann, beispielsweise durch $C_{1-4}$-Alkylgruppen, wie Methyl und Äthyl, $C_{1-4}$-Alkoxygruppen, wie Methoxy und Äthoxy, Halogen, wie Fluor, Chlor und Brom, Alkanoylaminogruppen mit 1 bis 6 Kohlenstoffatomen, wie Acetylamino, und Hydroxy.

Bedeuten $R_{10}$ oder $R_{11}$ im Farbstoff der Formel (9) oder $D_1$, $D_2$ oder $D_3$ im Farbstoff der Formel (11) Halogen, so handelt es sich um Fluor, Chlor oder Brom.

Bedeuten $R_{11}$ im Farbstoff der Formel (9) oder $D_2$ im Farbstoff der Formel (11) einen gegebenenfalls substituierten Aryloxy- oder Aryloxysulfonylrest, so bedeutet Aryl einen Rest der Benzol- oder Naphthalinreihe, der weitersubstituiert sein kann, beispielsweise durch $C_{1-4}$-Alkylgruppen, wie Methyl und Äthyl, $C_{1-4}$-Alkoxygruppen, wie Methoxy und Äthoxy, Halogen, wie Fluor, Chlor und Brom, Alkanoylaminogruppen mit 1 bis 6 Kohlenstoffatomen, wie Acetylamino, und Hydroxy.

Bedeuten $R_{11}$, $R_{12}$, $R_{14}$ oder $R_{15}$ im Farbstoff der Formel (9) oder $D_2$ im Farbstoff der Formel (11) einen gegebenenfalls substituierten Alkylrest, so handelt es sich unabhängig voneinander vorzugsweise um einen geradkettigen oder verzweigten $C_{1-12}$-Alkyl-, insbesondere $C_{1-4}$-Alkylrest, der weitersubstituiert sein kann, z.B. durch Halogen, wie Fluor, Chlor oder Brom, Hydroxy, Cyano, $C_{1-4}$-Alkoxy, wie Methoxy oder Äthoxy, und Alkanoylgruppen mit 1 bis 6 Kohlenstoffatomen, wie die Acetyl- oder Propionylgruppe, und die Benzoylgruppe. Der Alkylrest $R_{12}$ und $R_{14}$ kann auch durch Sulfo substituiert sein. Als Beispiele für $R_{11}$, $R_{12}$, $R_{14}$ und $R_{15}$ als Alkylrest seien genannt: Methyl, Äthyl, Propyl, Isopropyl, Butyl, sek.-Butyl, tert.-Butyl, Isobutyl und Trifluormethyl.

Bedeuten $R_{12}$, $R_{14}$ und $R_{15}$ im Farbstoff der Formel (9) einen gegebenenfalls substituierten Arylrest, so gehört dieser unabhängig voneinander vorzugsweise der Benzol- oder Naphthalinreihe an, er kann weitersubstituiert sein, beispielsweise durch $C_{1-4}$-Alkylgruppen, wie Methyl, $C_{1-4}$-Alkoxygruppen, wie Methoxy und Äthoxy, Halogen, wie Fluor, Chlor oder Brom, Trifluormethyl, Alkanoylaminogruppen mit 1 bis 6 Kohlenstoffatomen, wie Acetylamino, Hydroxy und Carboxy. Der Arylrest $R_3$ kann auch durch Sulfo substituiert sein. Insbesondere ist $R_{12}$, $R_{14}$ und $R_{15}$ als Arylrest ein Phenylrest, der durch Methyl, Trifluormethyl und Chlor substituiert sein kann.

Bedeutet $R_{13}$ im Farbstoff der Formel (9) einen Alkylrest, so kommt vorzugsweise ein geradkettiger oder verzweigter $C_{1-12}$-Alkyl- und insbesondere $C_{1-8}$-Alkylrest in Betracht. Als Beispiele seien genannt: Methyl, Äthyl, Propyl, Isopropyl, Butyl, sek.-Butyl, tert.-Butyl, Isobutyl, Pentyl-(1), Pentyl-(3), Heptyl-(1), Heptyl-(3) und Octyl-(1).

Bedeuten $R_{14}$ und $R_{15}$ einen gegebenenfalls substituierten Cycloalkylrest, so kommen unabhängig voneinander vorzugsweise Cycloalkylgruppen mit 5- bis 7-gliedrigen Ringen in Betracht, die weitersubstituiert sein können, z.B. durch $C_{1-4}$-Alkyl, wie Methyl. Insbesondere kommt die Cyclohexylgruppe in Betracht.

Als Alkylreste kommen für $B_1$, $B_2$, $E_1$ und X in Formel (10) unabhängig voneinander geradkettige oder verzweigte Alkylreste in Betracht, wie beispielsweise Methyl, Äthyl, Propyl, Isopropyl, Butyl, sek.-Butyl, Isobutyl und tert.-Butyl.

Als Alkoxyreste kommen für $B_1$, $B_2$ und $E_1$ in Formel (10) beispielsweise der Methoxy-, Äthoxy-, Propoxy-, Isopropoxy-, Butoxy-, sek.-Butoxy-, Isobutoxy- oder tert.-Butoxyrest in Betracht.

Als Hydroxyalkoxyrest kommen für $B_1$, $B_2$ und $E_1$ in Formel (10) ein geradkettiger oder verzweigter Hydroxyalkoxyrest in Betracht, wie beispielsweise der β-Hydroxyäthoxy-, β-Hydroxypropoxy-, β-Hydroxybutoxy- oder der α-Äthyl-β-hydroxyäthoxyrest.

Als Hydroxyalkylrest kommt für X in Formel (10) ein geradkettiger oder verzweigter Hydroxyalkylrest in Betracht, wie z.B. der β-Hydroxyäthyl-, β-Hydroxypropyl-, β-Hydroxybutyl- oder der α-Äthyl-β-hydroxyäthylrest.

Als Substituenten der Benzringe I, II, III, IV, V und VI kommen in den Farbstoffen der Formeln (12) und (13) z.B. in Betracht Alkylgruppen mit 1 bis 8, vorzugsweise 1 bis 4 Kohlenstoffatomen, wie z.B. Methyl, Äthyl,

Propyl, Isopropyl, Butyl, Isobutyl, sek.-Butyl, tert.-Butyl, Hexyl, Octyl, wobei die Alkylgruppen durch Sulfo oder Sulfato substituiert sein können, Alkoxygruppen mit 1 bis 8 Kohlenstoffatomen, insbesondere 1 bis 4 Kohlenstoffatomen, wie z.B. Methoxy, Äthoxy, Propoxy, Isopropoxy, Butoxy, wobei die Alkoxygruppe im Alkylrest durch Sulfo oder Sulfato substituiert sein kann, Acylaminogruppen wie Alkanoylaminogruppen mit 2 bis 8 Kohlenstoffatomen und Alkoxycarbonylaminogruppen mit 2 bis 8 Kohlenstoffatomen, wie z.B. Acetylamino, Propionylamino, Methoxycarbonylamino, Äthoxycarbonylamino, Alkanoylgruppen mit 2 bis 8, vorzugsweise 2 bis 4 Kohlenstoffatomen, wie z.B. Acetyl, Propionyl, Butyryl oder Isobutyryl, $C_5$-$C_7$-Cycloalkylcarbonyl, wie z.B. Cyclohexylcarbonyl, im Cycloalkylring durch $C_1$-$C_4$-Alkyl, wie z.B. Methyl, Äthyl, Propyl, Butyl, oder Halogen, wie z.B. Fluor, Chlor, Brom, Sulfo oder Sulfato, substituiertes $C_5$-$C_7$-Cycloalkylcarbonyl, Benzoyl, im Phenylring durch $C_1$-$C_4$-Alkyl, wie z.B. Methyl, Äthyl, Propyl, Butyl, oder Halogen, wie z.B. Fluor, Chlor, Brom, Sulfo oder Sulfato, substituiertes Benzoyl, gegebenenfalls durch $C_1$-$C_4$-Alkyl, Halogen, Sulfo oder Sulfato substituiertes Benzthiazol oder Benzoxazol, Benzoylamino, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, $C_5$-$C_7$-Cycloalkylaminosulfonyl, Nitro, Cyan, Trifluormethyl, Halogen, wie Fluor, Brom oder insbesondere Chlor, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, $C_1$-$C_8$-Alkylaminosulfonyl, $C_1$-$C_4$-Alkylsulfonylaminosulfonyl, gegebenenfalls im Phenylring durch $C_1$-$C_4$-Alkyl, Halogen, wie z.B. Fluor, Chlor, Brom, Sulfo oder Sulfato substituiertes Phenylsulfonyl, Carboxy, Sulfomethyl, Sulfo, Sulfato, Thiosulfato, sowie Phenyl, Naphthyl, Phenoxy, Phenoxysulfonyl, Phenylaminosulfonyl, wobei die angegebenen Phenyl- oder Naphthylreste durch die oben angegebenen Substituenten weitersubstituiert sein können.

Bedeutet $R_{16}$ in Formel (13) einen Arylsulfonylrest, so kommt insbesondere ein Phenylsulfonylrest in Betracht, der wie oben für die Benzringe I bis VI angegeben substituiert sein kann.

In dem erfindungsgemässen Verfahren zum Trichromie-Färben oder -Bedrucken verwendet man vorzugsweise mindestens einen rotfärbenden Farbstoff der Formeln (6), (7) und (8), wobei im Farbstoff der Formel (6) $R_1$ Trifluoromethyl, Chlor, Acetylamino, $-SO_2N(n-C_4H_9)_2$, Phenoxysulfonyl, Phenylsulfonyl, 1-Azacycloheptan-N-sulfonyl, Cyclohexyloxycarbonylamino, gegebenenfalls im Phenylring durch Chlor substituiertes Benzoylamino oder gegebenenfalls im Phenylring durch Methyl substituiertes Phenylaminosulfonyl, Cyclohexylaminosulfonyl, N-($C_1$-$C_2$-Alkyl)phenyl- oder N-($C_1$-$C_2$-Alkyl)cyclohexyl-aminosulfonyl, $R_2$ Wasserstoff, Methyl, Chlor oder Acetylamino und $R_3$ Wasserstoff oder Chlor ist, und im Farbstoff der Formel (7) D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_6$ Aethyl, $R_7$ Aethyl, β-Sulfatoäthyl, $-(CH_2)_{2-3}SO_3H$ oder Benzyl und $R_8$ Wasserstoff oder Methyl ist, und im Farbstoff der Formel (8) $R_9$ Methyl ist.

Insbesondere verwendet man mindestens einen rotfärbenden Farbstoff der Formeln

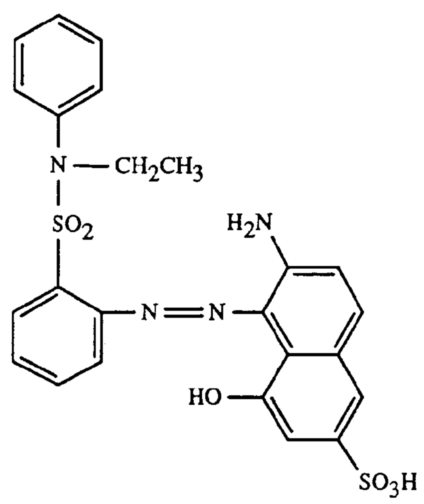

(14),

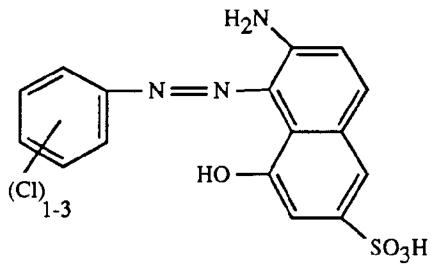

(15),

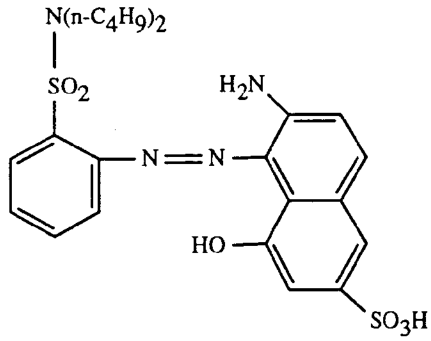

(16),

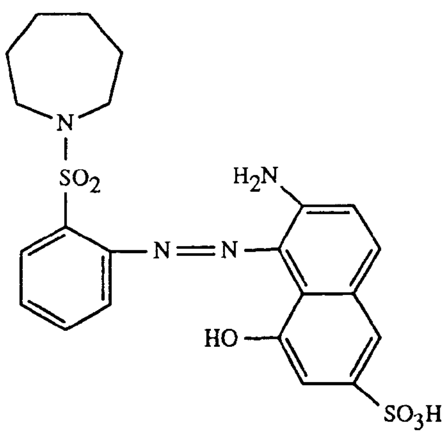

(17),

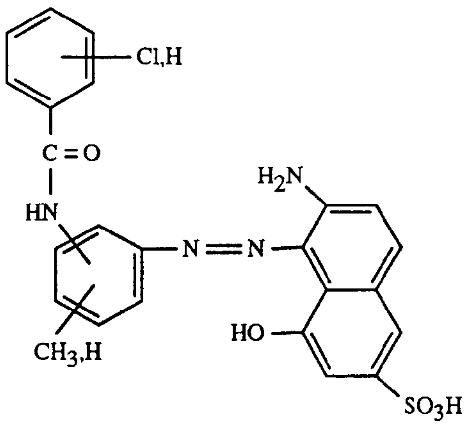

(18),

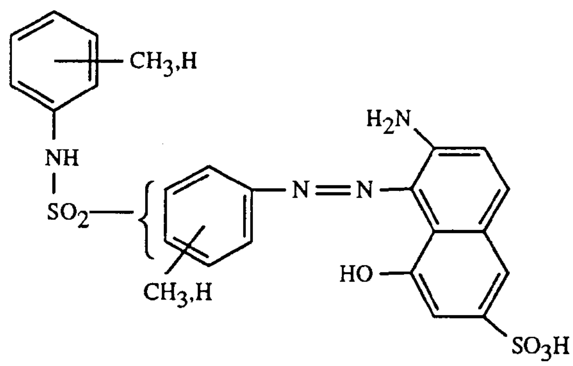

(19),

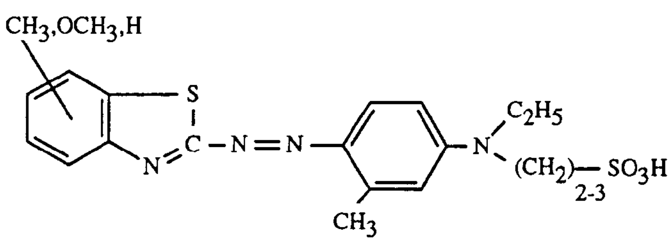

(20),

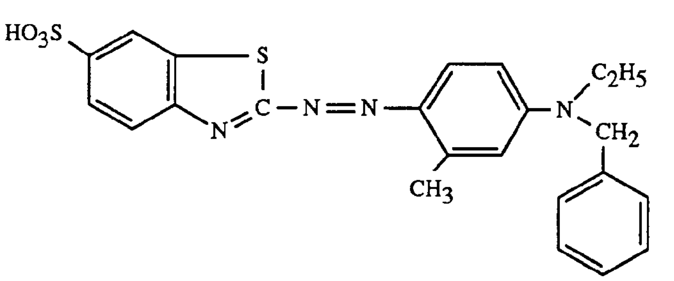

(21),

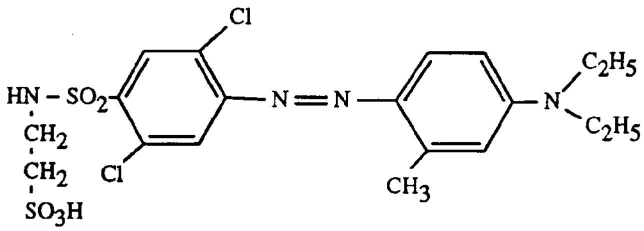

(22),

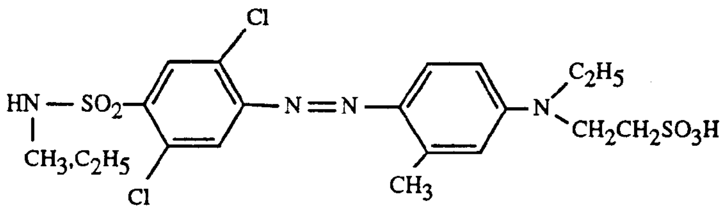

(23),

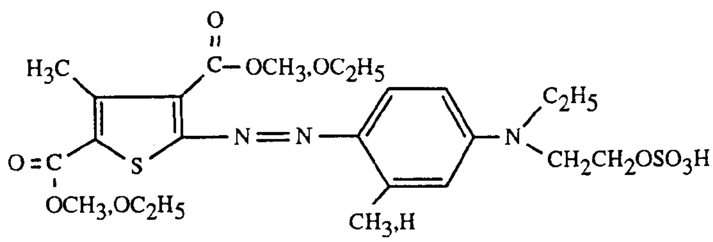

(24),

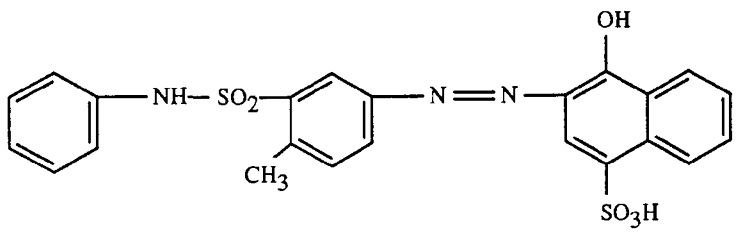

(25),

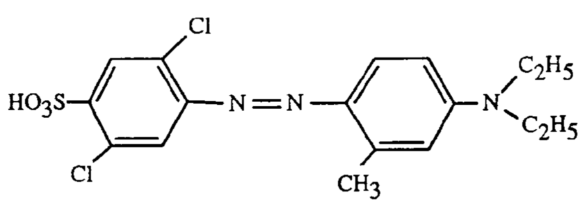

(26),

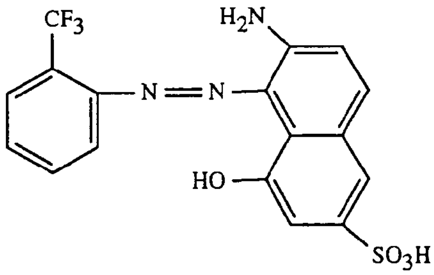

(27),

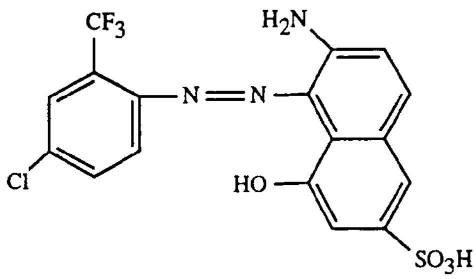

(28),

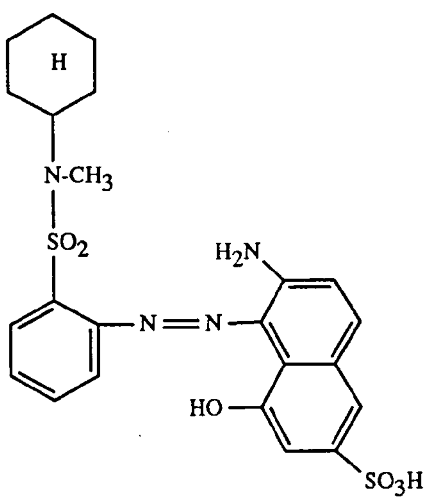

(29),

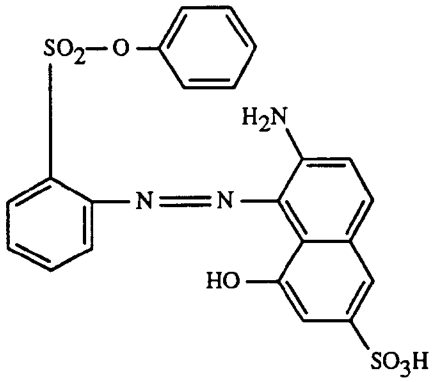

(30),

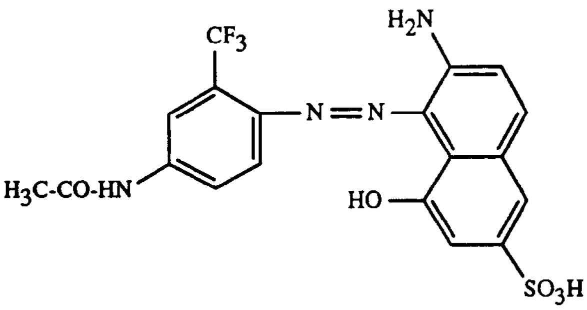

(31),

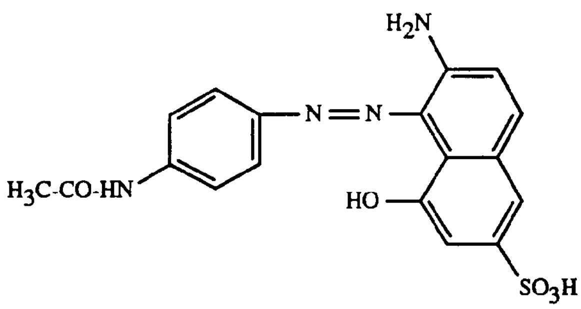

(32),

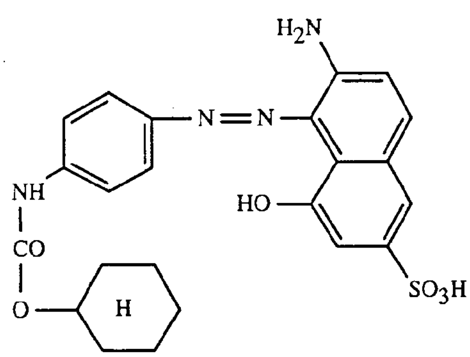

(33)

und

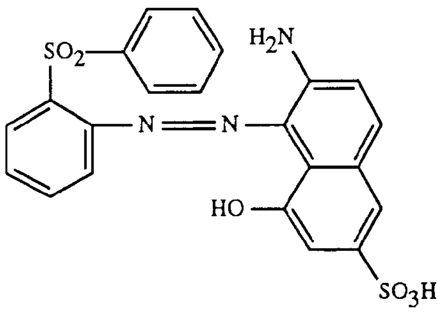

(34).

Als gelb- oder orangefärbende Farbstoffe verwendet man in dem erfindungsgemässen Verfahren vorzugsweise mindestens einen der Farbstoffe der Formeln

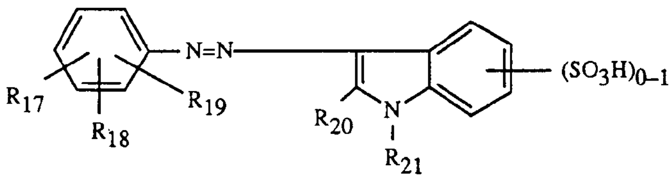

(35),

worin $R_{17}$ Wasserstoff, Methyl, Chlor, Methoxy, Äthoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $R_{18}$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-β-Sulfoäthylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Äthyl-N-phenylaminosulfonyl, $-CONH_2$ oder $-CON(CH_3)_2$, $R_{19}$ Wasserstoff oder Chlor, $R_{20}$ Methyl oder Phenyl und $R_{21}$ Wasserstoff, Methyl, Äthyl oder Octyl ist,

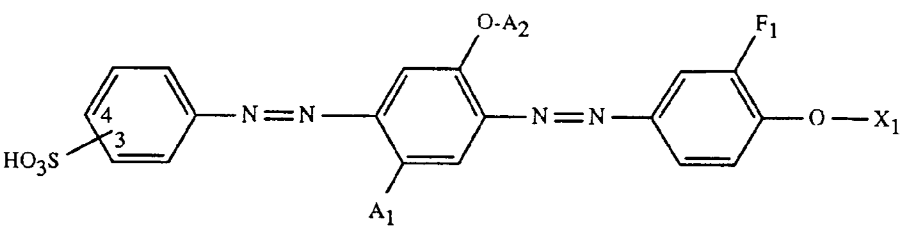

(36),

worin $A_1$ Wasserstoff oder Methyl, $F_1$ Wasserstoff oder Methyl und $A_2$ und $X_1$ unabhängig voneinander Wasserstoff, Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist,

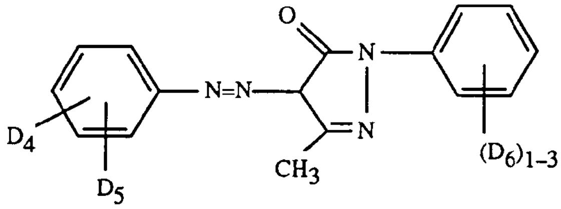

(37),

worin $D_4$ Chlor oder Phenylaminosulfonyl und $D_5$ Wasserstoff oder Sulfo ist und $(D_6)_{1-3}$ für 1 bis 3 Substituenten $D_6$ steht und $D_6$ Wasserstoff, Chlor oder Sulfo ist,

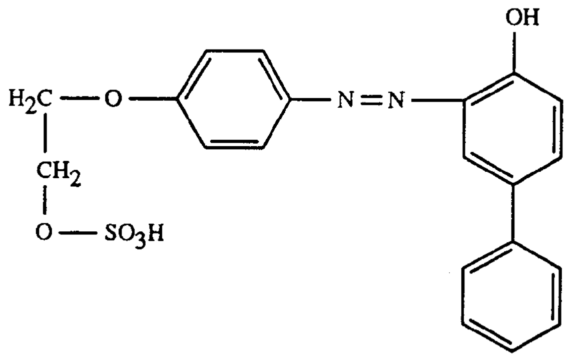

(38),

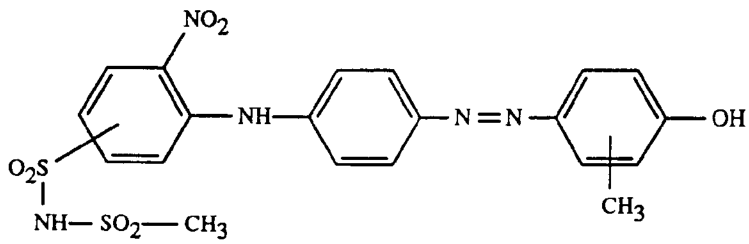

(39),

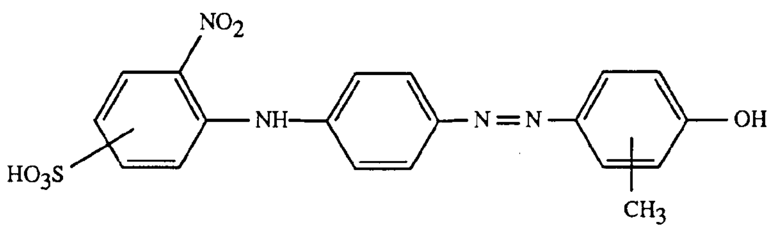

(40)

und

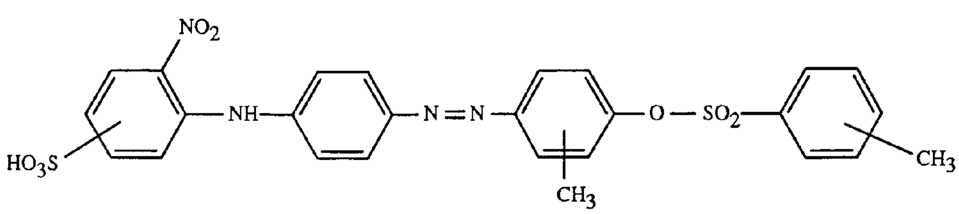

(41).

Als bevorzugte gelb- oder orangefärbende Farbstoffe der Formel (36) kommen z.B. die folgenden Farbstoffe in Betracht:

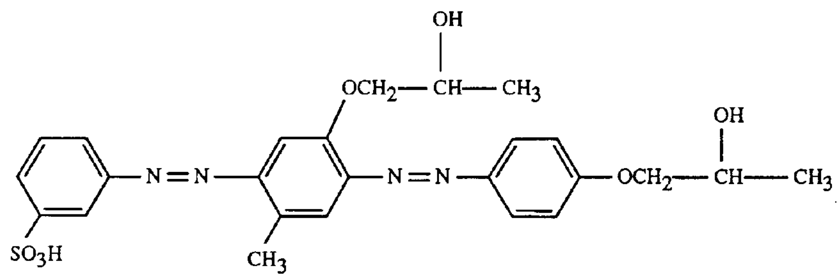

(36a)

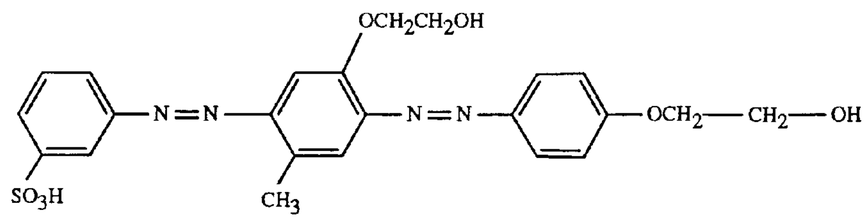

(36b)

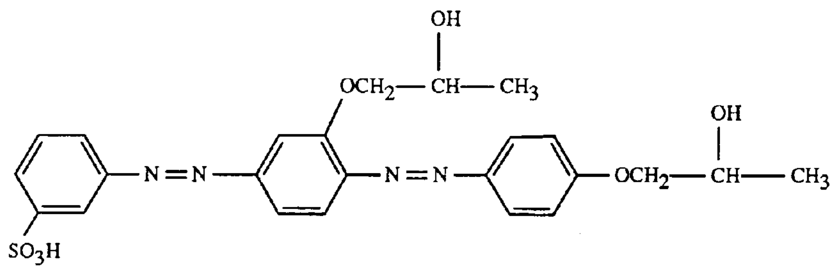

(36c)

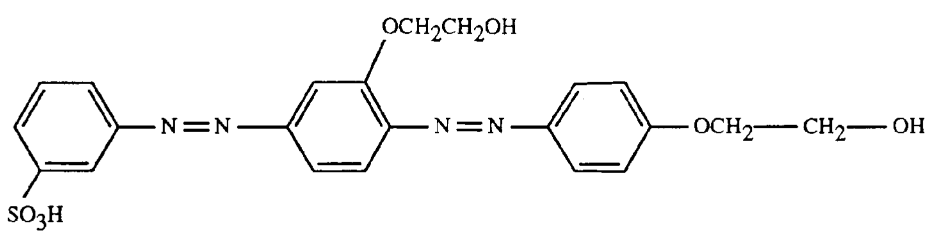

(36d)

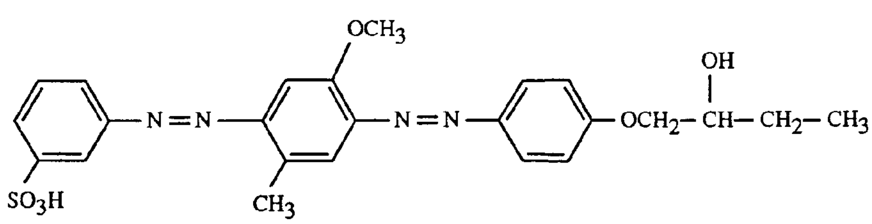

(36e)

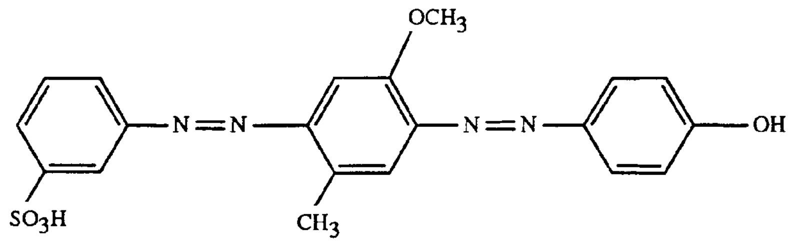
(36f)

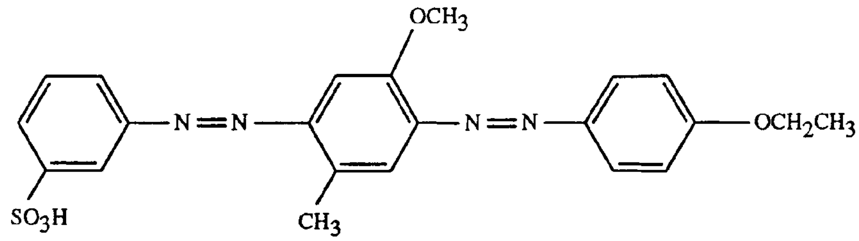
(36g)

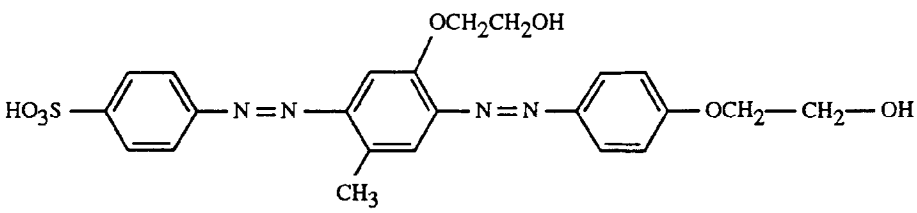
(36h)

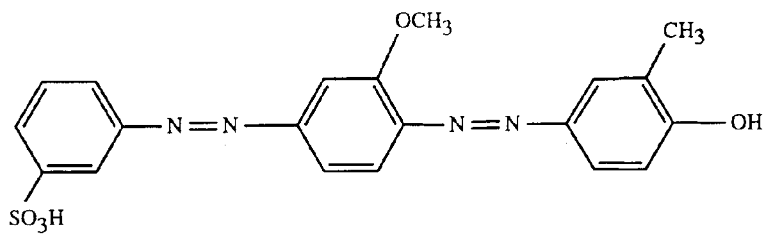
(36i)

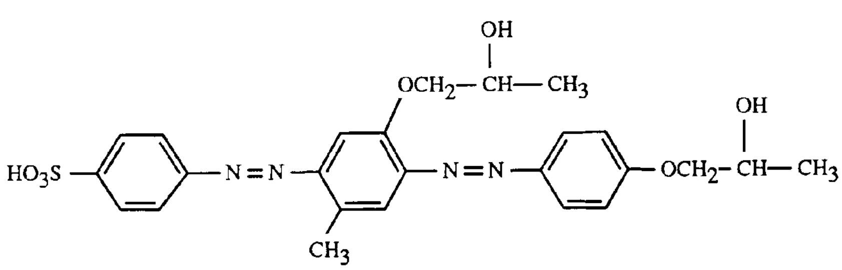
(36j)

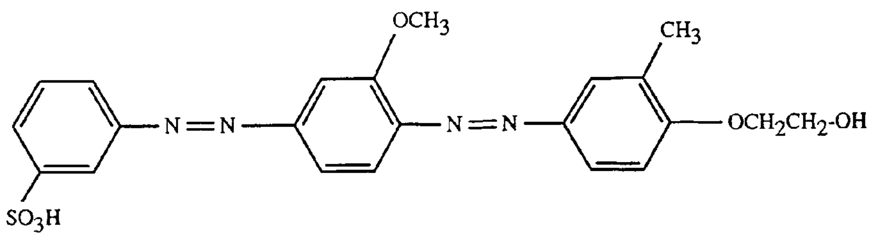

(36k)

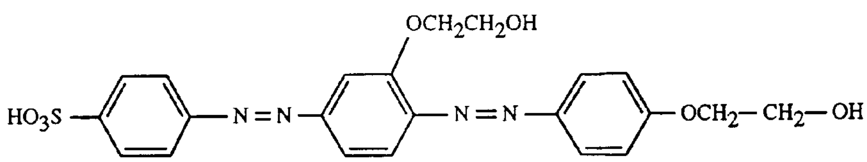

(36l)

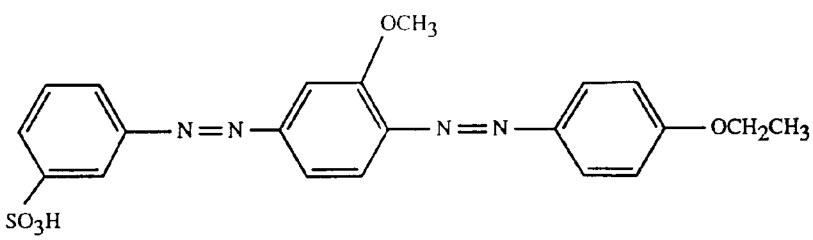

(36m)

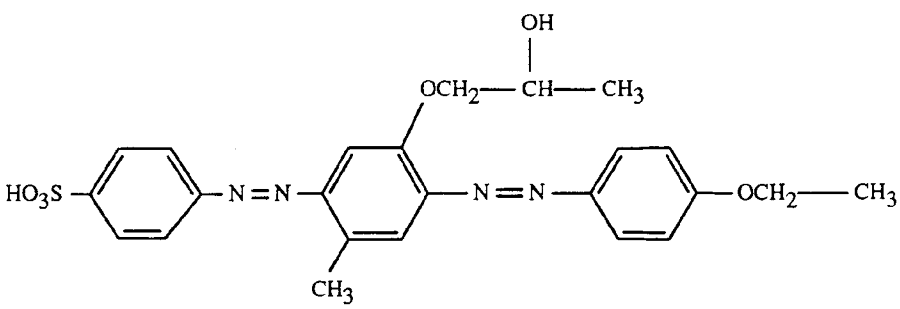

(36n)

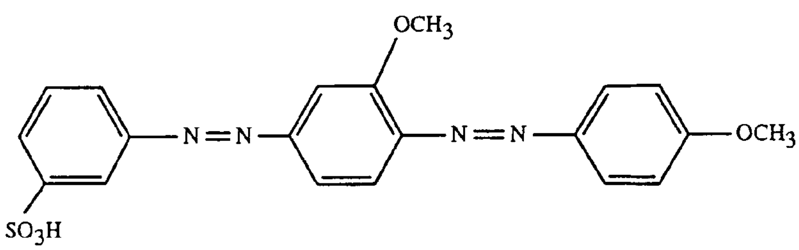

(36o)

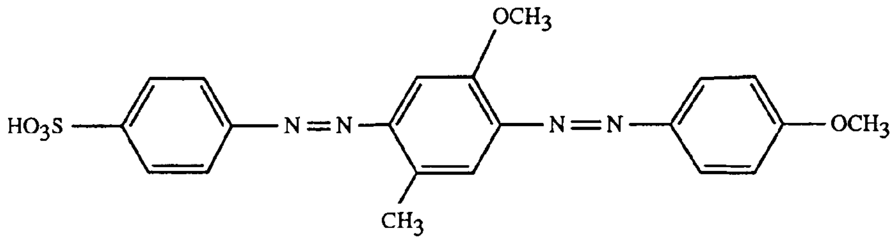

(36p)

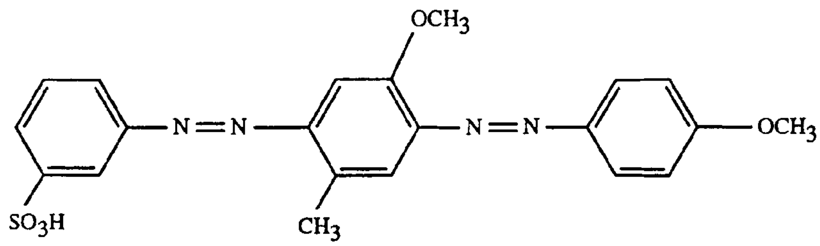

(36q)

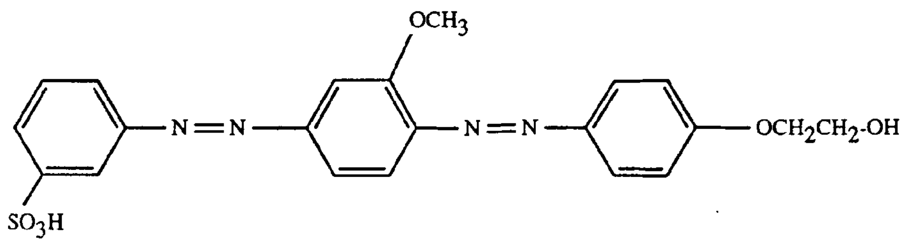

(36r)

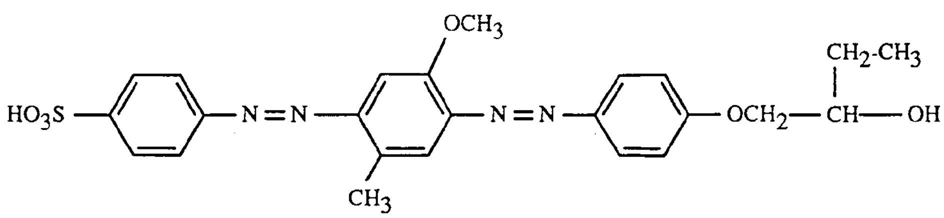

(36s)

oder

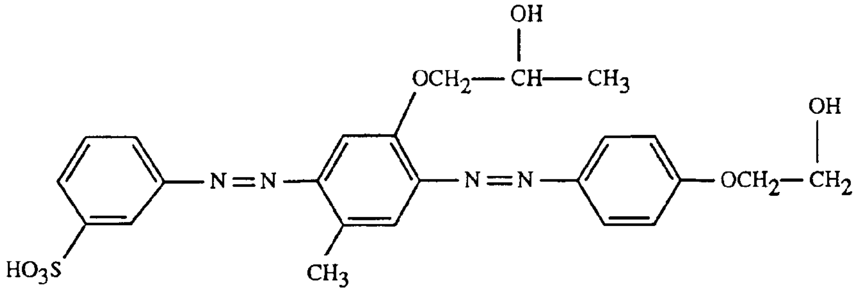

(36t).

Als bevorzugte gelb- oder orangefärbende Farbstoffe der Formel (37) kommen z.B. die folgenden Farbstoffe in Betracht:

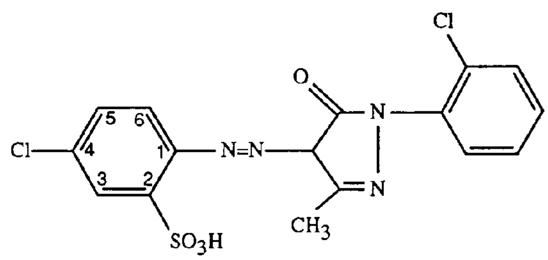

(37a),

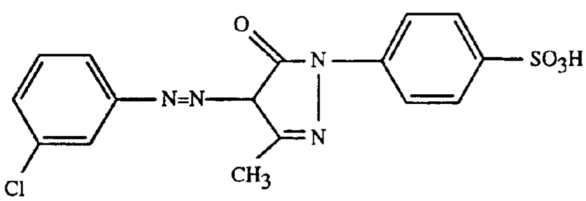

(37b),

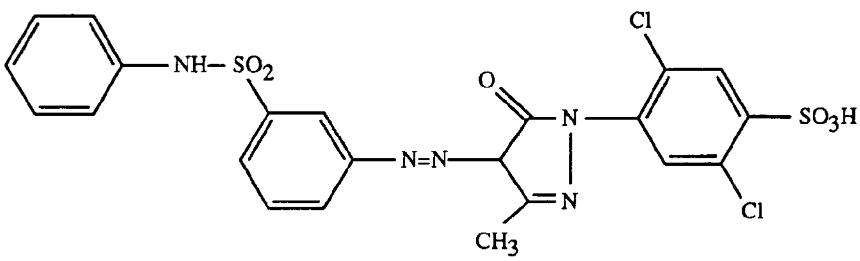

(37c)

oder

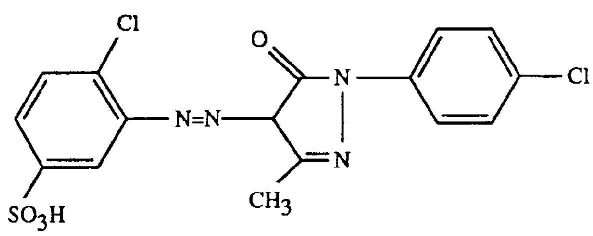

(37d) .

Weiterhin bevorzugt ist der gelbfärbende Farbstoff der Formel

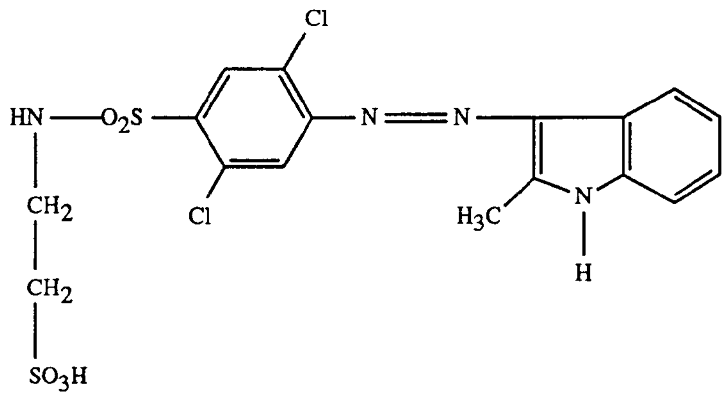

(35a).

Als besonders bevorzugte gelb- oder orangefärbende Farbstoffe kommen die Farbstoffe der Formeln

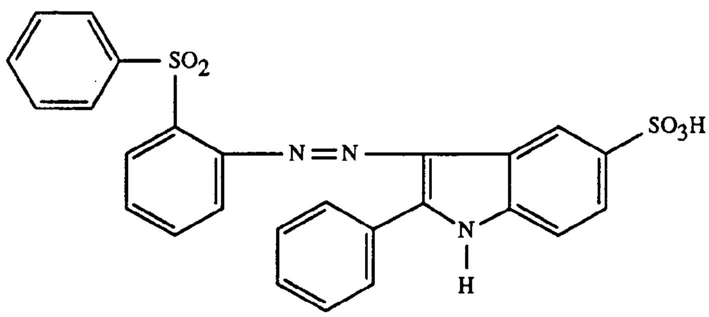

(42)

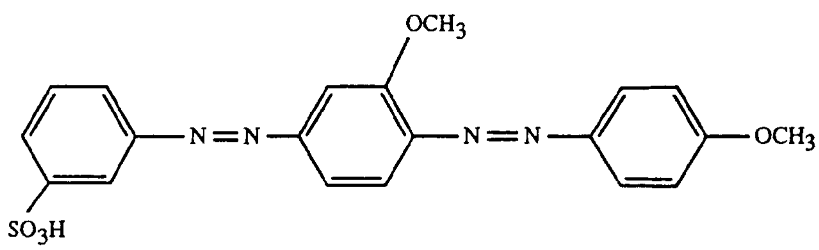

(36o)

und

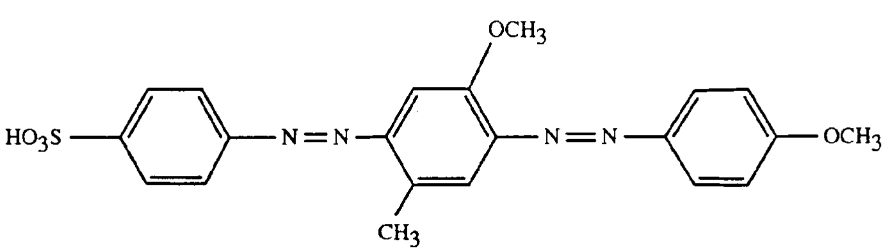

(36p)

in Betracht.

Ganz besonders bevorzugt verwendet man in dem erfindungsgemässen Verfahren zum Trichromie-Färben oder -Bedrucken eine Farbstoffmischung der Farbstoffe der Formeln (1) und (2) in Kombination mit mindestens einem rotfärbenden Farbstoff der Formeln (6), (7) und (8), wobei im Farbstoff der Formel (6) $R_1$ Trifluoromethyl, Chlor, Acetylamino, $-SO_2N(n\text{-}C_4H_9)_2$, Phenoxysulfonyl, Phenylsulfonyl, 1-Azacycloheptan-N-sulfonyl, Cyclohexyloxycarbonylamino, gegebenenfalls im Phenylring durch Chlor substituiertes Benzoylamino

oder gegebenenfalls im Phenylring durch Methyl substituiertes Phenylaminosulfonyl, Cyclohexylaminosulfonyl, N-($C_1$-$C_2$-Alkyl)phenyl- oder N-($C_1$-$C_2$-Alkyl)cyclohexylaminosulfonyl, $R_2$ Wasserstoff, Methyl, Chlor oder Acetylamino und $R_3$ Wasserstoff oder Chlor ist, und im Farbstoff der Formel (7), D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_6$ Aethyl, $R_7$ Aethyl, β-Sulfatoäthyl, $-(CH_2)_{2-3}SO_3H$ oder Benzyl und $R_8$ Wasserstoff oder Methyl ist, und im Farbstoff der Formel (8) $R_9$ Methyl ist, und in Kombination mit mindestens einem gelb- oder orangefärbenden Farbstoff der Formeln (35), (36), (37), (38), (39), (40) und (41), wobei für die Farbstoffmischung der Farbstoffe der Formeln (1) und (2) die zuvor angegebenen Bevorzugungen gelten.

Besonders wichtig ist die Kombination der Farbstoffmischung der Farbstoffe der Formeln (1) und (2) mit mindestens einem rotfärbenden Farbstoff der Formeln (14) bis (34) und mindestens einem gelb- oder orangefärbenden Farbstoff der Formeln (35a), (36a) bis (36t), (37a) bis (37d), (38), (39), (40), (41) und (42).

In einer ganz besonders wichtigen Ausführungsform des erfindungsgemässen Verfahrens zum Trichromie-Färben oder -Bedrucken verwendet man eine Farbstoffmischung der Farbstoffe der Formeln (1) und (2) zusammen mit dem rotfärbenden Farbstoff der Formel

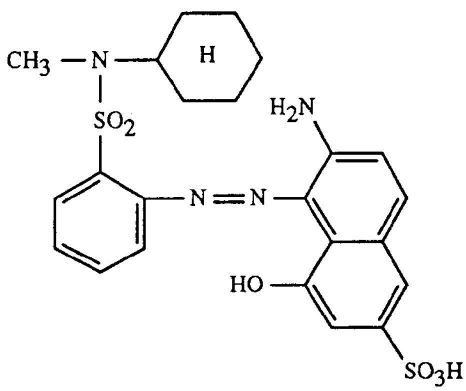

(29)

und dem gelbfärbenden Farbstoff der Formel

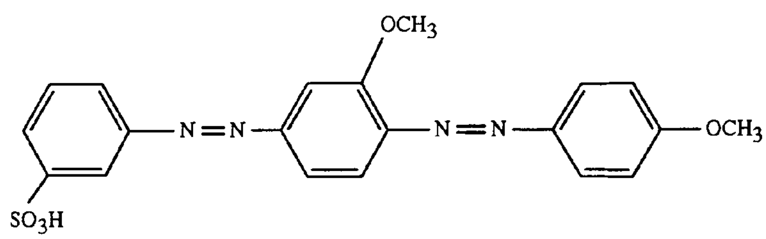

(36o)

oder dem orangefärbenden Farbstoff der Formel

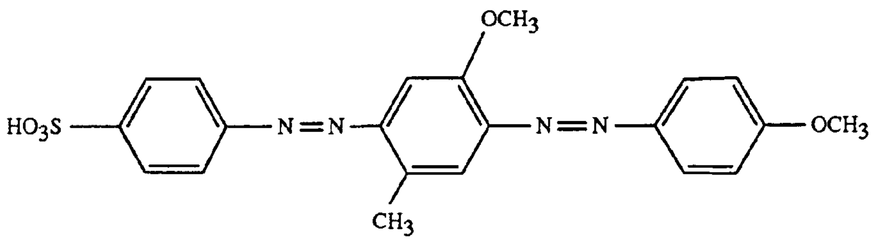

(36p),

wobei für die Farbstoffmischung der Farbstoffe der Formeln (1) und (2) die zuvor angegebenen Bevorzugungen gelten.

Die in dem erfindungsgemässen Verfahren verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten Farbstoffe enthalten in der Regel weitere Zusätze wie z.B. Kochsalz oder Dextrin.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren ist besonders zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, guten Nuancenkonstanz auch in verschiedenen Konzentrationen, gute Echtheiten sowie insbesondere durch sehr gute Kombinierbarkeit aus.

Das erfindungsgemässe Verfahren eignet sich zum Farben oder Bedrucken sowohl von naturlichen Polyamidmaterialien wie z.B. Wolle, als auch insbesondere von synthetischen Polyamidmaterialien wie z.B. Polyamid 6 oder Polyamid 6.6 und es ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1:

Zur Herstellung der Farbstoffmischung, die einen Farbstoff der Formel

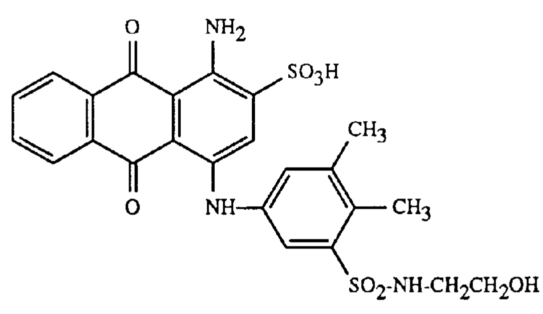

(101)

und einen der Farbstoffe der Formeln

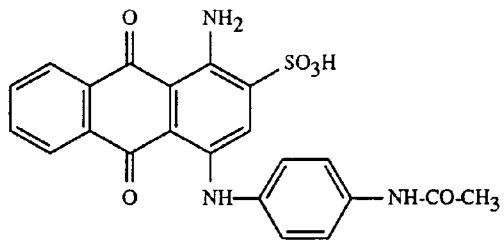

(102),

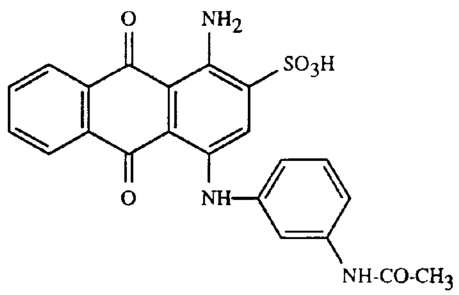

(103),

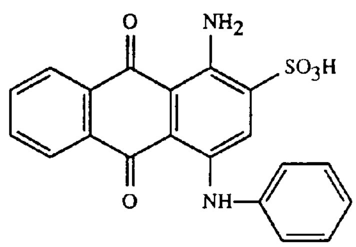

(104),

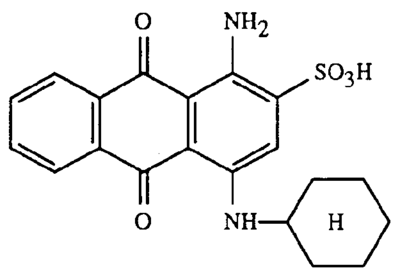

(105),

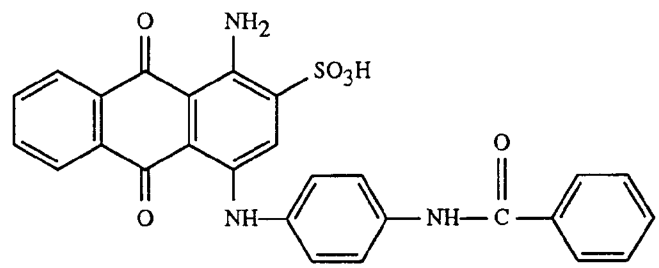

(106),

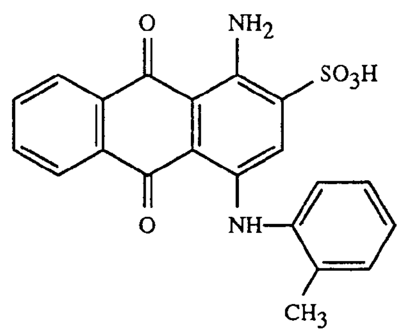

(107),

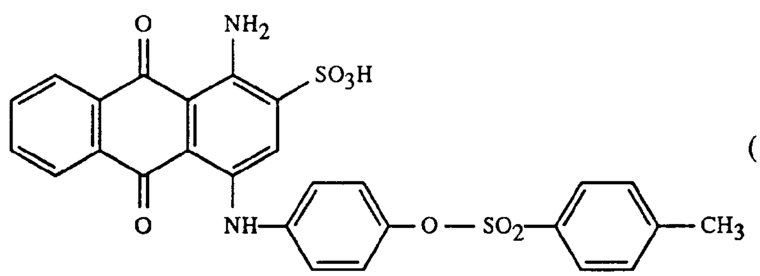

(108)

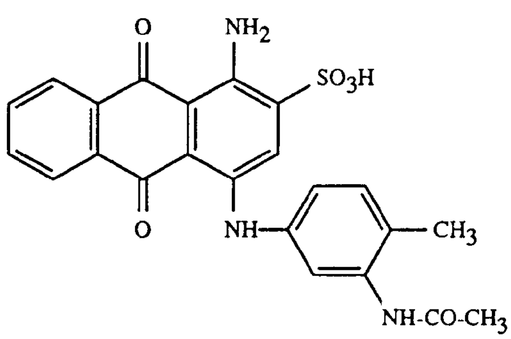

(109),

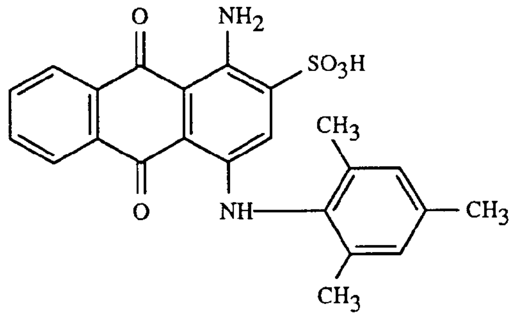

(110),

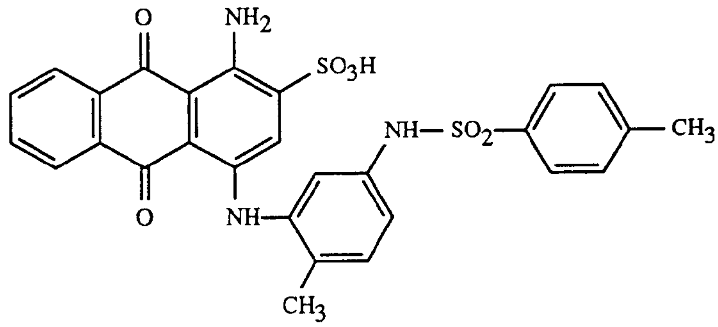

(111),

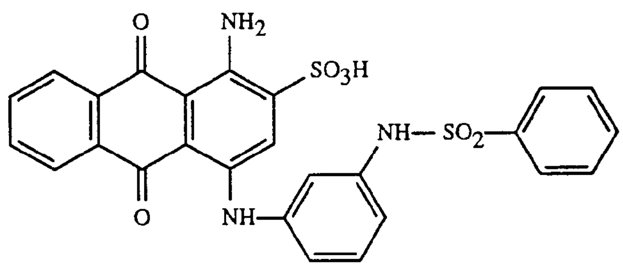

(112),

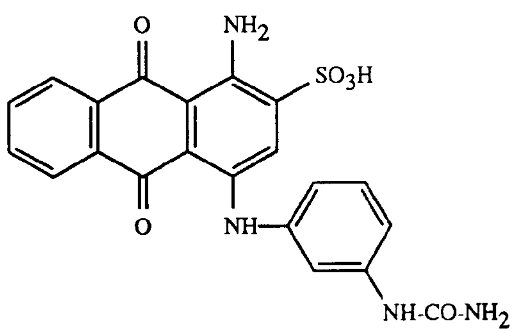

(113)

und

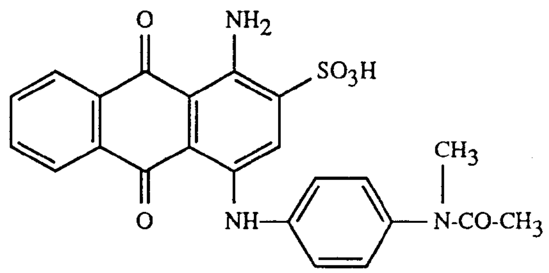

(114)

enthält, werden in einem Mixer

a) 30,2 Teile des Farbstoffs der Formel (101) und 69,8 Teile des Farbstoffs der Formel (103) homogen gemischt und ergeben 100 Teile der Mischung, die im folgenden als Farbstoffmischung A bezeichnet wird;
b) 56,6 Teile des Farbstoffs der Formel (101) und 43,4 Teile des Farbstoffs der Formel (102) homogen gemischt und ergeben 100 Teile der Mischung, die im folgenden als Farbstoffmischung B bezeichnet wird;
c) 79,6 Teile des Farbstoffs der Formel (101) und 20,4 Teile des Farbstoffs der Formel (102) homogen gemischt und ergeben 100 Teile der Mischung, die im folgenden als Farbstoffmischung C bezeichnet wird;
d) 26,6 Teile des Farbstoffs der Formel (101) und 73,4 Teile des Farbstoffs der Formel (103) homogen gemischt und ergeben 100 Teile der Mischung, die im folgenden als Farbstoffmischung D bezeichnet wird;
e) 52 Teile des Farbstoffs der Formel (101) und 48 Teile des Farbstoffs der Formel (103) homogen gemischt und ergeben 100 Teile der Mischung, die im folgenden als Farbstoffmischung E bezeichnet wird;
f) 76,5 Teile des Farbstoffs der Formel (101) und 23,5 Teile des Farbstoffs der Formel (103) homogen gemischt und ergeben 100 Teile der Mischung, die im folgenden als Farbstoffmischung F bezeichnet wird;
g) 79,6 Teile des Farbstoffs der Formel (101) und 20,4 Teile des Farbstoffs der Formel (104) homogen gemischt und ergeben 100 Teile der Mischung, die im folgenden als Farbstoffmischung G bezeichnet wird;
h) 26,6 Teile des Farbstoffs der Formel (101) und 73,4 Teile des Farbstoffs der Formel (105) homogen gemischt und ergeben 100 Teile der Mischung, die im folgenden als Farbstoffmischung H bezeichnet wird;
i) 52 Teile des Farbstoffs der Formel (101) und 48 Teile des Farbstoffs der Formel (106) homogen gemischt und ergeben 100 Teile der Mischung, die im folgenden als Farbstoffmischung I bezeichnet wird;
k) 76,5 Teile des Farbstoffs der Formel (101) und 23,5 Teile des Farbstoffs der Formel (107) homogen gemischt und ergeben 100 Teile der Mischung, die im folgenden als Farbstoffmischung K bezeichnet wird;
l) 79,6 Teile des Farbstoffs der Formel (101) und 20,4 Teile des Farbstoffs der Formel (108) homogen gemischt und ergeben 100 Teile der Mischung, die im folgenden als Farbstoffmischung L bezeichnet wird;
m) 26,6 Teile des Farbstoffs der Formel (101) und 73,4 Teile des Farbstoffs der Formel (109) homogen gemischt und ergeben 100 Teile der Mischung, die im folgenden als Farbstoffmischung M bezeichnet wird;
n) 52 Teile des Farbstoffs der Formel (101) und 48 Teile des Farbstoffs der Formel (110) homogen gemischt und ergeben 100 Teile der Mischung, die im folgenden als Farbstoffmischung N bezeichnet wird;
o) 76,5 Teile des Farbstoffs der Formel (101) und 23,5 Teile des Farbstoffs der Formel (111) homogen gemischt und ergeben 100 Teile der Mischung, die im folgenden als Farbstoffmischung O bezeichnet wird;
p) 79,6 Teile des Farbstoffs der Formel (101) und 20,4 Teile des Farbstoffs der Formel (112) homogen gemischt und ergeben 100 Teile der Mischung, die im folgenden als Farbstoffmischung P bezeichnet wird;
q) 26,6 Teile des Farbstoffs der Formel (101) und 73,4 Teile des Farbstoffs der Formel (113) homogen gemischt und ergeben 100 Teile der Mischung, die im folgenden als Farbstoffmischung Q bezeichnet wird;
r) 52 Teile des Farbstoffs der Formel (101) und 48 Teile des Farbstoffs der Formel (114) homogen gemischt und ergeben 100 Teile der Mischung, die im folgenden als Farbstoffmischung R bezeichnet wird.

Beispiel 2:

Man färbt 10 Teile Polyamid-6.6-Gewebe (Helancatrikot) in 500 Teilen einer wässrigen Flotte, die 2 g/l Ammonacetat enthält und mit Essigsäure auf pH 5 gestellt wird. Als Farbstoffe werden 0,27 % des gelben Farbstoffs der Formel

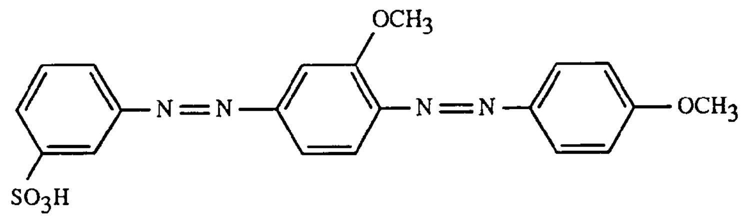

(115),

0,12 % des roten Farbstoffs der Formel

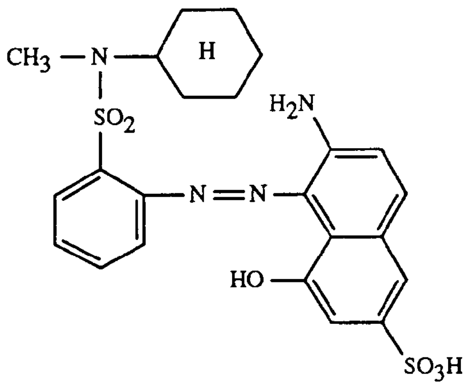

(116)

und 0,13 % der gemäss Beispiel 1e) erhaltenen blauen Farbstoffmischung E verwendet, wobei sich die Mengenangaben auf das Fasergewicht beziehen. Die Färbedauer bei einer Temperatur von 60 bis 98° beträgt 30 bis 90 Minuten. Das gefärbte Helancastück wird anschliessend herausgenommen und wie üblich gespült und getrocknet. Man erhält ein in neutral brauner Nuance völlig egal gefärbtes Gewebestück, das keinerlei materialbedingte Streifigkeit aufweist.

Beispiele 3 bis 18:

Verfährt man wie in Beispiel 2 angegeben, verwendet jedoch anstelle von 0,27 % des gelben Farbstoffs der Formel (115) und 0,12 % des roten Farbstoffs der Formel (116) sowie 0,13 % der blauen Farbstoffmischung E die in der folgenden Tabelle 1 angegebenen Farbstoffe der Formeln (115) und (116) sowie die Farbstoffmischung aus Beispiel 1, so erhält man die in der angegebenen Nuance völlig egal gefärbten Gewebestücke.

Tabelle 1:

| Beispiel | verwendete Farbstoffe | Nuance |
|---|---|---|
| 3 | 0,18 % des Farbstoffs der Formel (115)<br>0,17 % des Farbstoffs der Formel (116)<br>0,07 % der Farbstoffmischung F | rotstichig braun |
| 4 | 0,25 % des Farbstoffs der Formel (115)<br>0,036 % des Farbstoffs der Formel (116)<br>0,124 % der Farbstoffmischung D | oliv |
| 5 | 0,29 % des Farbstoffs der Formel (115)<br>0,13 % des Farbstoffs der Formel (116)<br>0,13 % der Farbstoffmischung B | neutrales braun |
| 6 | 0,18 % des Farbstoffs der Formel (115)<br>0,18 % des Farbstoffs der Formel (116)<br>0,077 % der Farbstoffmischung C | rotstichig braun |
| 7 | 0,25 % des Farbstoffs der Formel (115)<br>0,04 % des Farbstoffs der Formel (116)<br>0,14 % der Farbstoffmischung A | oliv |
| 8 | 0,18 % des Farbstoffs der Formel (115)<br>0,18 % des Farbstoffs der Formel (116)<br>0,07 % der Farbstoffmischung G | rotstichig braun |
| 9 | 0,25 % des Farbstoffs der Formel (115)<br>0,036 % des Farbstoffs der Formel (116)<br>0,13 % der Farbstoffmischung H | oliv |
| 10 | 0,29 % des Farbstoffs der Formel (115)<br>0,125 % des Farbstoffs der Formel (116)<br>0,13 % der Farbstoffmischung I | neutrales braun |
| 11 | 0,18 % des Farbstoffs der Formel (115)<br>0,18 % des Farbstoffs der Formel (116)<br>0,08 % der Farbstoffmischung K | rotstichig braun |
| 12 | 0,18 % des Farbstoffs der Formel (115)<br>0,17 % des Farbstoffs der Formel (116)<br>0,075 % der Farbstoffmischung L | rotstichig braun |
| 13 | 0,25 % des Farbstoffs der Formel (115)<br>0,035 % des Farbstoffs der Formel (116)<br>0,12 % der Farbstoffmischung M | oliv |
| 14 | 0,29 % des Farbstoffs der Formel (115)<br>0,13 % des Farbstoffs der Formel (116)<br>0,13 % der Farbstoffmischung N | neutrales braun |

Tabelle 1: (Fortsetzung)

| Beispiel | verwendete Farbstoffe | Nuance |
|---|---|---|
| 15 | 0,185 % des Farbstoffs der Formel (115)<br>0,18 % des Farbstoffs der Formel (116)<br>0,077 % der Farbstoffmischung O | rotstichig braun |
| 16 | 0,18 % des Farbstoffs der Formel (115)<br>0,17 % des Farbstoffs der Formel (116)<br>0,07 % der Farbstoffmischung P | rotstichig braun |
| 17 | 0,25 % des Farbstoffs der Formel (115)<br>0,04 % des Farbstoffs der Formel (116)<br>0,125 % der Farbstoffmischung Q | oliv |
| 18 | 0,29 % des Farbstoffs der Formel (115)<br>0,13 % des Farbstoffs der Formel (116)<br>0,13 % der Farbstoffmischung R | neutrales braun |

Beispiele 19 bis 53:

Verfährt man wie in Beispiel 2 angegeben, verwendet jedoch anstelle von 0,12 % des roten Farbstoffs der Formel (116) 0,12 % der in der folgenden Tabelle 2 angegebenen roten Farbstoffe bzw. der roten Farbstoffmischungen in der angegebenen Zusammensetzung, so erhält man ein in brauner Nuance egal gefärbten Gewebestück.

Tabelle 2:

| Beispiel | verwendete Farbstoffe | |
|---|---|---|
| 19 | 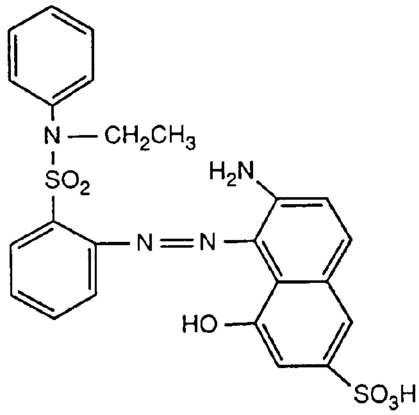 | (117) |
| 20 | 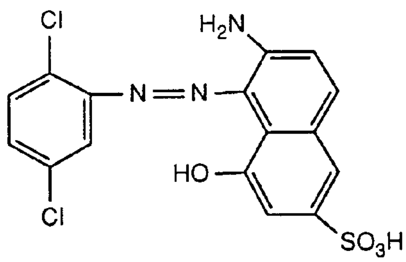 | (118) |
| 21 | 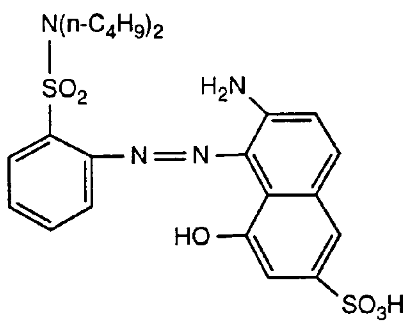 | (119) |

Tabelle 2: (Fortsetzung)

| Beispiel | verwendete Farbstoffe | |
|---|---|---|
| 22 | 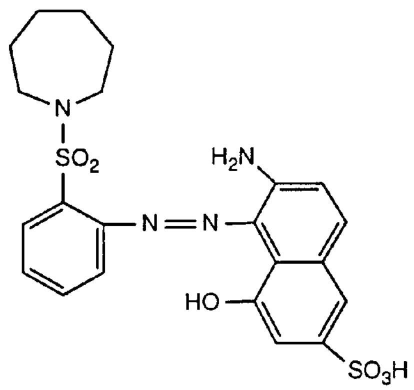 | (120) |
| 23 | 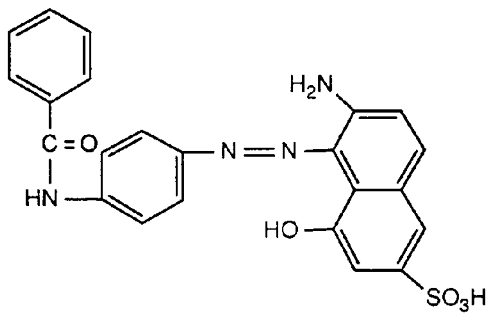 | (121) |
| 24 | 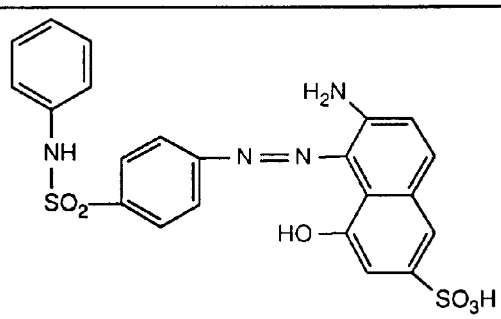 | (122) |
| 25 | 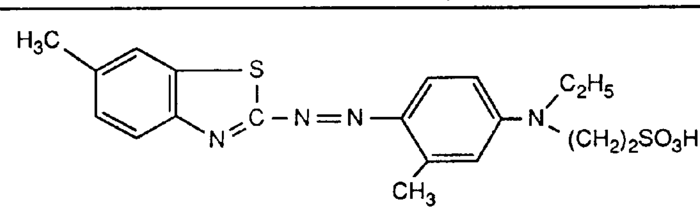 | (123) |

Tabelle 2: (Fortsetzung)

| Beispiel | verwendete Farbstoffe | |
|---|---|---|
| 26 | 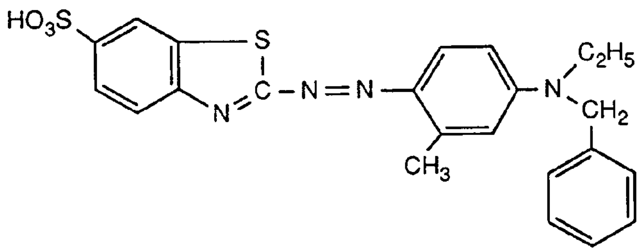 | (124) |
| 27 | 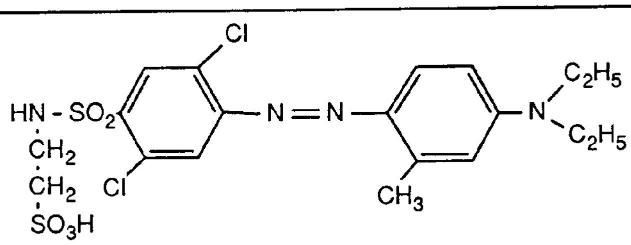 | (125) |
| 28 | 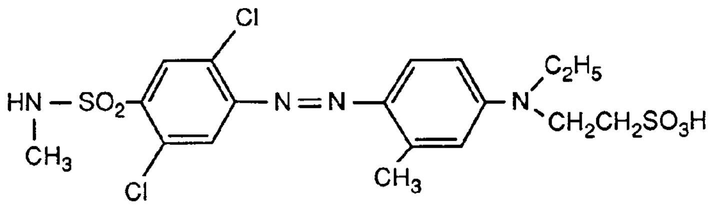 | (126) |
| 29 | 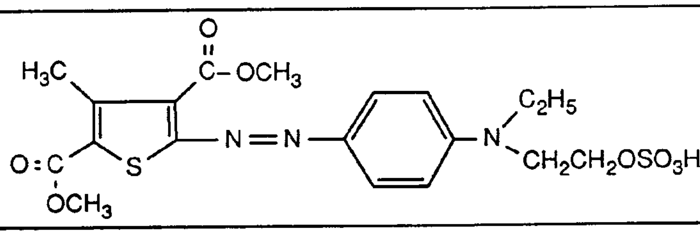 | (127) |
| 30 | 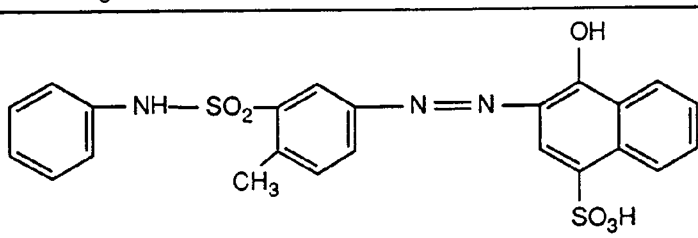 | (128) |
| 31 | 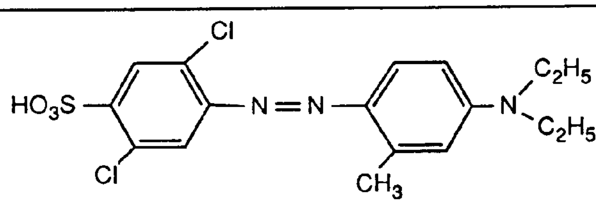 | (129) |

Tabelle 2: (Fortsetzung)

| Beispiel | verwendete Farbstoffe | |
|---|---|---|
| 32 | 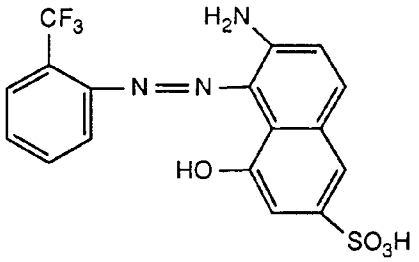 | (130) |
| 33 | 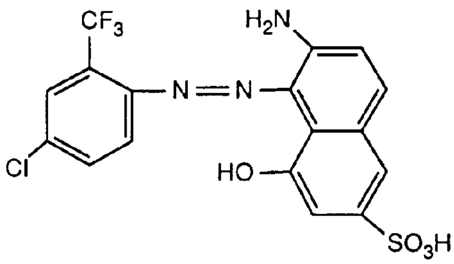 | (131) |
| 34 | 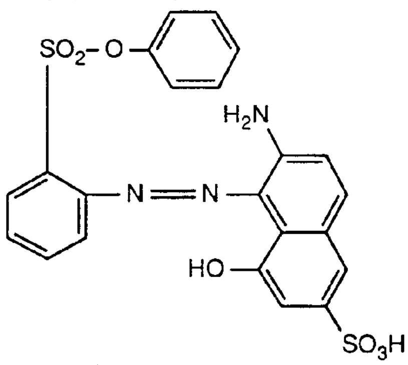 | (132) |
| 35 | 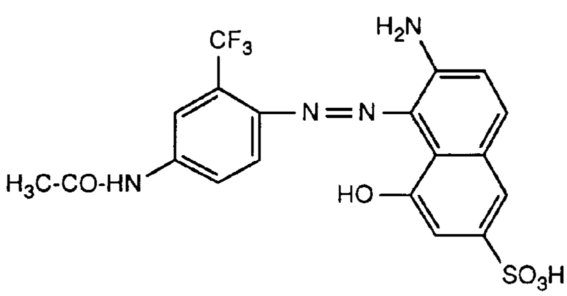 | (133) |

Tabelle 2: (Fortsetzung)

| Beispiel | verwendete Farbstoffe |
|---|---|
| 36 | 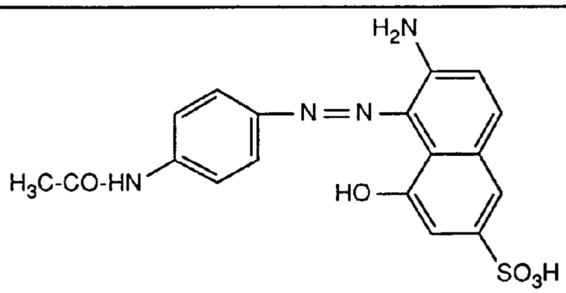 (134) |
| 37 | 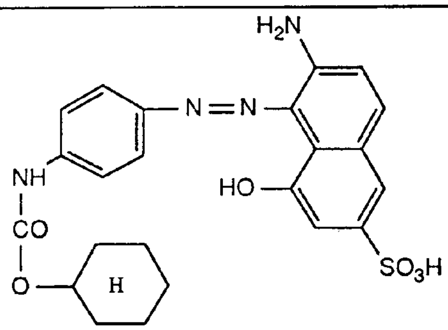 (135) |
| 38 | 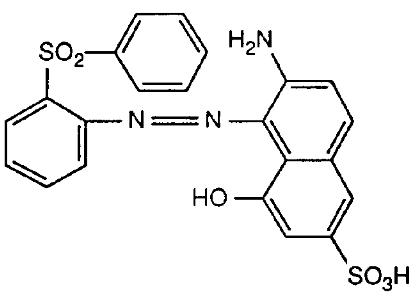 (136) |
| 39 | Mischung aus 20 Teilen des Farbstoffes der Formel (117) und 80 Teilen des Farbstoffes der Formel (119) |
| 40 | Mischung aus 50 Teilen des Farbstoffes der Formel (117) und 50 Teilen des Farbstoffes der Formel (120) |
| 41 | Mischung aus 70 Teilen des Farbstoffes der Formel (117) und 30 Teilen des Farbstoffes der Formel (122) |
| 42 | Mischung aus 30 Teilen des Farbstoffes der Formel (117) und 70 Teilen des Farbstoffes der Formel (123) |
| 43 | Mischung aus 40 Teilen des Farbstoffes der Formel (117) und 60 Teilen des Farbstoffes der Formel (126) |

Tabelle 2: (Fortsetzung)

| Beispiel | verwendete Farbstoffe |
|---|---|
| 44 | Mischung aus 20 Teilen des Farbstoffes der Formel (117) und 80 Teilen des Farbstoffes der Formel (129) |
| 45 | Mischung aus 50 Teilen des Farbstoffes der Formel (117) und 50 Teilen des Farbstoffes der Formel (124) |
| 46 | Mischung aus 70 Teilen des Farbstoffes der Formel (117) und 30 Teilen des Farbstoffes der Formel (125) |
| 47 | Mischung aus 30 Teilen des Farbstoffes der Formel (117) und 70 Teilen des Farbstoffes der Formel (121) |
| 48 | Mischung aus 40 Teilen des Farbstoffes der Formel (116) und 60 Teilen des Farbstoffes der Formel (121) |
| 49 | Mischung aus 20 Teilen des Farbstoffes der Formel (116) und 80 Teilen des Farbstoffes der Formel (122) |
| 50 | Mischung aus 50 Teilen des Farbstoffes der Formel (116) und 50 Teilen des Farbstoffes der Formel (123) |
| 51 | Mischung aus 70 Teilen des Farbstoffes der Formel (116) und 30 Teilen des Farbstoffes der Formel (129) |
| 52 | Mischung aus 30 Teilen des Farbstoffes der Formel (116) und 70 Teilen des Farbstoffes der Formel (119) |
| 53 | Mischung aus 40 Teilen des Farbstoffes der Formel (116) und 60 Teilen des Farbstoffes der Formel (120) |

Beispiele 54 bis 92:

Verfährt man wie in Beispiel 2 angegeben, verwendet jedoch anstelle von 0,27 % des gelben Farbstoffs der Formel (115) 0,27 % der in der folgenden Tabelle 3 angegebenen gelben oder orangen Farbstoffe bzw. Farbstoffmischungen in der angegebenen Zusammensetzung, so erhält man ein in brauner Nuance egal gefärbtes Gewebestück.

Tabelle 3:

| Beispiel | verwendete Farbstoffe | |
|---|---|---|
| 54 | 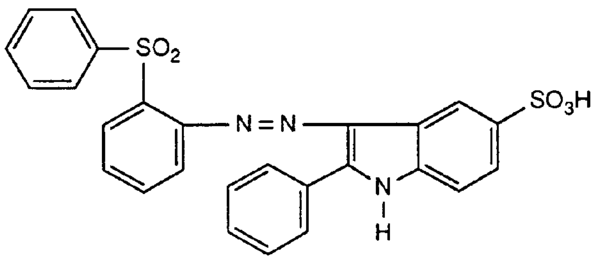 | (137) |
| 55 | 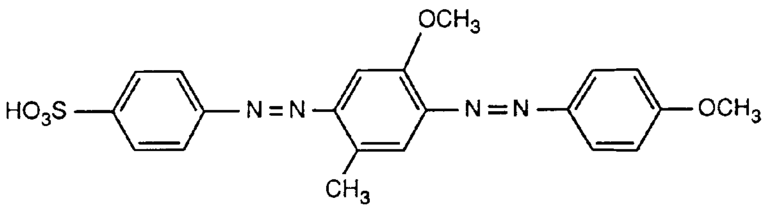 | (138) |
| 56 | 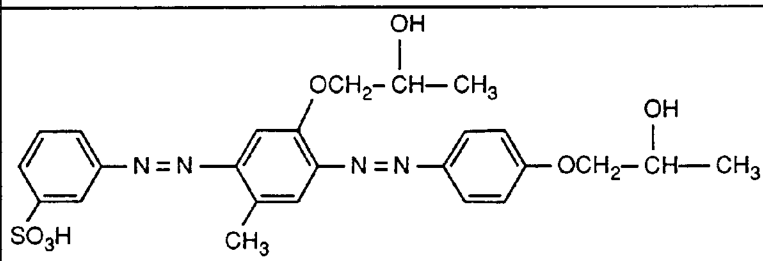 | (139) |
| 57 | 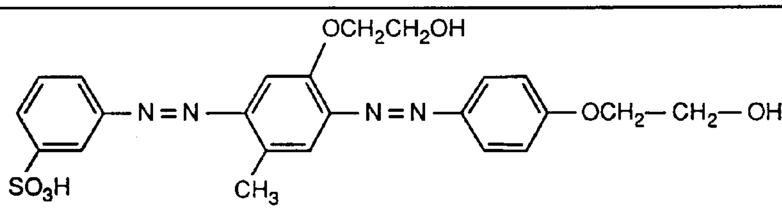 | (140) |
| 58 | 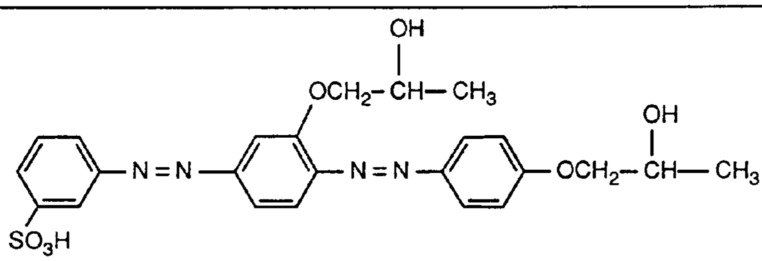 | (141) |

Tabelle 3: (Fortsetzung)

| Beispiel | verwendete Farbstoffe |
|---|---|
| 59 | 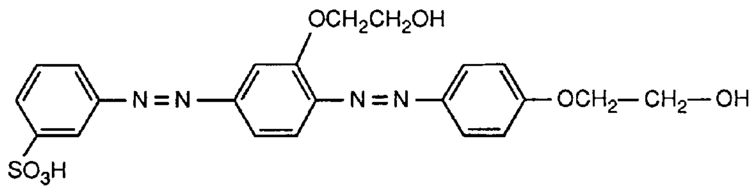 (142) |
| 60 | 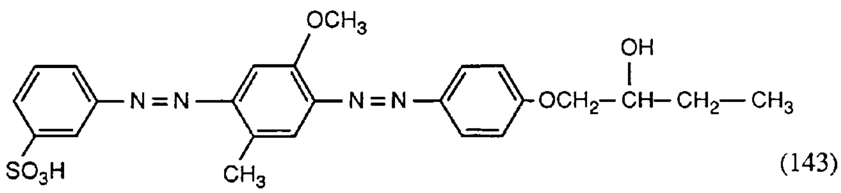 (143) |
| 61 | 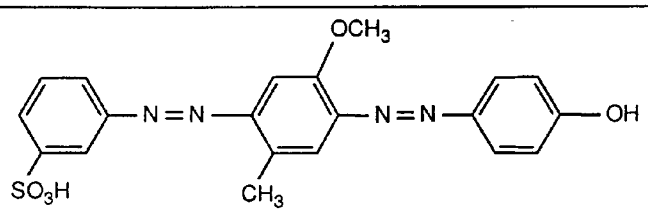 (144) |
| 62 | 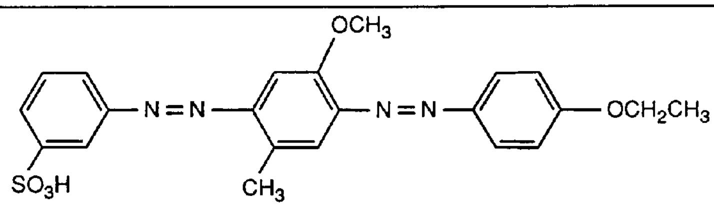 (145) |
| 63 | 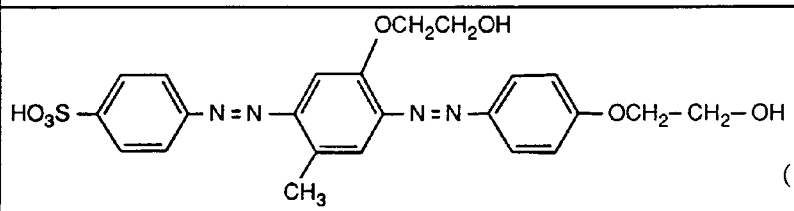 (146) |
| 64 | 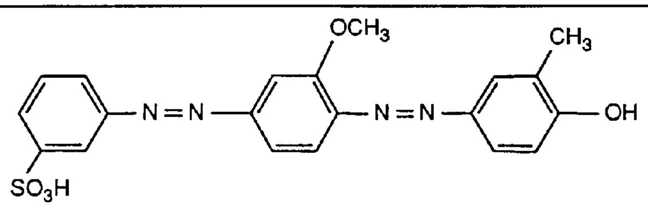 (147) |

Tabelle 3: (Fortsetzung)

| Beispiel | verwendete Farbstoffe |
|---|---|
| 65 | 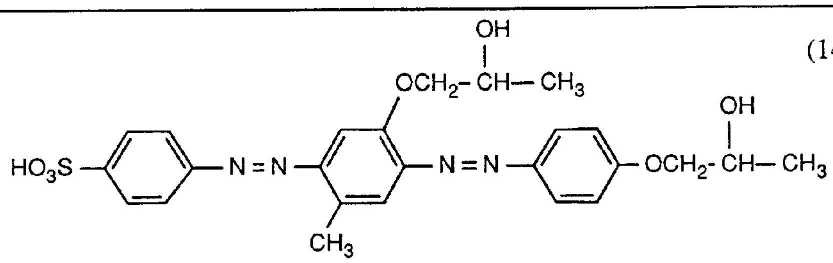 (148) |
| 66 | 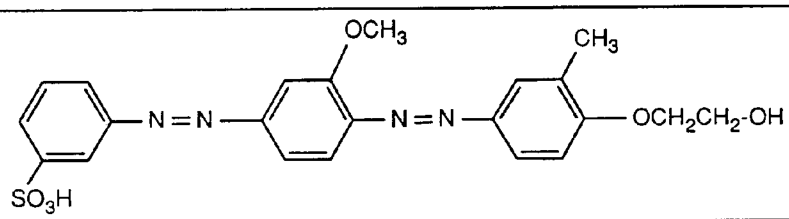 (149) |
| 67 | 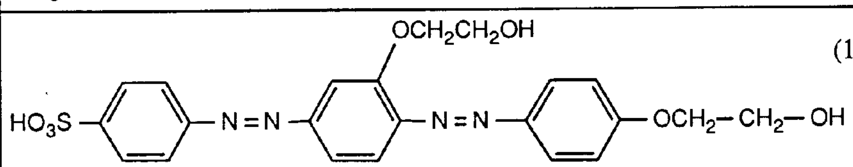 (150) |
| 68 | 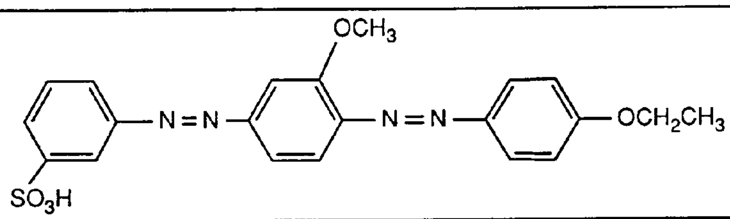 (151) |
| 69 | 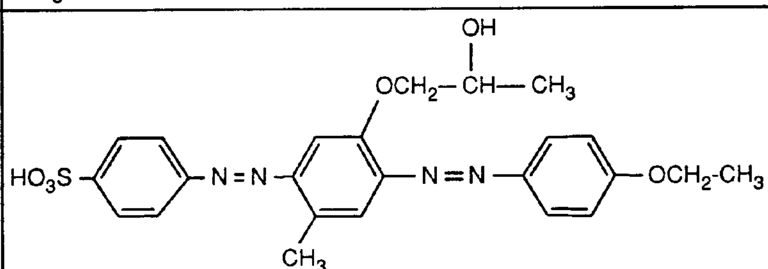 (152) |
| 70 | 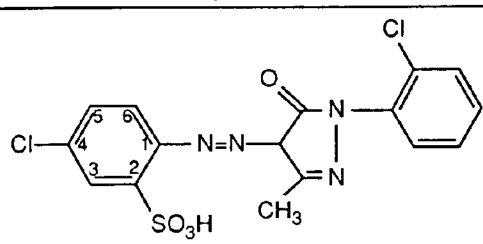 (153) |

Tabelle 3: (Fortsetzung)

| Beispiel | verwendete Farbstoffe |
| --- | --- |
| 71 | 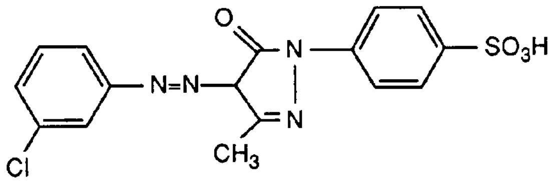 (154) |
| 72 | 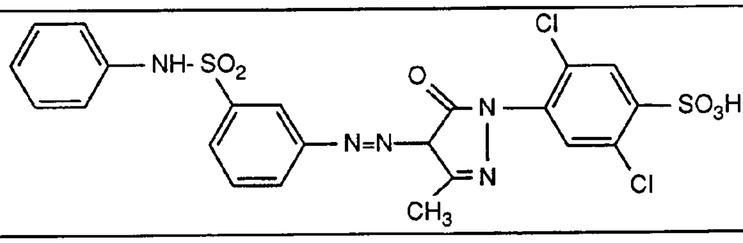 (155) |
| 73 | 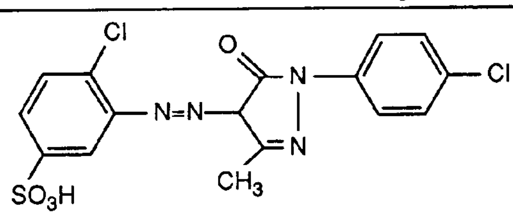 (156) |
| 74 | 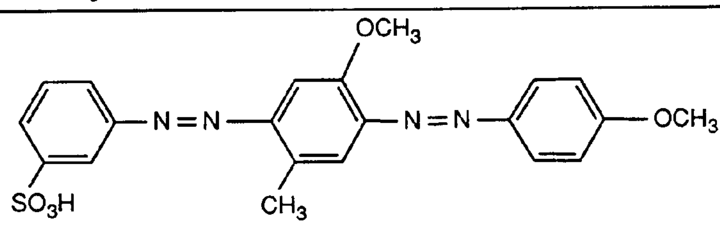 (157) |
| 75 | 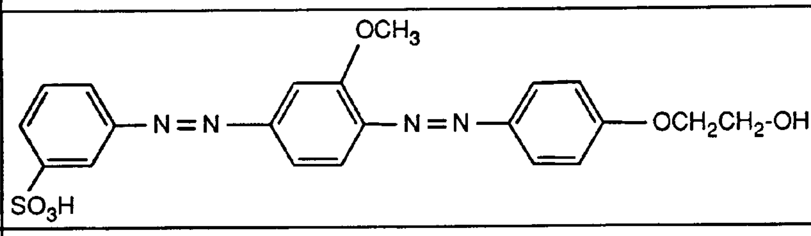 (158) |
| 76 | 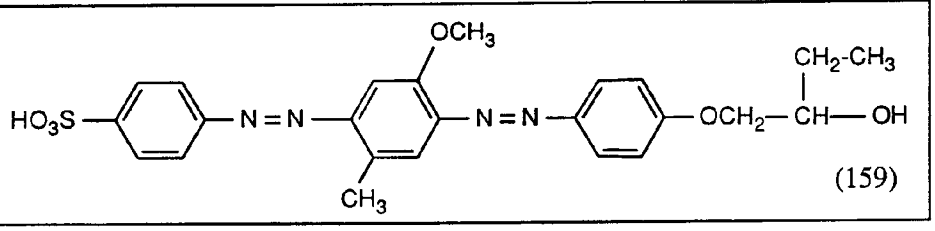 (159) |

Tabelle 3: (Fortsetzung)

| Beispiel | verwendete Farbstoffe |
|---|---|
| 77 | 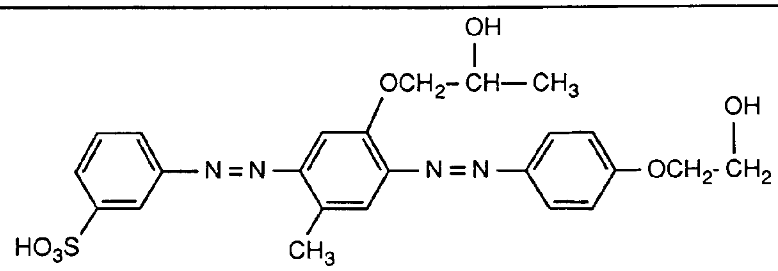 (160) |
| 78 | 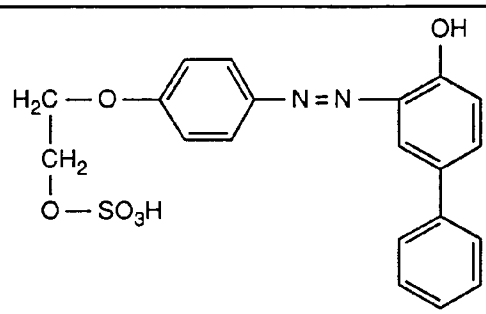 (161) |
| 79 | 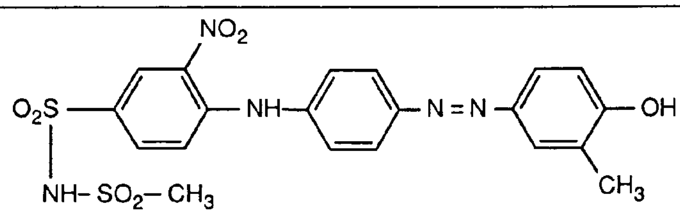 (162) |
| 80 | 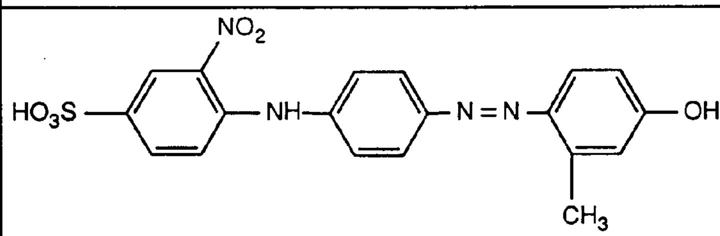 (163) |
| 81 | 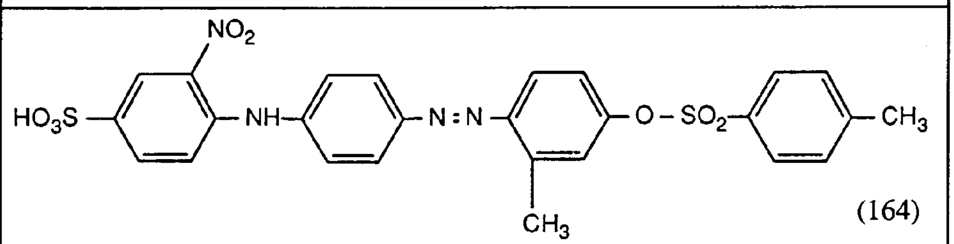 (164) |

Tabelle 3: (Fortsetzung)

| Beispiel | verwendete Farbstoffe |
|---|---|
| 82 | 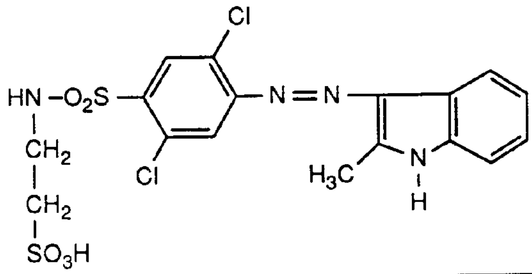 (165) |
| 83 | Mischung aus 20 Teilen des Farbstoffes der Formel (137) und 80 Teilen des Farbstoffes der Formel (115) |
| 84 | Mischung aus 50 Teilen des Farbstoffes der Formel (137) und 50 Teilen des Farbstoffes der Formel (138) |
| 85 | Mischung aus 70 Teilen des Farbstoffes der Formel (137) und 30 Teilen des Farbstoffes der Formel (143) |
| 86 | Mischung aus 30 Teilen des Farbstoffes der Formel (137) und 70 Teilen des Farbstoffes der Formel (144) |
| 87 | Mischung aus 40 Teilen des Farbstoffes der Formel (137) und 60 Teilen des Farbstoffes der Formel (145) |
| 88 | Mischung aus 20 Teilen des Farbstoffes der Formel (137) und 80 Teilen des Farbstoffes der Formel (151) |
| 89 | Mischung aus 50 Teilen des Farbstoffes der Formel (137) und 50 Teilen des Farbstoffes der Formel (153) |
| 90 | Mischung aus 70 Teilen des Farbstoffes der Formel (137) und 30 Teilen des Farbstoffes der Formel (156) |
| 91 | Mischung aus 30 Teilen des Farbstoffes der Formel (137) und 70 Teilen des Farbstoffes der Formel (161) |
| 92 | Mischung aus 40 Teilen des Farbstoffes der Formel (137) und 60 Teilen des Farbstoffes der Formel (163) |

Beispiel 93:

Man färbt 10 Teile Polyamid-6.6-Gewebe (Helancatrikot) in 500 Teilen einer wässerigen Flotte, die 2 g/l Ammonacetat enthält und mit Essigsäure auf pH 5 gestellt ist. Der Anteil der Farbstoffmischung B oder D beträgt 0,9 %, bezogen auf das Fasergewicht. Die Färbedauer bei einer Temperatur von 98° beträgt 30 bis 90 Minuten. Das gefärbte Helancastück wird anschliessend herausgenommen und wie üblich gespült und getrocknet. Man erhält mit beiden Farbstoffmischungen ein in blauer Nuance egal gefärbtes Gewebestück, das keinerlei materialbedingte Streifigkeit aufweist. Die mit der Farbstoffmischung B erhaltene Nuance ist etwas grünstichig, die mit der Farbstoffmischung D erhaltene Nuance etwas rotstichig.

Verfährt man wie in Beispiel 93 angegeben, verwendet jedoch anstelle 0,9 % der Farbstoffmischung B oder D 0,9 % einer der weiteren in Beispiel 1 angegebenen blauen Farbstoffmischungen, so erhält man ein blauer Nuance gefärbtes Gewebestück, wobei dieses eine mehr oder wenig starke rotstichige oder grünstichige

Nuance aufweist.

Beispiel 94:

Man färbt 10 Teile Polyamid 6,6-Garn in 400 Teilen einer wässrigen Flotte, die 1,5 g/l Ammonacetat enthält und mit Essigsäure auf pH 5,5 gestellt wird. Als Farbstoffe werden 0,27 % des Farbstoffs der Formel (115), 0,12 % des Farbstoffs der Formel (116) und 0,13 % der gemäss Beispiel 1e) erhaltenen Farbstoffmischung E verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral brauner Nuance gefärbtes Garn.

Verwendet man anstelle von 0,27 % des gelben Farbstoffs der Formel (115) und 0,12 % des roten Farbstoffs der Formel (116) sowie 0,13 % der blauen Farbstoffmischung E die in der folgenden Tabelle 4 angegebenen Farbstoffe sowie die Farbstoffmischungen A, B, C, D bzw. F aus Beispiel 1, so erhält man das in der angegebenen Nuance gefärbte Garn.

Tabelle 4:

| Beispiel | verwendete Farbstoffe | Nuance |
|---|---|---|
| 95 | 0,18 % des Farbstoffs der Formel (115)<br>0,17 % des Farbstoffs der Formel (116)<br>0,07 % der Farbstoffmischung F | rotstichig braun |
| 96 | 0,25 % des Farbstoffs der Formel (115)<br>0,036 % des Farbstoffs der Formel (116)<br>0,124 % der Farbstoffmischung D | oliv |
| 97 | 0,29 % des Farbstoffs der Formel (115)<br>0,13 % des Farbstoffs der Formel (116)<br>0,13 % der Farbstoffmischung B | neutrales braun |
| 98 | 0,18 % des Farbstoffs der Formel (115)<br>0,18 % des Farbstoffs der Formel (116)<br>0,077 % der Farbstoffmischung C | rotstichig braun |
| 99 | 0,25 % des Farbstoffs der Formel (115)<br>0,04 % des Farbstoffs der Formel (116)<br>0,14 % der Farbstoffmischung A | oliv |
| 100 | 0,18 % des Farbstoffs der Formel (137)<br>0,17 % des Farbstoffs der Formel (117)<br>0,07 % der Farbstoffmischung F | rotstichig braun |
| 101 | 0,25 % des Farbstoffs der Formel (137)<br>0,036 % des Farbstoffs der Formel (131)<br>0,124 % der Farbstoffmischung D | oliv |
| 102 | 0,29 % des Farbstoffs der Formel (137)<br>0,13 % des Farbstoffs der Formel (120)<br>0,13 % der Farbstoffmischung B | neutrales braun |
| 103 | 0,18 % des Farbstoffs der Formel (138)<br>0,18 % des Farbstoffs der Formel (120)<br>0,077 % der Farbstoffmischung C | rotstichig braun |
| 104 | 0,25 % des Farbstoffs der Formel (143)<br>0,04 % des Farbstoffs der Formel (131)<br>0,14 % der Farbstoffmischung A | oliv |
| 105 | 0,18 % des Farbstoffs der Formel (163)<br>0,17 % des Farbstoffs der Formel (133)<br>0,07 % der Farbstoffmischung F | rotstichig braun |
| 106 | 0,25 % des Farbstoffs der Formel (165)<br>0,036 % des Farbstoffs der Formel (136)<br>0,124 % der Farbstoffmischung D | oliv |

Verwendet man ferner anstelle des gelben Farbstoffs der Formel (115) den orangen Farbstoff der Formel

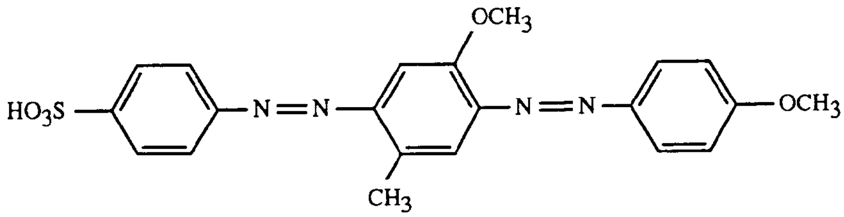

(138)

oder (137) und anstelle des roten Farbstoffes der Formel (115) die in Tabelle 5 angegebenen Farbstoffe zusammen mit den Farbstoffmischungen A, B, C, D, E bzw. F aus Beispiel 1, so erhält man das in der in Tabelle 5 angegebenen Nuance gefärbte Garn.

Tabelle 5:

| Beispiel | verwendete Farbstoffe | Nuance |
|---|---|---|
| 107 | 0,27 % des Farbstoffs der Formel (138)<br>0,09 % des Farbstoffs der Formel (116)<br>0,14 % der Farbstoffmischung E | neutral braun |
| 108 | 0,18 % des Farbstoffs der Formel (138)<br>0,11 % des Farbstoffs der Formel (116)<br>0,09 % der Farbstoffmischung F | rotstichig braun |
| 109 | 0,25 % des Farbstoffs der Formel (138)<br>0,02 % des Farbstoffs der Formel (116)<br>0,14 % der Farbstoffmischung D | oliv |
| 110 | 0,27 % des Farbstoffs der Formel (138)<br>0,1 % des Farbstoffs der Formel (116)<br>0,14 % der Farbstoffmischung B | neutral braun |
| 111 | 0,18 % des Farbstoffs der Formel (138)<br>0,12 % des Farbstoffs der Formel (116)<br>0,09 % der Farbstoffmischung C | rotstichig braun |
| 112 | 0,25 % des Farbstoffs der Formel (138)<br>0,03 % des Farbstoffs der Formel (116)<br>0,16 % der Farbstoffmischung A | oliv |
| 113 | 0,27 % des Farbstoffs der Formel (137)<br>0,09 % des Farbstoffs der Formel (133)<br>0,14 % der Farbstoffmischung F | neutral braun |
| 114 | 0,18 % des Farbstoffs der Formel (137)<br>0,11 % des Farbstoffs der Formel (120)<br>0,09 % der Farbstoffmischung D | rotstichig braun |
| 115 | 0,25 % des Farbstoffs der Formel (137)<br>0,02 % des Farbstoffs der Formel (116)<br>0,14 % der Farbstoffmischung E | oliv |
| 116 | 0,27 % des Farbstoffs der Formel (137)<br>0,1 % des Farbstoffs der Formel (131)<br>0,14 % der Farbstoffmischung B | neutral braun |
| 117 | 0,18 % des Farbstoffs der Formel (137)<br>0,12 % des Farbstoffs der Formel (125)<br>0,09 % der Farbstoffmischung C | rotstichig braun |
| 118 | 0,25 % des Farbstoffs der Formel (137)<br>0,03 % des Farbstoffs der Formel (136)<br>0,16 % der Farbstoffmischung A | oliv |

Beispiel 119 (Teppichausziehverfahren)

Ein Baumfärbeapparat (Labor-Stückfärbeapparat, Modell 10 der Firma Rudolf Then) besteht in seinen Hauptteilen aus dem liegenden Färbekessel mit Kühlmantel, der mit dem Nebenkessel mit seiner Spezial-Umkehrpumpe zu einem Zirkulationssystem verbunden ist.

In diesen Färbeapparat wird ein Warenbaum eingeführt, der mit einer Polyamid-6 Schlingenflor-Teppichware von 50 cm Breite, 135 cm Länge und einem Gewicht von 380 g bestückt wurde. In den Nebenkessel wurden 6 Liter enthärtetes Wasser eingefüllt und 60 ml 2n Natronlauge zugegeben. Durch Oeffnen der entsprechenden Ventile (Nebenkessel, bzw. Verbindungsleitungen, Pumpe/Färbekessel) strömt die Flotte aus dem Nebenkessel mit eigenem Gefälle in den Färbekessel, dabei fliesst die verdrängte Luft durch die Entlüftungsleitung in den Nebenkessel ab. Nach Füllung des Färbeapparates bleibt im Nebenkessel ein Flottenrest von ca. 5 cm Höhe, danach wird die Umwälzpumpe eingeschaltet. Zur Kontrolle des pH-Wertes wurde in die Rohrleitung zwischen Färbe- und Nebenkessel (Fliessrichtung) eine Bohrung angebracht und eine kombinierte Glaselektrode eingeführt. Die Färbeflotte zirkuliert während des gesamten Färbeprozesses von innen nach aussen, dabei beträgt das Druckgefälle 0,1 bis 0,2 Bar, die Förderleistung der Pumpe ca. 6 Liter pro Minute. Die Flotte wird auf 98° erhitzt und 7,6 g eines anionischen faseraffinen Egalisiermittels, gelöst in 100 ml Wasser, innerhalb von 5 Minuten in den Nebenkessel zugegeben.

Die Färbetemperatur wird auf 97 bis 98° eingestellt, der pH-Wert beträgt 10,7. Der pH-Wert einer entnommenen, auf 20° abgekühlten Probe beträgt 11,9.

Nun werden 2,5 g des gelben Farbstoffs der Formel (115) von Beispiel 2 und 1,8 g der blauen Farbstoffmischung C von Beispiel 1 beide gelöst in 200 ml heissem Wasser, innerhalb von 10 Minuten aus einem Tropfrichter in den Nebenkessel zulaufen gelassen. Nach 30 Minuten werden mittels einer Kolbenbürette während 10 Minuten mit einer Geschwindigkeit von 5,5 ml pro Minute und während weiteren 20 Minuten mit einer Geschwindigkeit von 2,25 ml pro Minute, insgesamt 100 ml 1n Schwefelsäure zudosiert.

Der pH-Wert beträgt nach weiteren 10 Minuten 3,8. Das Färbebad ist erschöpft, d.h. die Farbstoffe sind zu über 99 % auf das Färbegut aufgezogen. Die Beheizung wird abgestellt und mit Hilfe der indirekten Kühlung der Färbeflotte auf 60° gekühlt. Während dieser Zeit erhöht sich der pH-Wert auf 3,9. Die fast wasserklare Flotte wird in den Nebenkessel zurückgepumpt und der Warenbaum herausgenommen. Das Teppichmaterial wird abgewickelt, zentrifugiert und getrocknet. Die Polyamid-6-Schlingen-Teppichware ist flächenegal grün gefärbt.

Beispiel 120: (Teppichdruck)

Ein Velours-Teppichboden aus Polyamid-6 mit einem Gewicht von 350 bis 400 g/m$^2$ wird mit einer Klotzflotte, bestehend aus 988 Teilen Wasser, 10 Teilen Natronlauge 36°, Bé und 2 Teilen Netzmittel, auf einem Foulard imprägniert und auf eine Flottenaufnahme von 80 % abgequetscht.

Auf den so vorbehandelten Teppich wird mittels einer Düse eine Farbpaste der folgenden Zusammensetzung in Form eines Musters aufgespritzt:

| | |
|---|---|
| 942 Teile | Wasser, |
| 50 Teile | Verdicker, |
| 3 Teile | Antischaummittel, |
| 3 Teile | des gelben Farbstoffes der Formel (115) von Beispiel 2, |
| 1 Teil | des roten Farbstoffes der Formel (116) von Beispiel 2, sowie |
| 1 Teil | der blauen Farbstoffmischung B von Beispiel 1. |

Der verwendete Verdicker weist die folgende Zusammensetzung auf:

| | |
|---|---|
| 240 Teile | Lackbenzin, |
| 50 Teile | Wasser-in-Oel-Emulgator, |
| 20 Teile | Oel-in-Wasser-Emulgator, |
| 20 Teile | Antischaummittel, |
| 50 Teile | vernetztes Carboxyvinylpolymer mit einem Molekulargewicht von ca. 4.000.000, |
| 70 Teile | lineares Carboxyvinylpolymer mit einem Molekulargewicht von ca. 1.000.000, und |
| 550 Teile | Wasser, dessen pH-Wert mit Essigsäure auf 4,5 gestellt wurde. |

Das mit der Farbpaste bespritzte Material wird anschliessend während 5 Minuten mit Sattdampf von 101° behandelt zur Fixierung der Farbstoffe, gespült, neutralisiert, erneut gespült und getrocknet.

Man erhält einen Velours-Teppichboden mit einem braunen Muster mit sehr scharfen Konturen, welcher eine sehr gute Penetration und keinerlei "Frosting" aufweist.

Verwendet man anstelle von einem Teil der blauen Farbstoffmischung B von Beispiel 1 ein Teil der blauen Farbstoffmischung E von Beispiel 1 so erhält man bei sonst gleicher Verfahrensweise einen Velour-Teppichboden mit einem braunen Muster, der ähnlich gute Eigenschaften besitzt.

Beispiel 121: (Teppich-Kontinue-Färbung)

4,5 Teile des gelben Farbstoffs der Formel (115) von Beispiel 2 und 1,5 Teile der blauen Farbstoffmischung B von Beispiel 1 werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl, 5,0 Teile eine koazervatbildenden Klotzhilfsmittels auf der Basis eines Kondensationsproduktes einer höher molekularen Fettsäure mit einem Oxyalkylamin, 2,0 Teile krist. Mononatriumphosphat und 1,0 Teile krist. Dinatriumphosphat in 500 Teilen kaltem Wasser zugegeben. Anschliessend wird mit kaltem Wasser auf 1000 Teile aufgefüllt. Von dieser, einen pH-Wert von 5,5 bis 6,5 aufweisenden Flotte werden 300 %, bezogen auf das Teppichgewicht, auf einen Polyamid-6,6-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmaschine erhält man einen gleichmässig grün gefärbten Teppich.

Verwendet man anstelle von 4,5 Teilen des gelben Farbstoffs der Formel (115) und 1,5 Teilen der blauen Farbstoffmischung B die in der folgenden Tabelle 6 angegebenen Farbstoffe bzw. Farbstoffmischungen so erhält man in der angegebenen Nuance gleichmässig gefärbte Teppiche.

Tabelle 6:

| Beispiel | verwendete Farbstoffe | Nuance |
|---|---|---|
| 122 | 2,7 Teile des Farbstoffs der Formel (137)<br>1,2 Teile des Farbstoffs der Formel (117)<br>1,3 Teile der Farbstoffmischung B | neutrales braun |
| 123 | 2,4 Teile des Farbstoffs der Formel (137)<br>2,3 Teile des Farbstoffs der Formel (120)<br>1,0 Teile der Farbstoffmischung D | rotbraun |
| 124 | 3,0 Teile des Farbstoffs der Formel (137)<br>0,4 Teile des Farbstoffs der Formel (131)<br>1,2 Teile der Farbstoffmischung F | oliv |
| 125 | 2,7 Teile des Farbstoffs der Formel (137)<br>1,2 Teile des Farbstoffs der Formel (133)<br>1,3 Teile der Farbstoffmischung H | neutrales braun |
| 126 | 2,4 Teile des Farbstoffs der Formel (137)<br>2,3 Teile des Farbstoffs der Formel (133)<br>1,0 Teile der Farbstoffmischung K | rotbraun |
| 127 | 2,7 Teile des Farbstoffs der Formel (115)<br>1,2 Teile des Farbstoffs der Formel (116)<br>1,3 Teile der Farbstoffmischung B | neutrales braun |
| 128 | 2,4 Teile des Farbstoffs der Formel (115)<br>2,3 Teile des Farbstoffs der Formel (116)<br>1,0 Teile der Farbstoffmischung B | rotbraun |
| 129 | 3,0 Teile des Farbstoffs der Formel (115)<br>0,4 Teile des Farbstoffs der Formel (116)<br>1,2 Teile der Farbstoffmischung B | oliv |
| 130 | 2,7 Teile des Farbstoffs der Formel (115)<br>1,2 Teile des Farbstoffs der Formel (116)<br>1,3 Teile der Farbstoffmischung E | neutrales braun |
| 131 | 2,4 Teile des Farbstoffs der Formel (115)<br>2,3 Teile des Farbstoffs der Formel (116)<br>1,0 Teile der Farbstoffmischung E | rotbraun |
| 132 | 3,0 Teile des Farbstoffs der Formel (115)<br>0,4 Teile des Farbstoffs der Formel (116)<br>1,2 Teile der Farbstoffmischung E | oliv |

Beispiel 133: (Woll-Kontinue-Färbung)

Ein Wollgewebe wird mit einer Flotte, enthaltend 2,6 Teile des gelben Farbstoffs der Formel (115), 5,2 Teile des roten Farbstoffs der Formel (116), 15,7 Teile der blauen Farbstoffmischung B, 2,0 Teile eines Verdickungsmittels auf der Basis von Alginat, 22,0 Teile eines koazervatbildenden Klotzmittels auf der Basis eines Kondensationsproduktes einer höher-molekularen Fettsäure mit einem Oxyalkylamin und 8,0 Teile 80%-ige Ameisensäure in 1000 Teilen Wasser foulardiert, wobei eine Flottenaufnahme von 85 %, bezogen auf das Gewicht von Wolle, erreicht wird. Anschliessend dämpft man während 15 Minuten in Sattdampf von 98 bis 100° und wäscht. Man erhält eine gleichmässige Olivefärbung.

Verwendet man anstelle von 15,7 Teilen der blauen Farbstoffmischung B 15,7 Teile der blauen Farbstoffmischung E so erhält man bei sonst gleicher Verfahrensweise einen ebenfalls gleichmässig oliv gefärbten Wollstoff.

Beispiel 134:

Eine Polyamid-6,6-Teppichware mit einem Gewicht von 550 g/m$^2$ wird in einer wässerigen Flotte, welche pro 1 Liter 1 g des Anlagerungsproduktes von 9 Mol Aethylenoxid an 1 Mol Nonylphenol enthält, kontinuierlich vorgenetzt und auf eine Flottenaufnahme von 45 Gewichtsprozent abgesaugt.

In einer Verschäumungsvorrichtung wird ein Farbschaum aus folgender wässeriger Flotte hergestellt, welche

| | |
|---|---|
| 0,7 g/l | des gelben Farbstoffs der Formel (115), |
| 0,05 g/l | des roten Farbstoffs der Formel (116), |
| 0,4 g/l | der blauen Farbstoffmischung B, |
| 0,7 g/l | des Anlagerungsproduktes von 5 Mol Aethylenoxid und 5 Mol Propylenoxid an 1 Mol $C_{12-14}$-Fettalkohol (z.B. Laurylalkohol) |
| 1,25 g/l | des Ammoniumsalzes des sauren Schwefelsäureesters des Anlagerungsproduktes von 2 Mol Aethylenoxid an 1 Mol Nonylphenol |
| 1 g/l | Natriumacetat, sowie |

Essigsäure zur Einstellung der Flotte auf einen pH-Wert von 5,8 enthält.

Der Verschäumungsgrad beträgt 1:8.
Die Schaumhalbwertszeit ist 5 Minuten.

Dieser Schaum wird dann aus einem Schaumbehälter, der eine verstellbare Rakel für die Einstellung der gewünschten Schaumdicke aufweist, über eine Auftragswalze mittels einer Rutsche auf die Polseite des durch die Färbeanlage laufenden Teppichs aufgebracht. Die Warenlaufgeschwindigkeit ist 8m/Minute. Die Schichthöhe des Schaums beträgt 7 mm. Der Farbschaumauftrag beträgt 150 %.

Hierauf durchläuft der Teppich eine Vakuumpassage, in der von der Rückseite her die Schaumschicht teilweise in den Teppich eingesaugt wird (Unterdruck von 0,1 bar), wodurch die Höhe der Schaumschicht etwas reduziert wird. Ueber eine Transportwalze läuft der Teppich dann zu einem Dämpfer, wobei noch vor Erreichen des Dämpfer die sich auf dem Teppich befindende Schaumschicht zerfällt. Im Dämpfer wird der Teppich mit Sattdampf bei 98°C während 4 Minuten behandelt. Anschliessend wird der Teppich mit Wasser von 80°C abgespritzt, dann abgesaugt und bei 100°C auf einem Siebtrommeltrockner getrocknet.

Man erhält eine olive, egale, streifenfreie Teppichfärbung mit einer ausgezeichneten Durchfärbung von der Polspitze bis zum Träger des Teppichs.

Verwendet man anstelle von 0,4 g/l der blauen Farbstoffmischung B 0,4 g/l der blauen Farbstoffmischung D so erhält man bei sonst gleicher Verfahrensweise eine ebenfalls olive, egale, streifenfreie Teppichfärbung.

## Patentansprüche

### Patentansprüche für folgende Vertragsstaaten : BE, CH, DE, DK, FR, GB, IT, LI, NL

1. Farbstoffmischung, dadurch gekennzeichnet, dass sie einen Farbstoff der Formel

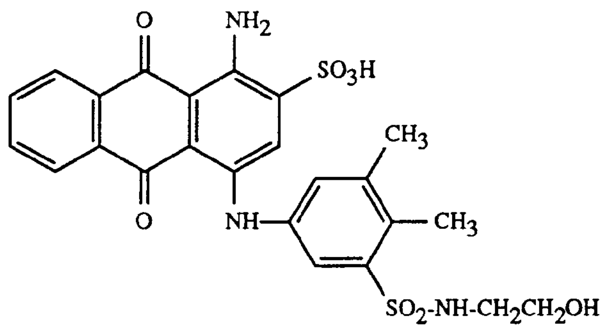

(1)

und einen Farbstoff der Formel

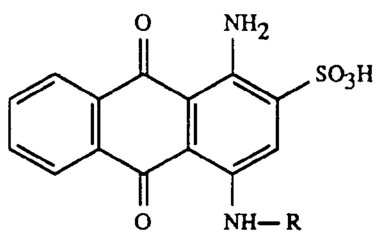

(2),

worin R Cyclohexyl oder Phenyl ist, wobei jeder der für R genannten Reste substituiert sein kann durch $C_1$-$C_4$-Alkyl, Acetylamino, N-$C_1$-$C_4$-Alkylacetylamino, Benzoylamino, Ureido oder gegebenenfalls im Phenylring durch $C_1$-$C_4$-Alkyl substituiertes Phenylsulfonylamino oder Phenylsulfonyloxy, enthält.

2. Farbstoffmischung gemäss Anspruch 1, dadurch gekennzeichnet, dass sie einen Farbstoff der Formel (1) und einen Farbstoff der Formel (2), worin
R Cyclohexyl, Phenyl, 2-Methylphenyl, 2,4,6-Trimethylphenyl, 3- oder 4- Acetylaminophenyl, 3-Acetylamino-4-methylphenyl, 4-(N-Methylacetylamino)phenyl, 3-Ureidophenyl, 4-Benzoylaminophenyl, 3-Phenylsulfonylaminophenyl, 2-Methyl-5-(4'-methylphenylsulfonylamino)phenyl oder 4-(4'-Methylphenylsulfonyloxy)phenyl ist, enthält.

3. Farbstoffmischung gemäss einem der Ansprüche 1 und 2, dadurch gekennzeichnet, dass sie einen Farbstoff der Formel (1) und einen Farbstoff der Formel

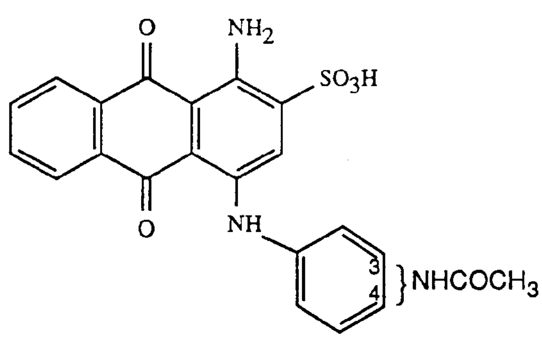

(3)

enthält.

4. Farbstoffmischung gemäss einem der Ansprüche 1 bis 3, dadurch gekennzeichnet, dass das Verhältnis der Farbstoffe der Formeln (1) und (2) oder (1) und (3) 95:5 bis 5:95, insbesondere 80:20 bis 20:80, vorzugsweise 60:40 bis 40:60 ist.

5. Verfahren zum Färben und Bedrucken von natürlichen und synthetischen Polyamidmaterialien mit einer Farbstoffmischung, dadurch gekennzeichnet, dass man eine Farbstoffmischung gemäss einem der Ansprüche 1 bis 4 verwendet.

6. Verfahren zum Färben und Bedrucken von natürlichen und synthetischen Polyamidmaterialien unter Verwendung der Farbstoffmischung gemäss einem der Ansprüche 1 bis 4 in Kombination mit anderen Farbstoffen.

7. Verfahren gemäss Anspruch 6 zum Trichromie-Färben oder -Bedrucken, dadurch gekennzeichnet, dass man eine Farbstoffmischung gemäss einem der Ansprüche 1 bis 4 in Kombination mit mindestens einem rotfärbenden Farbstoff und mindestens einem gelb- oder orangefärbenden Farbstoff verwendet.

8. Verfahren gemäss Anspruch 7 zum Trichromie-Färben oder -Bedrucken, dadurch gekennzeichnet, dass man eine Farbstoffmischung gemäss einem der Ansprüche 1 bis 4 in Kombination mit mindestens einem rotfärbenden Farbstoff der Formeln (6), (7) und (8):

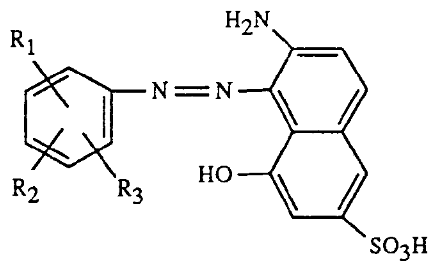

(6),

worin $R_1$ gegebenenfalls substituiertes $C_1$-$C_8$-Alkyl, Halogen, gegebenenfalls im Phenylring durch $C_1$-$C_4$-Alkyl substituiertes Phenylsulfonyl oder Phenoxysulfonyl, Cyclohexyloxycarbonylamino, $C_2$-$C_4$-Alkanoylamino, gegebenenfalls im Phenylring durch Halogen substituiertes Benzoylamino, 1-Azacycloheptan-N-sulfonyl oder

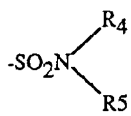

ist, wobei $R_4$ $C_1$-$C_8$-Alkyl oder gegebenenfalls durch $C_1$-$C_4$-Alkyl substituiertes Phenyl oder Cyclohexyl und $R_5$ Wasserstoff oder $C_1$-$C_8$-Alkyl ist, $R_2$ Wasserstoff, Halogen, $C_1$-$C_8$-Alkyl oder $C_2$-$C_4$-Alkanoylamino und $R_3$ Wasserstoff oder Halogen ist,

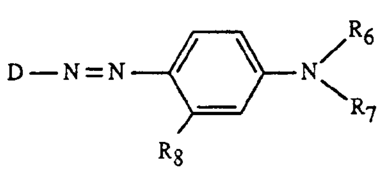

(7),

worin D gegebenenfalls substituiertes Phenyl, Thiophenyl oder Benzthiazolyl, $R_6$ $C_1$-$C_8$-Alkyl, $R_7$ gegebenenfalls substituiertes $C_1$-$C_8$-Alkyl und $R_8$ Wasserstoff oder $C_1$-$C_4$-Alkyl ist, und

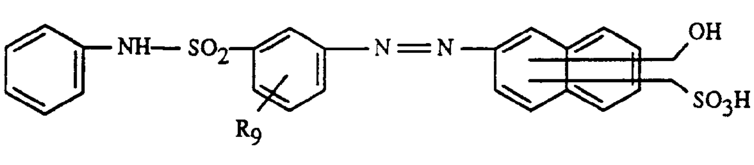

(8),

worin $R_9$ $C_1$-$C_4$-Alkyl ist, und in Kombination mit mindestens einem gelb- oder orangefärbenden Farbstoff der Formeln (9), (10), (11), (12) und (13):

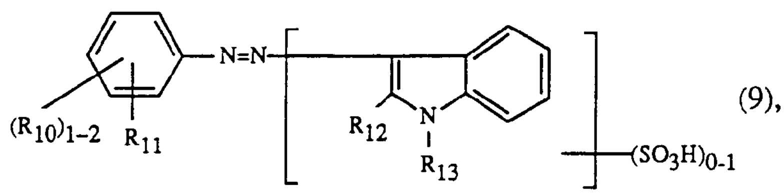

(9),

worin $R_{10}$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $R_{11}$ Wasserstoff, Halogen, ein gegebenenfalls substituierter Alkyl-, Aryloxy- oder Aryloxysulfonylrest oder ein Rest der Formel

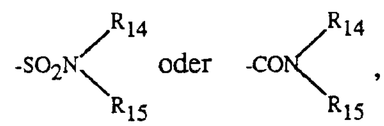

$R_{12}$ ein gegebenenfalls substituierter Alkyl- oder Arylrest, $R_{13}$ Wasserstoff oder Alkyl und $R_{14}$ und $R_{15}$ unabhängig voneinander Wasserstoff oder ein gegebenenfalls substituierter Alkyl-, Cycloalkyl- oder Arylrest ist,

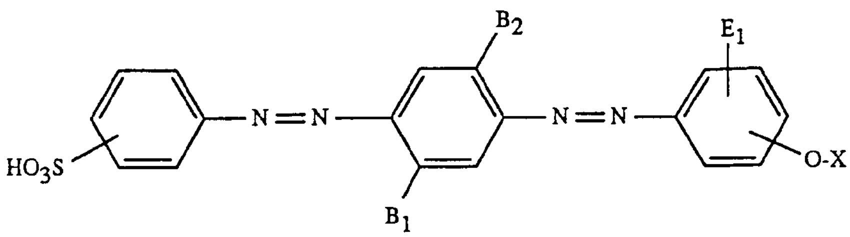

(10),

worin $B_1$, $B_2$ und $E_1$ Wasserstoff, $C_{1-4}$-Alkyl, $C_{1-4}$-Alkoxy oder $C_{2-4}$-Hydroxyalkoxy und X geradkettiges oder verzweigtes $C_{1-4}$-Alkyl oder geradkettiges oder verzweigtes $C_{2-4}$-Hydroxylalkyl bedeuten,

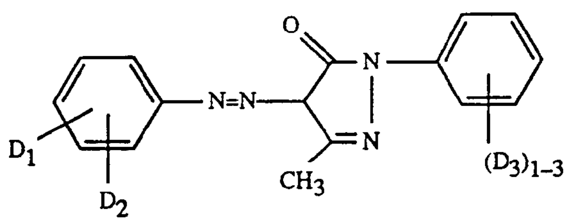

(11),

worin $D_1$ Sulfo ist oder die für $R_{10}$ in Formel (9) angegebene Bedeutung, und $D_2$ die für $R_{11}$ in Formel (9) angegebene Bedeutung hat und $(D_3)_{1-3}$ für 1 bis 3 Substituenten $D_3$ steht und $D_3$ Wasserstoff, Halogen, $C_{1-4}$-Alkyl, $C_{1-4}$-Alkoxy oder Sulfo ist,

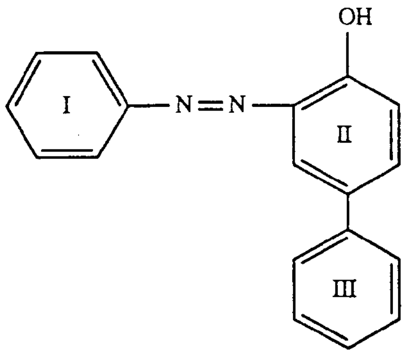

(12),

worin die Benzringe I, II und III substituiert sein können, und

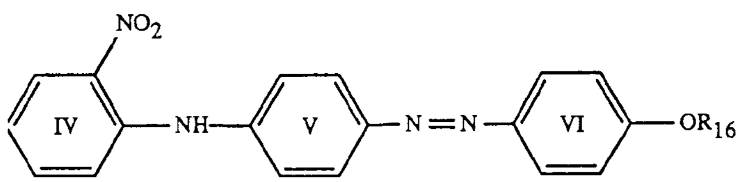

(13),

worin die Benzringe IV, V und VI substituiert sein können und $R_{16}$ Wasserstoff oder Arylsulfonyl ist,verwendet.

**9.** Verfahren gemäss einem der Ansprüche 7 und 8 zum Trichromie-Färben oder -Bedrucken, dadurch gekennzeichnet, dass man mindestens einen rotfärbenden Farbstoff der Formeln (6), (7) und (8) verwendet, wobei im Farbstoff der Formel (6) $R_1$ Trifluoromethyl, Chlor, Acetylamino, $-SO_2N(n-C_4H_9)_2$, Phenoxysulfonyl, Phenylsulfonyl, 1-Azacycloheptan-N-sulfonyl, Cyclohexyloxycarbonylamino, gegebenenfalls im Phenylring durch Chlor substituiertes Benzoylamino oder gegebenenfalls im Phenylring durch Methyl substituiertes Phenylaminosulfonyl, Cyclohexylaminosulfonyl, N-($C_1$-$C_2$-Alkyl)phenyl- oder N-($C_1$-$C_2$-Alkyl)cyclohexylaminosulfonyl, $R_2$ Wasserstoff, Methyl, Chlor oder Acetylamino und $R_3$ Wasserstoff oder Chlor ist, und im Farbstoff der Formel (7) D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_6$ Aethyl, $R_7$ Aethyl, β-Sulfatoäthyl, $-(CH_2)_{2-3}SO_3H$ oder Benzyl und $R_6$ Wasserstoff oder Methyl ist, und im Farbstoff der Formel (8) $R_9$ Methyl ist.

**10.** Verfahren gemäss einem der Ansprüche 7 bis 9 zum Trichromie-Färben oder -Bedrucken, dadurch gekennzeichnet, dass man mindestens einen gelb- oder orangefärbenden Farbstoff der Formeln

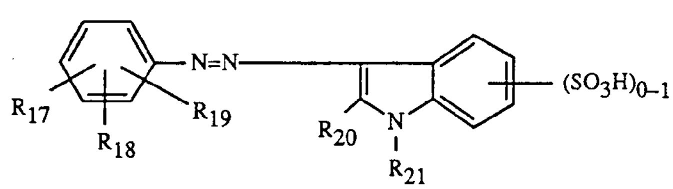

(35),

worin $R_{17}$ Wasserstoff, Methyl, Chlor, Methoxy, Äthoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $R_{18}$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-β-Sulfoäthylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Äthyl-N-phenylaminosulfonyl, $-CONH_2$ oder $-CON(CH_3)_2$, $R_{19}$ Wasserstoff oder Chlor, $R_{20}$ Methyl oder Phenyl und $R_{21}$ Wasserstoff, Methyl, Äthyl oder Octyl ist,

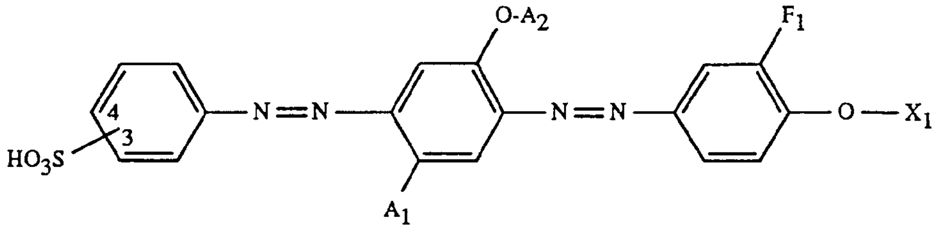

(36),

worin $A_1$ Wasserstoff oder Methyl, $F_1$ Wasserstoff oder Methyl und $A_2$ und $X_1$ unabhängig voneinander Wasserstoff, Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist,

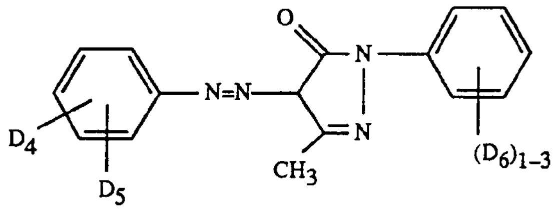

(37),

worin $D_4$ Chlor oder Phenylaminosulfonyl und $D_5$ Wasserstoff oder Sulfo ist und $(D_6)_{1-3}$ für 1 bis 3 Substituenten $D_6$ steht und $D_6$ Wasserstoff, Chlor oder Sulfo ist,

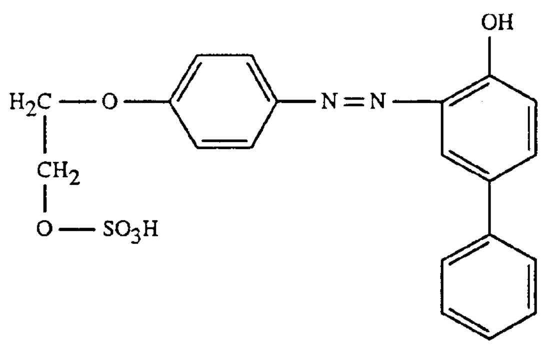

(38),

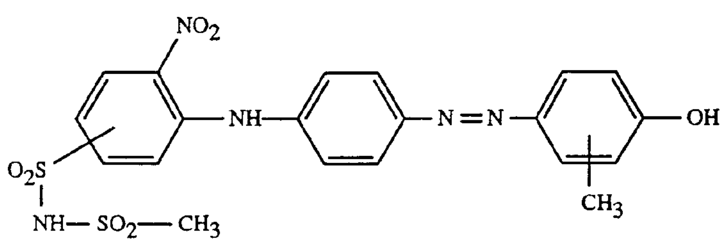

(39),

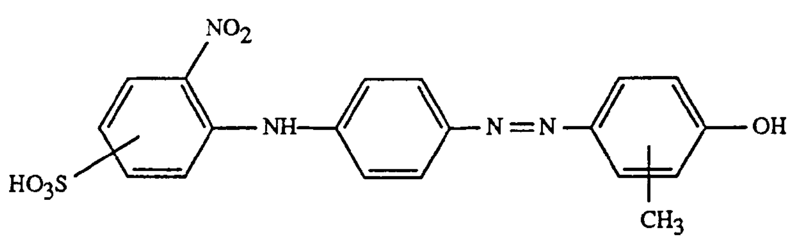

(40)

und

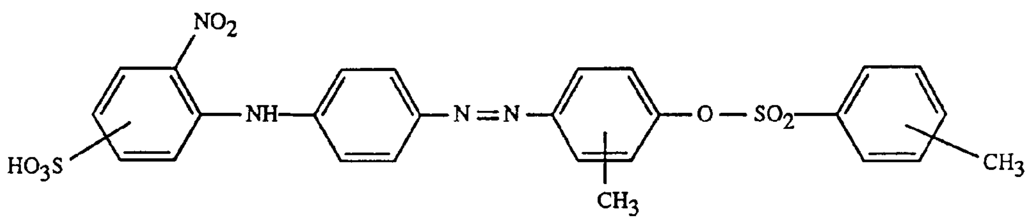

(41)

verwendet.

**11.** Verfahren zum Trichromie-Färben oder -Bedrucken gemäss einem der Ansprüche 7 bis 10, dadurch gekennzeichnet, dass man eine Farbstoffmischung gemäss einem der Ansprüche 1 bis 4 zusammen mit dem rotfärbenden Farbstoff der Formel

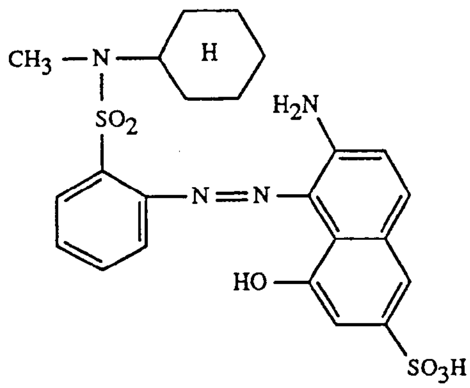

(29)

und dem gelbfärbenden Farbstoff der Formel

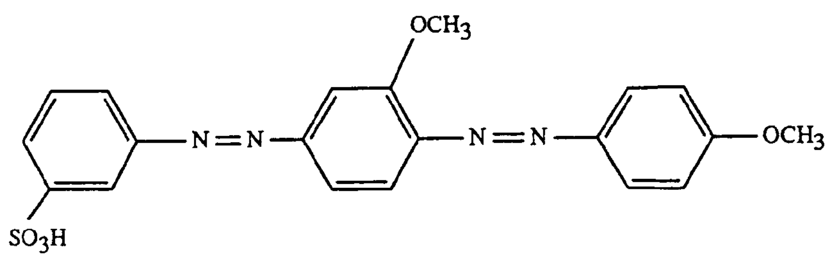

(36o)

oder dem orangefärbenden Farbstoff der Formel

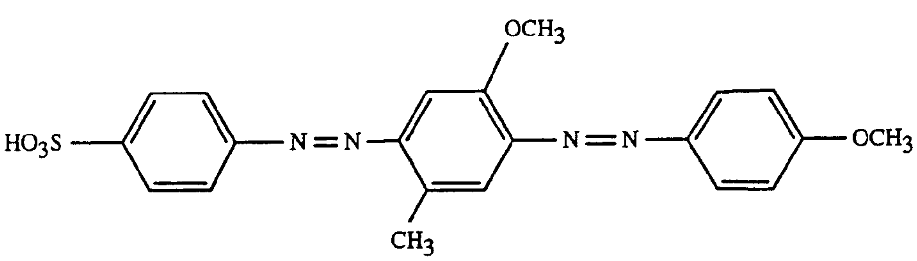

(36p),

verwendet.

12. Verwendung der Farbstoffmischung gemäss Anspruch 1 zum Färben und Bedrucken.

13. Färbe- bzw. Druckpräparate, die eine Farbstoffmischung gemäss den Ansprüchen 1 bis 6 enthalten.

14. Das gemäss einem der Ansprüche 7 bis 9 oder 11 gefärbte oder bedruckte Material, insbesondere das Textilmaterial.

15. Verfahren zur Herstellung der Farbstoffmischung gemäss Anspruch 1, dadurch gekennzeichnet, dass man 1-Amino-4-bromanthrachinon-2-sulfonsäure mit 4,5-Dimethyl-3-β-hydroxyäthylaminosulfonylanilin und einer Verbindung der Formel $NH_2$-R umsetzt, worin R die in Anspruch 1 angegebenen Bedeutungen hat.

**Patentansprüche für folgenden Vertragsstaat: ES**

1. Verfahren zur Herstellung von Farbstoffmischungen, die einen Farbstoff der Formel

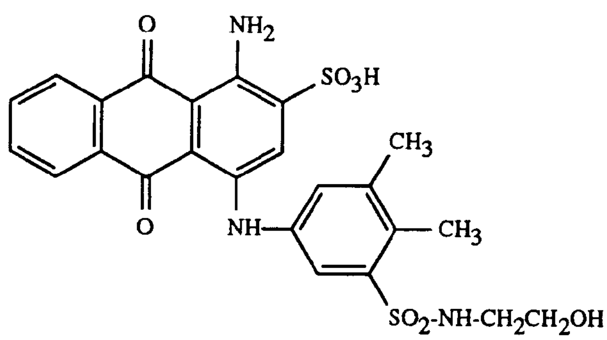

(1)

und einen Farbstoff der Formel

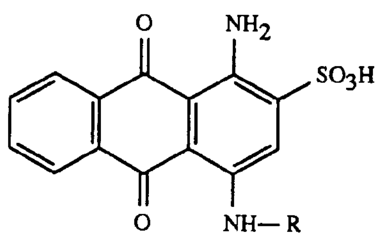

(2),

worin R Cyclohexyl oder Phenyl ist, wobei jeder der für R genannten Reste substituiert sein kann durch $C_1$-$C_4$-Alkyl, Acetylamino, N-$C_1$-$C_4$-Alkylacetylamino, Benzoylamino, Ureido oder gegebenenfalls im Phenylring durch $C_1$-$C_4$-Alkyl substituiertes Phenylsulfonylamino oder Phenylsulfonyloxy, enthalten, dadurch gekennzeichnet, dass man 1-Amino-4-bromanthrachinon-2-sulfonsäure mit 4,5-Dimethyl-3-β-hydroxyäthylaminosulfonylanilin und einer Verbindung der Formel $NH_2$-R umsetzt, worin R die unter Formel (2) angegebenen Bedeutungen hat, oder einen Farbstoff der Formel (1) mit einem Farbstoff der Formel (2) mischt.

2. Verfahren zur Herstellung von Farbstoffmischungen gemäss Anspruch 1, dadurch gekennzeichnet, dass man eine Verbindung der Formel $NH_2$-R oder einen Farbstoff der Formel (2), worin R Cyclohexyl, Phenyl, 2-Methylphenyl, 2,4,6-Trimethylphenyl, 3- oder 4- Acetylaminophenyl, 3-Acetylamino-4-methylphenyl, 4-(N-Methylacetylamino)phenyl, 3-Ureidophenyl, 4-Benzoylaminophenyl, 3-Phenylsulfonylaminophenyl, 2-Methyl-5-(4'-methylphenylsulfonylamino)phenyl oder 4-(4'-Methylphenylsulfonyloxy)phenyl ist, verwendet.

3. Verfahren zur Herstellung von Farbstoffmischungen gemäss einem der Ansprüche 1 und 2, dadurch gekennzeichnet, dass man als Verbindung der Formel $NH_2$-R 3- oder 4-Acetylaminoanilin verwendet oder

als Farbstoff der Formel (2) einen Farbstoff der Formel

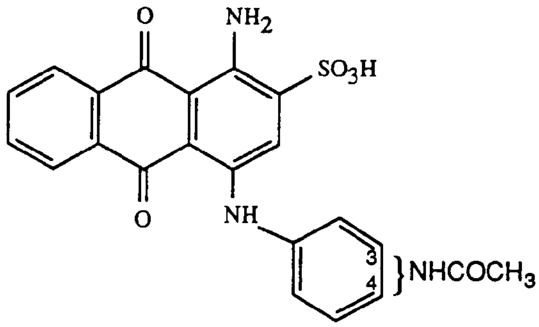

(3)

verwendet.

4. Verfahren zur Herstellung von Farbstoffmischungen gemäss einem der Ansprüche 1 bis 3, dadurch gekennzeichnet, dass das Verhältnis der Verbindung 4,5-Dimethyl-3-β-hydroxyäthylaminosulfonylanilin und der Verbindung der Formel $NH_2$-R oder das Verhältnis der Farbstoffe der Formeln (1) und (2) oder (1) und (3) 95:5 bis 5:95, insbesondere 80:20 bis 20:80, vorzugsweise 60:40 bis 40:60 ist.

5. Verfahren zum Färben und Bedrucken von natürlichen und synthetischen Polyamidmaterialien mit einer Farbstoffmischung, dadurch gekennzeichnet, dass man eine der gemäss einem der Ansprüche 1 bis 4 hergestellten Farbstoffmischungen verwendet.

6. Verfahren zum Färben und Bedrucken von natürlichen und synthetischen Polyamidmaterialien unter Verwendung der gemäss einem der Ansprüche 1 bis 4 hergestellten Farbstoffmischungen in Kombination mit anderen Farbstoffen.

7. Verfahren gemäss Anspruch 6 zum Trichromie-Färben oder -Bedrucken, dadurch gekennzeichnet, dass man eine der gemäss einem der Ansprüche 1 bis 4 hergestellten Farbstoffmischungen in Kombination mit mindestens einem rotfärbenden Farbstoff und mindestens einem gelb- oder orangefärbenden Farbstoff verwendet.

8. Verfahren gemäss Anspruch 7 zum Trichromie-Färben oder -Bedrucken, dadurch gekennzeichnet, dass man eine der gemäss einem der Ansprüche 1 bis 4 hergestellten Farbstoffmischungen in Kombination mit mindestens einem rotfärbenden Farbstoff der Formeln (6), (7) und (8):

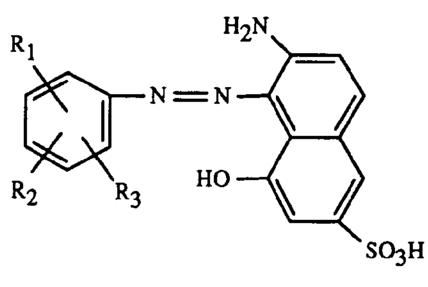

(6),

worin $R_1$ gegebenenfalls substituiertes $C_1$-$C_8$-Alkyl, Halogen, gegebenenfalls im Phenylring durch $C_1$-$C_4$-Alkyl substituiertes Phenylsulfonyl oder Phenoxysulfonyl, Cyclohexyloxycarbonylamino, $C_2$-$C_4$-Alkanoylamino, gegebenenfalls im Phenylring durch Halogen substituiertes Benzoylamino, 1-Azacycloheptan-N-sulfonyl oder

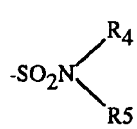

ist, wobei $R_4$ $C_1$-$C_8$-Alkyl oder gegebenenfalls durch $C_1$-$C_4$-Alkyl substituiertes Phenyl oder Cyclohexyl und $R_5$ Wasserstoff oder $C_1$-$C_8$-Alkyl ist, $R_2$ Wasserstoff, Halogen, $C_1$-$C_8$-Alkyl oder $C_2$-$C_4$-Alkanoylamino und $R_3$ Wasserstoff oder Halogen ist,

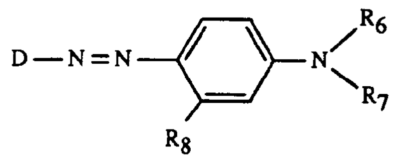

(7),

worin D gegebenenfalls substituiertes Phenyl, Thiophenyl oder Benzthiazolyl, $R_6$ $C_1$-$C_8$-Alkyl, $R_7$ gegebenenfalls substituiertes $C_1$-$C_8$-Alkyl und $R_8$ Wasserstoff oder $C_1$-$C_4$-Alkyl ist, und

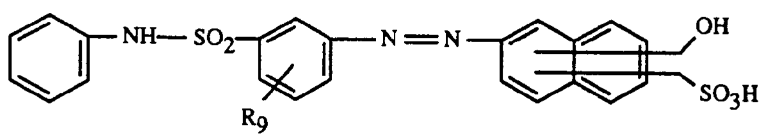

(8),

worin $R_9$ $C_1$-$C_4$-Alkyl ist, und in Kombination mit mindestens einem gelb- oder orangefärbenden Farbstoff der Formeln (9), (10), (11), (12) und (13):

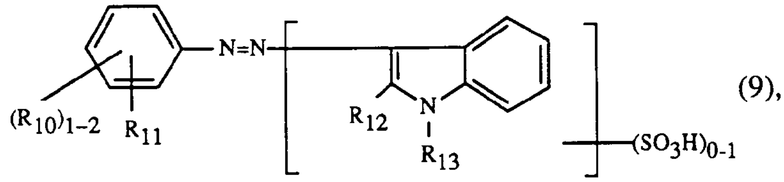

(9),

worin $R_{10}$ Wasserstoff, $C_{1-4}$-Alkyl, $C_{1-4}$-Alkoxy, Halogen, $C_{2-4}$-Alkanoylamino oder ein gegebenenfalls substituierter Arylsulfonyl-, Aryloxy- oder Arylcarbonylrest, $R_{11}$ Wasserstoff, Halogen, ein gegebenenfalls substituierter Alkyl-, Aryloxy- oder Aryloxysulfonylrest oder ein Rest der Formel

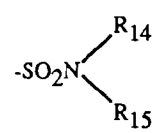 oder 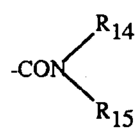 ,

$R_{12}$ ein gegebenenfalls substituierter Alkyl- oder Arylrest, $R_{13}$ Wasserstoff oder Alkyl und $R_{14}$ und $R_{15}$ unabhängig voneinander Wasserstoff oder ein gegebenenfalls substituierter Alkyl-, Cycloalkyl- oder Arylrest ist,

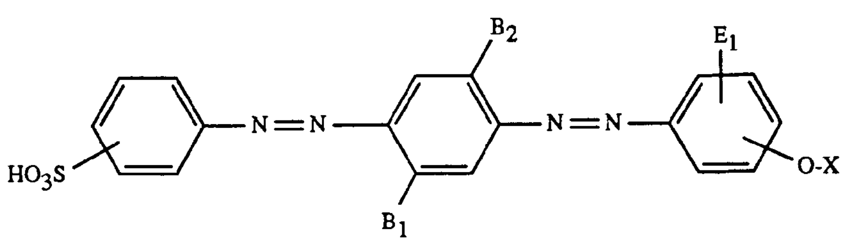

(10),

worin $B_1$, $B_2$ und $E_1$ Wasserstoff, $C_{1-4}$-Alkyl, $C_{1-4}$-Alkoxy oder $C_{2-4}$-Hydroxyalkoxy und X geradkettiges oder verzweigtes $C_{1-4}$-Alkyl oder geradkettiges oder verzweigtes $C_{2-4}$-Hydroxylalkyl bedeuten,

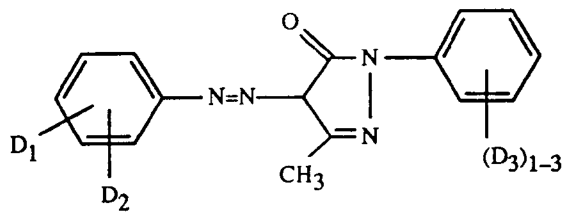

(11),

worin $D_1$ Sulfo ist oder die für $R_{10}$ in Formel (9) angegebene Bedeutung, und $D_2$ die für $R_{11}$ in Formel (9) angegebene Bedeutung hat und $(D_3)_{1-3}$ für 1 bis 3 Substituenten $D_3$ steht und $D_3$ Wasserstoff, Halogen, $C_{1-4}$-Alkyl, $C_{1-4}$-Alkoxy oder Sulfo ist,

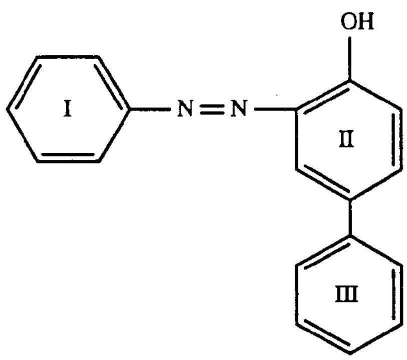

(12),

worin die Benzringe I, II und III substituiert sein können, und

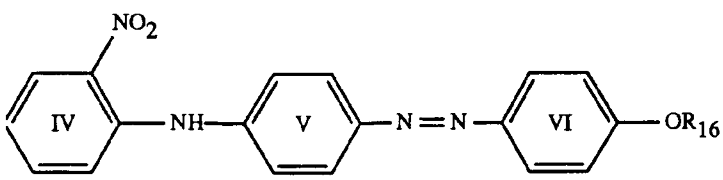

(13),

worin die Benzringe IV, V und VI substituiert sein können und $R_{16}$ Wasserstoff oder Arylsulfonyl ist,verwendet.

**9.** Verfahren gemäss einem der Ansprüche 7 und 8 zum Trichromie-Färben oder -Bedrucken, dadurch gekennzeichnet, dass man mindestens einen rotfärbenden Farbstoff der Formeln (6), (7) und (8) verwendet, wobei im Farbstoff der Formel (6) $R_1$ Trifluoromethyl, Chlor, Acetylamino, $-SO_2N(n\text{-}C_4H_9)_2$, Phenoxysulfonyl, Phenylsulfonyl, 1-Azacycloheptan-N-sulfonyl, Cyclohexyloxycarbonylamino, gegebenenfalls im Phenylring durch Chlor substituiertes Benzoylamino oder gegebenenfalls im Phenylring durch Methyl substituiertes Phenylaminosulfonyl, Cyclohexylaminosulfonyl, N-($C_1$-$C_2$-Alkyl)phenyl- oder N-($C_1$-$C_2$-Alkyl)cyclohexylaminosulfonyl, $R_2$ Wasserstoff, Methyl, Chlor oder Acetylamino und $R_3$ Wasserstoff oder Chlor ist, und im Farbstoff der Formel (7) D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_6$ Aethyl, $R_7$ Aethyl, β-Sulfatoäthyl, $-(CH_2)_{2-3}SO_3H$ oder Benzyl und $R_6$ Wasserstoff oder Methyl ist, und im Farbstoff der Formel (8) $R_9$ Methyl ist.

**10.** Verfahren gemäss einem der Ansprüche 7 bis 9 zum Trichromie-Färben oder -Bedrucken, dadurch gekennzeichnet, dass man mindestens einen gelb- oder orangefärbenden Farbstoff der Formeln

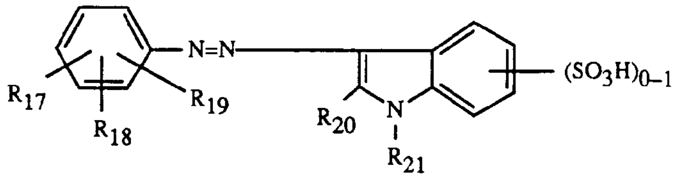

(35),

worin $R_{17}$ Wasserstoff, Methyl, Chlor, Methoxy, Äthoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $R_{18}$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-β-Sulfoäthylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Äthyl-N-phenylaminosulfonyl, $-CONH_2$ oder $-CON(CH_3)_2$, $R_{19}$ Wasserstoff oder Chlor, $R_{20}$ Methyl oder Phenyl und $R_{21}$ Wasserstoff, Methyl, Äthyl oder Octyl ist,

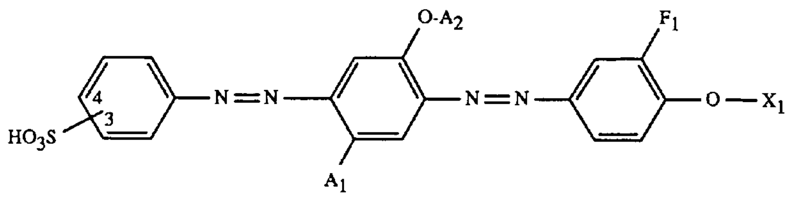

(36),

worin $A_1$ Wasserstoff oder Methyl, $F_1$ Wasserstoff oder Methyl und $A_2$ und $X_1$ unabhängig voneinander Wasserstoff, Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist,

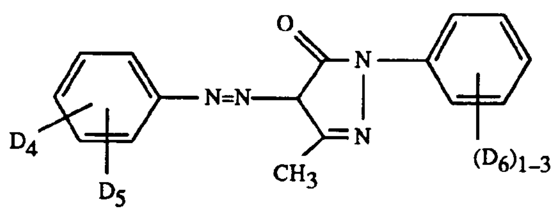

(37),

worin $D_4$ Chlor oder Phenylaminosulfonyl und $D_5$ Wasserstoff oder Sulfo ist und $(D_6)_{1-3}$ für 1 bis 3 Substituenten $D_6$ steht und $D_6$ Wasserstoff, Chlor oder Sulfo ist,

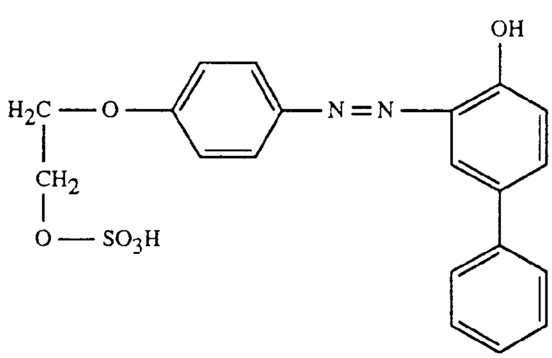

(38),

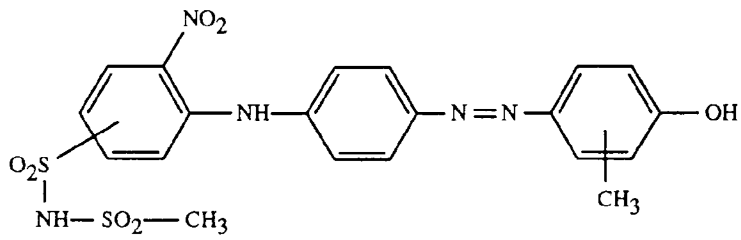

(39),

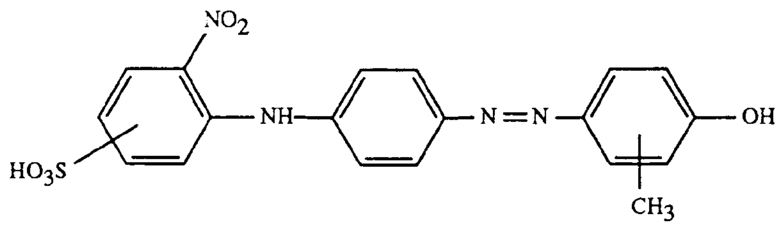

(40)

und

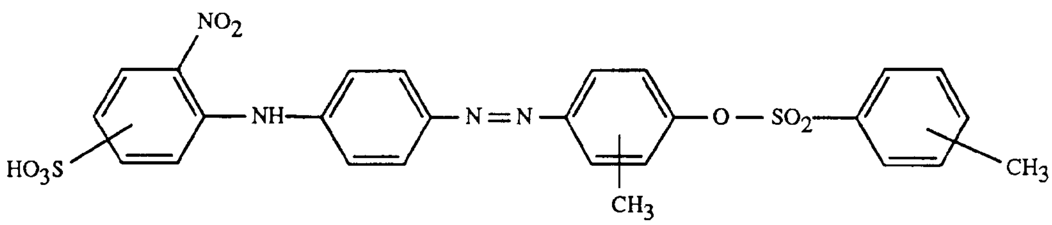

(41)

verwendet.

**11.** Verfahren zum Trichromie-Färben oder -Bedrucken gemäss einem der Ansprüche 7 bis 10, dadurch gekennzeichnet, dass man eine der gemäss einem der Ansprüche 1 bis 4 hergestellten Farbstoffmischungen zusammen mit dem rotfärbenden Farbstoff der Formel

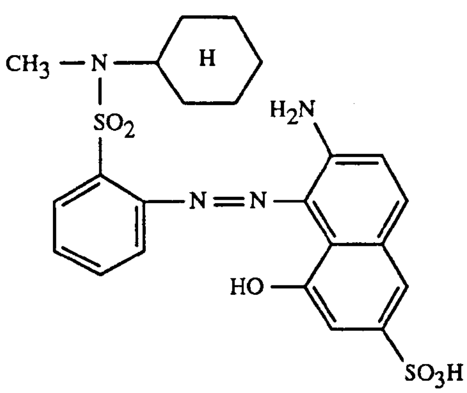

(29)

und dem gelbfärbenden Farbstoff der Formel

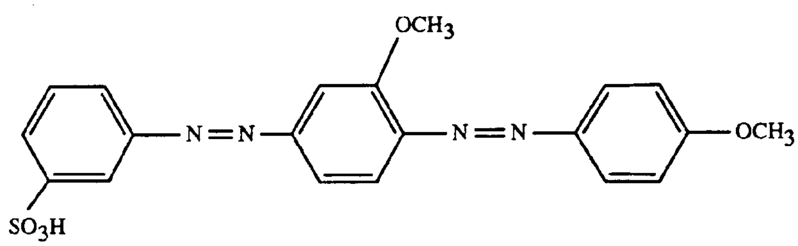

(36o)

oder dem orangefärbenden Farbstoff der Formel

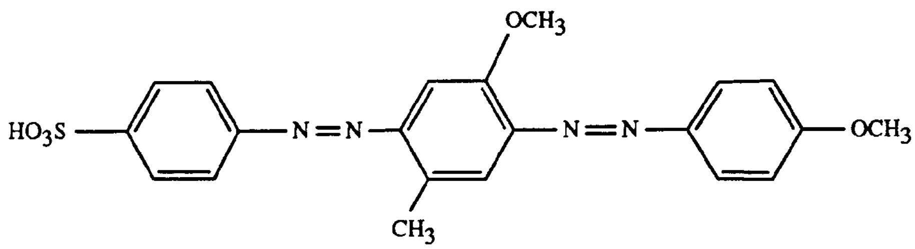

(36p),

verwendet.

**12.** Verwendung der gemäss Anspruch 1 hergestellten Farbstoffmischung zum Färben und Bedrucken.

**13.** Färbe- bzw. Druckpräparate, die eine der gemäss den Ansprüchen 1 bis 4 hergestellten Farbstoffmischungen enthalten.

**14.** Das gemäss einem der Ansprüche 7 bis 9 oder 11 gefärbte oder bedruckte Material, insbesondere das Textilmaterial.

**Claims**

**Claims for the following Contracting States : BE, CH, DE, DK, FR, GB, IT, LI, NL**

**1.** A dye mixture containing a dye of the formula

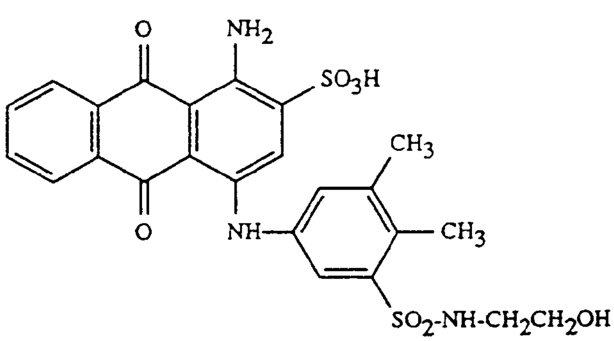

(1)

and a dye of the formula

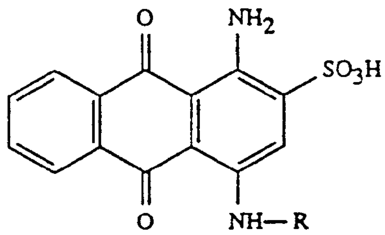

(2),

where R is cyclohexyl or phenyl, which may each be substituted by $C_1$-$C_4$alkyl, acetylamino, N-$C_1$-$C_4$alkylacetylamino, benzoylamino, ureido or by phenylsulfonylamino or phenylsulfonyloxy which may each be substituted in the phenyl ring by $C_1$-$C_4$alkyl.

2. A dye mixture according to claim 1, containing a dye of the formula (1) and a dye of the formula (2) where R is cyclohexyl, phenyl, 2-methylphenyl, 2,4,6-trimethylphenyl, 3- or 4-acetylaminophenyl, 3-acetylamino-4-methylphenyl, 4-(N-methylacetylamino)phenyl, 3-ureidophenyl, 4-benzoylaminophenyl, 3-phenylsulfonylaminophenyl, 2-methyl-5-(4'-methylphenylsulfonylamino)phenyl or 4-(4'-methylphenylsulfonyloxy)phenyl.

3. A dye mixture according to either of claims 1 and 2, containing a dye of the formula (1) and a dye of the formula

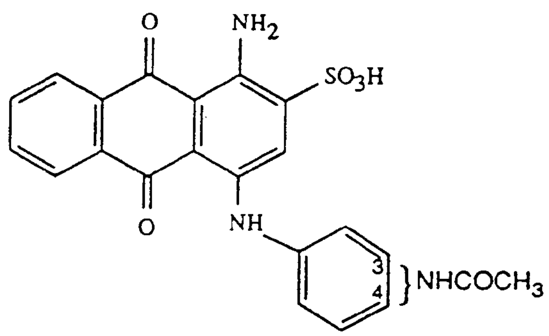

(3)

4. A dye mixture according to any one of claims 1 to 3, wherein the ratio of the dyes of the formulae (1) and (2) or (1) and (3) is from 95:5 to 5:95, in particular from 80:20 to 20:80, preferably from 60:40 to 40:60.

5. A process for dyeing and printing natural and synthetic polyamide materials with a dye mixture, which comprises using a dye mixture according to any one of claims 1 to 4.

6. A process for dyeing and printing natural and synthetic polyamide materials using the dye mixture according to any one of claims 1 to 4 in combination with other dyes.

7. A process according to claim 6 for trichromatic dyeing or printing, wherein a dye mixture according to any one of claims 1 to 4 is used in combination with at least one red-dyeing dye and at least one yellow- or orange-dyeing dye.

8. A process according to claim 7 for trichromatic dyeing or printing, wherein a dye mixture according to any one of claims 1 to 4 is used in combination with at least one red-dyeing dye of the formula (6), (7) or (8):

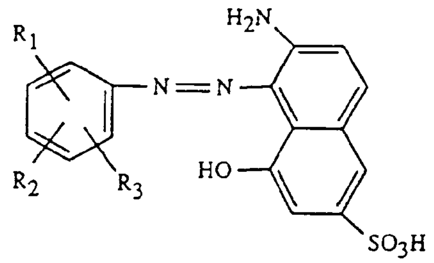

(6),

where $R_1$ is substituted or unsubstituted $C_1$-$C_8$alkyl, halogen, phenyl- or phenoxy-sulfonyl which may be substituted in the phenyl ring by $C_1$-$C_4$alkyl, cyclohexyloxycarbonylamino, $C_2$-$C_4$alkanoylamino, benzoylamino which may be substituted in the phenyl ring by halogen, 1-azacyclo heptane-N-sulfonyl or

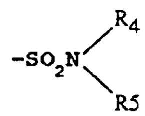

,

where $R_4$ is $C_1$-$C_8$alkyl or unsubstituted or $C_1$-$C_4$alkyl-substituted phenyl or cyclohexyl and $R_5$ is hydrogen or $C_1$-$C_8$alkyl, $R_2$ is hydrogen, halogen, $C_1$-$C_8$alkyl or $C_2$-$C_4$alkanoylamino, and $R_3$ is hydrogen or halogen,

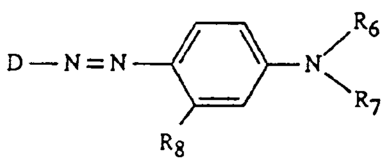

(7),

where D is substituted or unsubstituted phenyl, thiophenyl or benzothiazolyl, $R_6$ is $C_1$-$C_8$alkyl, $R_7$ is substituted or unsubstituted $C_1$-$C_8$alkyl and $R_8$ is hydrogen or $C_1$-$C_4$alkyl, or

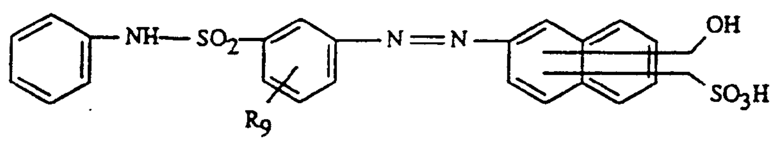

(8),

where $R_9$ is $C_1$-$C_4$alkyl, and in combination with at least one yellow- or orange-dyeing dye of the formula (9), (10), (11), (12) or (13):

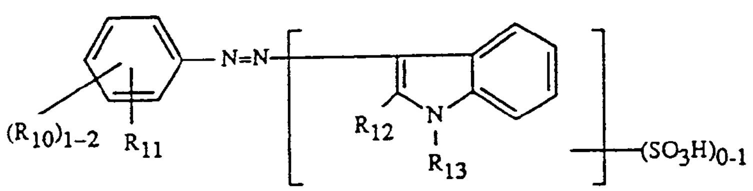

(9),

where $R_{10}$ is hydrogen, $C_{1-4}$alkyl, $C_{1-4}$alkoxy, halogen, $C_{2-4}$alkanoylamino or a substituted or unsubstituted arylsulfonyl, aryloxy or arylcarbonyl radical, $R_{11}$ is hydrogen, halogen, a substituted or unsubstituted alkyl, aryloxy or aryloxysulfonyl radical or a radical of the formula

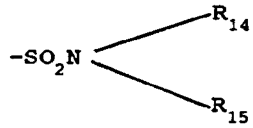

or

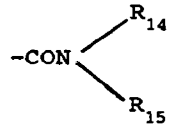

,

$R_{12}$ is a substituted or unsubstituted alkyl or aryl radical, $R_{13}$ is hydrogen or alkyl and $R_{14}$ and $R_{15}$ are independently of each other hydrogen or a substituted or unsubstituted alkyl, cycloalkyl or aryl radical,

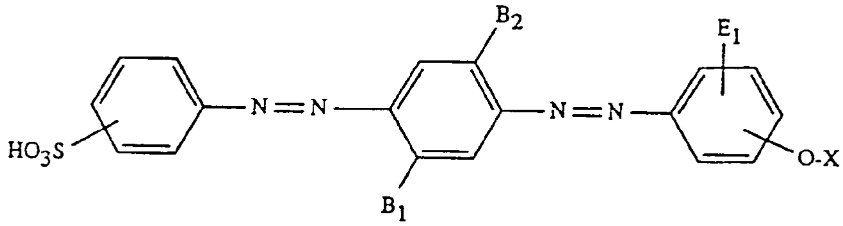

(10),

where $B_1$, $B_2$ and $E_1$ are each hydrogen, $C_{1-4}$alkyl, $C_{1-4}$alkoxy or $C_{2-4}$hydroxyalkoxy and X is straight-chain or branched $C_{1-4}$alkyl or straight-chain or branched $C_{2-4}$hydroxyalkyl,

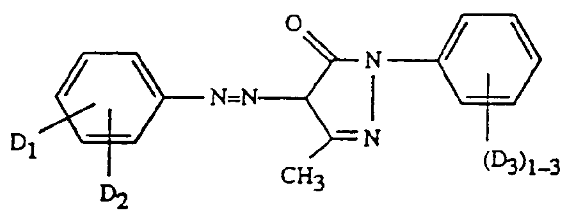

(11)

where $D_1$ is sulfo or has the meaning defined for $R_{10}$ in the formula (9), $D_2$ has the meaning defined for $R_{11}$ in the formula (9), $(D_3)_{1-3}$ is 1-3 substituents $D_3$, and $D_3$ is hydrogen, halogen, $C_{1-4}$alkyl, $C_{1-4}$alkoxy or sulfo,

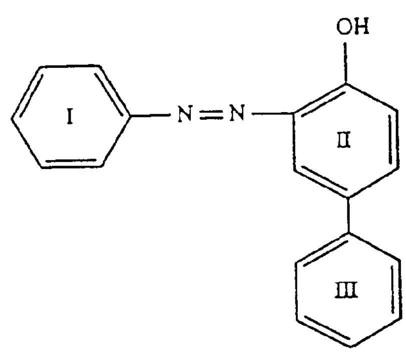

(12),

where the benzene rings I, II and III may be substituted, or

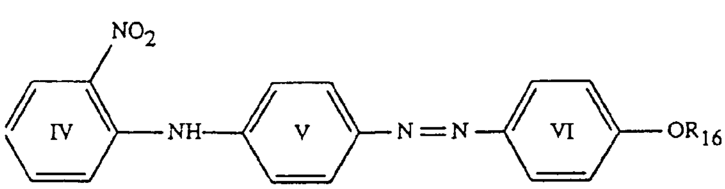

(13),

where the benzene rings IV, V and VI may be substituted and $R_{16}$ is hydrogen or arylsulfonyl.

9. A process according to either of claims 7 and 8 for trichromatic dyeing or printing, wherein use is made of at least one red-dyeing dye of the formula (6), (7) or (8), in a dye of the formula (6) $R_1$ being trifluoromethyl, chlorine, acetylamino, $-SO_2N(n-C_4H_9)_2$, phenoxysulfonyl, phenylsulfonyl, 1-azacycloheptane-N-sulfonyl, cyclohexyloxycarbonylamino, benzoylamino which may be substituted in the phenyl ring by chlorine, phenylaminosulfonyl which may be substituted in the phenyl ring by methyl, cyclohexylaminosulfonyl, N-($C_1$-$C_2$alkyl)phenyl- or N-($C_1$-$C_2$alkyl)cyclohexylaminosulfonyl, $R_2$ being hydrogen, methyl, chlorine or acetylamino and $R_3$ being hydrogen or chlorine, and in a dye of the formula (7) D being chlorine-, sulfo-, methylaminosulfonyl-, ethylaminosulfonyl- or β-sulfoethylaminosulfonyl-substituted phenyl, methyl-, methoxycarbonyl- or ethoxycarbonyl-substituted thiophenyl or unsubstituted or methyl-, methoxy- or sulfo-substituted benzothiophenyl, $R_6$ being ethyl, $R_7$ being ethyl, β-sulfatoethyl, $-(CH_2)_{2-3}SO_3H$ or benzyl, and $R_8$ being hydrogen or methyl, and in a dye of the formula (8) $R_9$ being methyl.

**10.** A process according to any one of claims 7 to 9 for trichromatic dyeing or printing, wherein use is made of at least one yellow- or orange-dyeing dye of the formulae

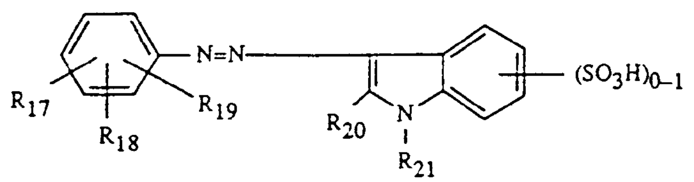

(35),

where $R_{17}$ is hydrogen, methyl, chlorine, methoxy, ethoxy, o-methylphenoxy, phenoxy, acetylamino, phenylsulfonyl, p-methylphenylsulfonyl, p-chlorophenylsulfonyl, naphthylsulfonyl, p-methylbenzoyl or p-chlorobenzoyl, $R_{18}$ is hydrogen, chlorine, methyl, trifluoromethyl, o-methylphenoxy, o-chlorophenoxy, o-chlorophenoxysulfonyl, $-SO_2NH_2$, N-$C_{1-2}$alkylaminosulfonyl, N,N-dimethylaminosulfonyl, N-β-sulfoethylaminosulfonyl, N-methyl-N-β-hydroxyethylaminosulfonyl, N-methyl-N-cyclohexylaminosulfonyl, N-phenylaminosulfonyl, N-o-methylphenylaminosulfonyl, N-o-chlorophenylaminosulfonyl, N-m-trifluoromethylphenylaminosulfonyl, N-ethyl-N-phenylaminosulfonyl, $-CONH_2$ or $-CON(CH_3)_2$, $R_{19}$ is hydrogen or chlorine, $R_{20}$ is methyl or phenyl and $R_{21}$ is hydrogen, methyl, ethyl or octyl,

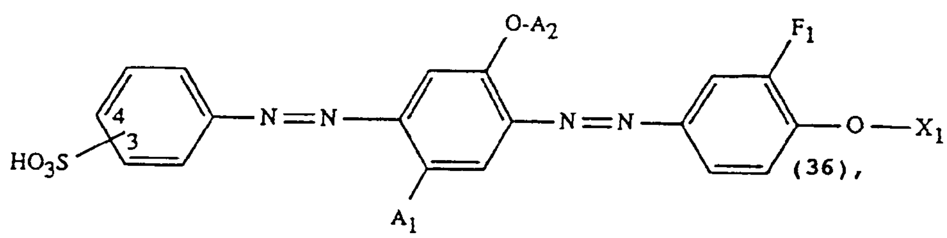

(36),

where $A_1$ is hydrogen or methyl, $F_1$ is hydrogen or methyl and $A_2$ and $X_1$ are each independently of the other hydrogen, methyl, ethyl, β-hydroxyethyl, β-hydroxypropyl, β-hydroxybutyl or α-ethyl-β-hydroxyethyl, and the sulfo group is attached in the 3- or 4-position,

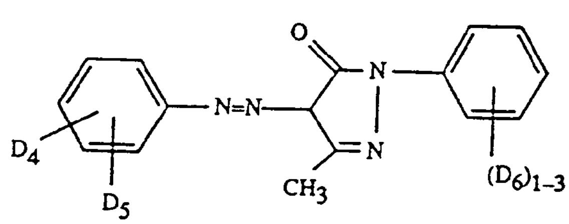

(37),

where $D_4$ is chlorine or phenylaminosulfonyl, $D_5$ is hydrogen or sulfo, $(D_6)_{1-3}$is 1-3 substituents $D_6$, and $D_6$ is hydrogen, chlorine or sulfo,

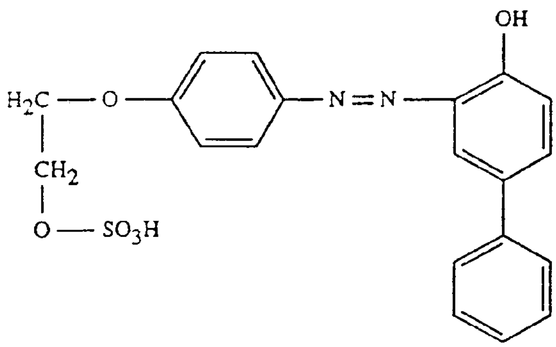

(38)

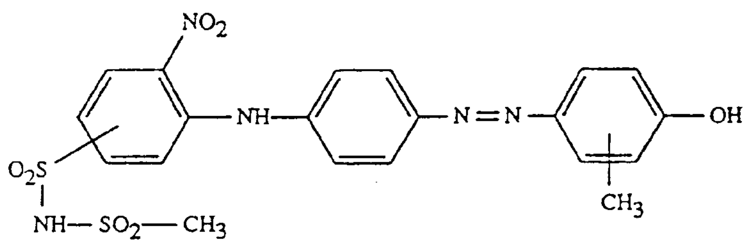

(39),

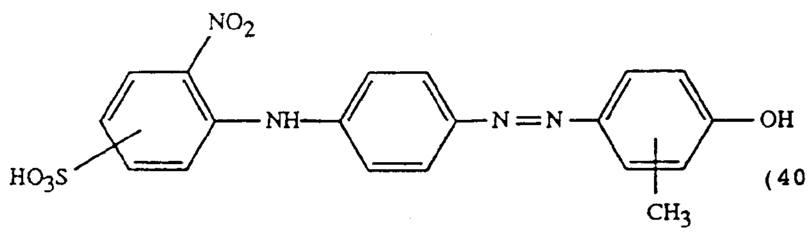

(40)

and

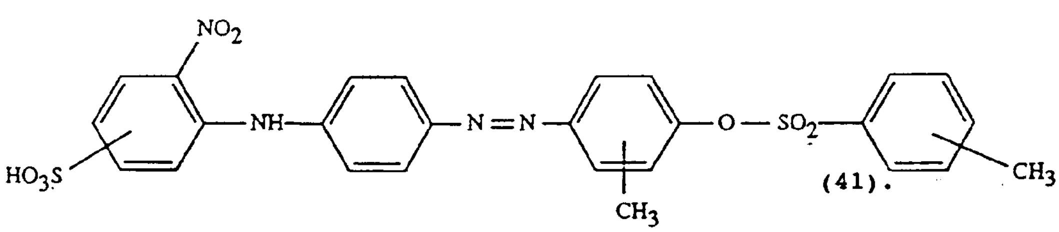

(41).

11. A process for trichromatic dyeing or printing according to any one of claims 7 to 10, wherein a dye mixture according to any one of claims 1 to 4 is used together with the red-dyeing dye of the formula

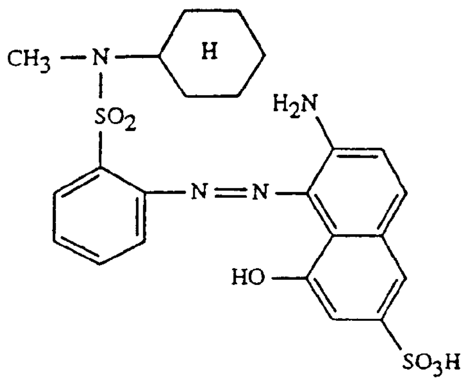

(29)

and the yellow-dyeing dye of the formula

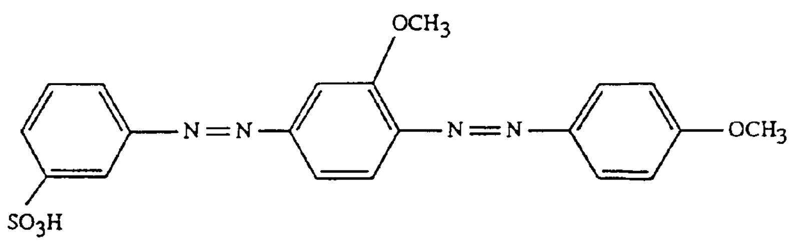

(36o)

or the orange-dyeing dye of the formula

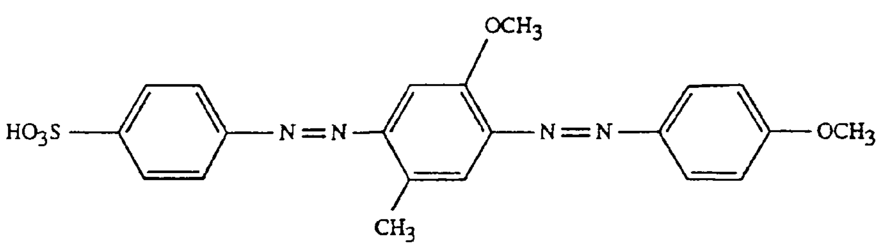

(36p),

12. The use of a dye mixture according to claim 1 for dyeing and printing.

13. A dyeing or printing preparation which contains a dye mixture according to any one of claims 1 to 6.

14. The material, in particular a textile material, dyed or printed according to any one of claims 7 to 9 or 11.

15. A process for preparing a dye mixture according to claim 1, which comprises reacting 1-amino-4-bromoanthraquinone-2-sulfonic acid with 4,5-dimethyl-3-β-hydroxyethylaminosulfonylaniline and a compound of the formula $NH_2$-R, where R is as defined in claim 1.

**Claims for the following Contracting State : ES**

1. A process for the preparation of a dye mixture containing a dye of the formula

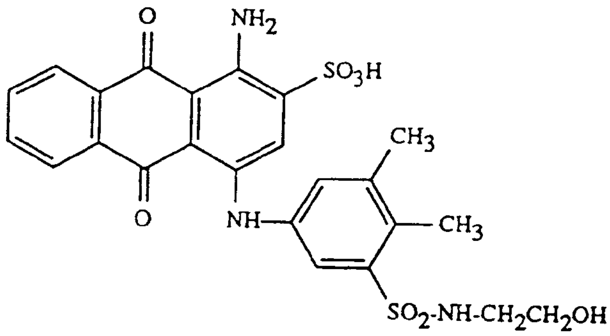

(1)

and a dye of the formula

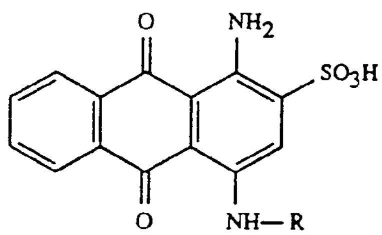

(2)

where R is cyclohexyl or phenyl, which may each be substituted by $C_1$-$C_4$alkyl, acetylamino, N-$C_1$-$C_4$alkylacetylamino, benzoylamino, ureido or by phenylsulfonylamino or phenylsulfonyloxy which may each be substituted in the phenyl ring by $C_1$-$C_4$alkyl, which comprises reacting 1-amino-4-bromoanthraquinone-2-sulfonic acid with 4,5-dimethyl-3-β-hydroxyethylaminosulfonylaniline and a compound of the formula $NH_2$-R, where R is as defined for formula (1), or mixing a dye of the formula (1) with a dye of the formula (2).

2. A process for the preparation of a dye mixture according to claim 1, which comprises using a compound of the formula $NH_2$-R or a dye of the formula (2) where R is cyclohexyl, phenyl, 2-methylphenyl, 2,4,6-trimethylphenyl, 3- or 4-acetylaminophenyl, 3-acetylamino-4-methylphenyl, 4-(N-methylacetylamino)phenyl, 3-ureidophenyl, 4-benzoylaminophenyl, 3-phenylsulfonylaminophenyl, 2-methyl-5-(4'-methylphenylsulfonylamino)phenyl or 4-(4'-methylphenylsulfonyloxy)phenyl.

3. A process for the preparation of a dye mixture according to either of claims 1 and 2, which comprises using as compound of the formula $NH_2$-R 3- or 4-acetylaminoaniline or as dye of the formula (2) a dye of the formula.

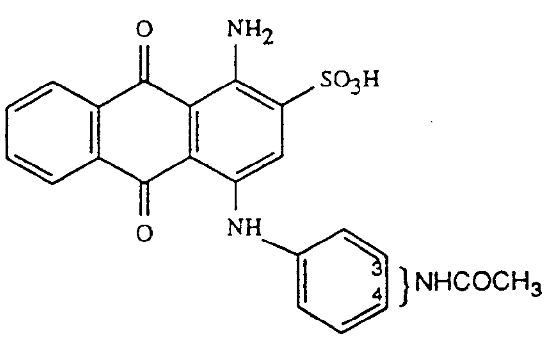

(3)

4. A process for the preparation of a dye mixture according to any one of claims 1 to 3, wherein the ratio of the compound 4,5-dimethyl-3-β-hydroxyethylaminosulfonylaniline and the compound of the formula $NH_2$-R or the ratio of the dyes of the formulae (1) and (2) or (1) and (3) is from 95:5 to 5:95, in particular from 80:20 to 20:80, preferably from 60:40 to 40:60.

5. A process for dyeing and printing natural and synthetic polyamide materials with a dye mixture, which comprises using a dye mixture prepared according to any one of claims 1 to 4.

6. A process for dyeing and printing natural and synthetic polyamide materials using the dye mixture prepared according to any one of claims 1 to 4 in combination with other dyes.

7. A process according to claim 6 for trichromatic dyeing or printing, wherein a dye mixture prepared according to any one of claims 1 to 4 is used in combination with at least one red-dyeing dye and at least one yellow- or orange-dyeing dye.

8. A process according to claim 7 for trichromatic dyeing or printing, wherein a dye mixture prepared according to any one of claims 1 to 4 is used in combination with at least one red-dyeing dye of the formula (6), (7) or (8):

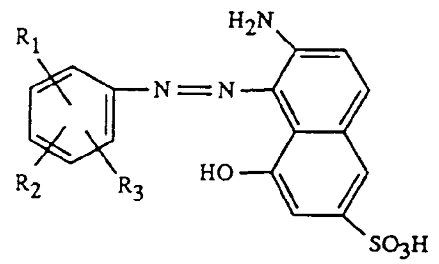

(6),

where $R_1$ is substituted or unsubstituted $C_1$-$C_8$alkyl, halogen, phenyl- or phenoxy-sulfonyl which may be substituted in the phenyl ring by $C_1$-$C_4$alkyl, cyclohexyloxycarbonylamino, $C_2$-$C_4$alkanoylamino, benzoylamino which may be substituted in the phenyl ring by halogen, 1-azacycloheptane-N-sulfonyl or

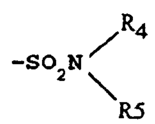

,

where $R_4$ is $C_1$-$C_8$alkyl or unsubstituted or $C_1$-$C_4$alkyl-substituted phenyl or cyclohexyl and $R_5$ is hydrogen or $C_1$-$C_8$alkyl, $R_2$ is hydrogen, halogen, $C_1$-$C_8$alkyl or $C_2$-$C_4$alkanoylamino, and $R_3$ is hydrogen or halogen,

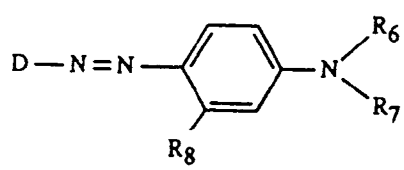

(7),

where D is substituted or unsubstituted phenyl, thiophenyl or benzothiazolyl, $R_6$ is $C_1$-$C_8$alkyl, $R_7$ is substituted or unsubstituted $C_1$-$C_8$alkyl and $R_8$ is hydrogen or $C_1$-$C_4$alkyl, or

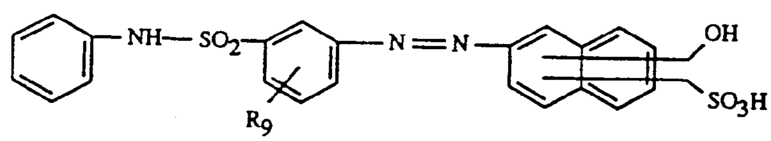

(8),

where $R_9$ is $C_1$-$C_4$alkyl, and in combination with at least one yellow- or orange-dyeing dye of the formula (9), (10), (11), (12) or (13):

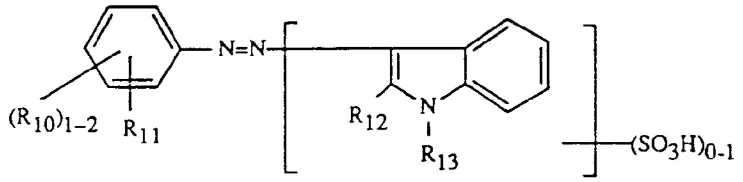

(9),

where $R_{10}$ is hydrogen, $C_{1-4}$alkyl, $C_{1-4}$alkoxy, halogen, $C_{2-4}$alkanoylamino or a substituted or unsubstituted arylsulfonyl, aryloxy or arylcarbonyl radical, $R_{11}$ is hydrogen, halogen, a substituted or unsubstituted alkyl, aryloxy or aryloxysulfonyl radical or a radical of the formula

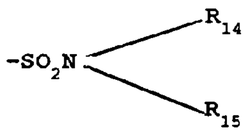

or

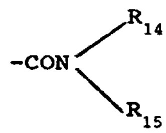

,

$R_{12}$ is a substituted or unsubstituted alkyl or aryl radical, $R_{13}$ is hydrogen or alkyl and $R_{14}$ and $R_{15}$ are independently of each other hydrogen or a substituted or unsubstituted alkyl, cycloalkyl or aryl radical,

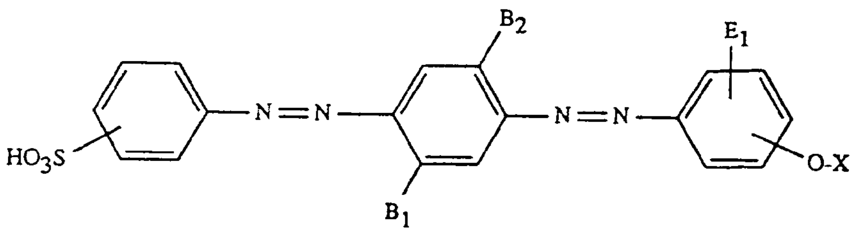

(10),

where $B_1$, $B_2$ and $F_1$ are each hydrogen, $C_{1-4}$alkyl, $C_{1-4}$alkoxy or $C_{2-4}$hydroxyalkoxy and X is straight-chain or branched $C_{1-4}$alkyl or straight-chain or branched $C_{2-4}$hydroxyalkyl,

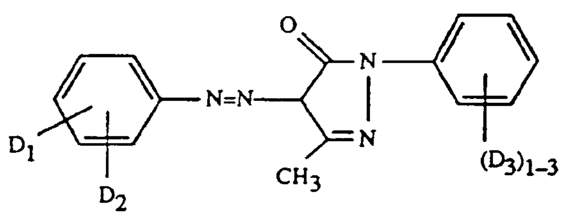

(11)

where $D_1$ is sulfo or has the meaning defined for $R_{10}$ in the formula (9), $D_2$ has the meaning defined for $R_{11}$ in the formula (9), $(D_3)_{1-3}$ is 1-3 substituents $D_3$, and $D_3$ is hydrogen, halogen, $C_{1-4}$alkyl, $C_{1-4}$alkoxy or sulfo,

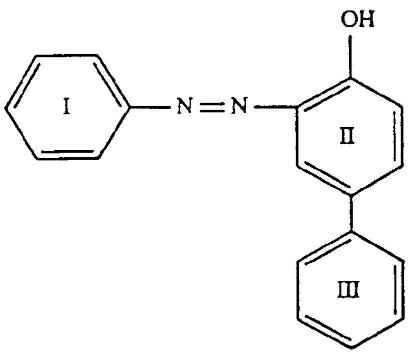

(12),

where the benzene rings I, II and III may be substituted, or

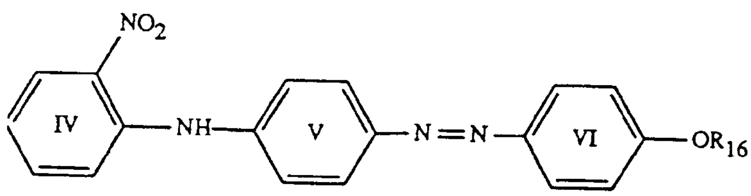

(13),

where the benzene rings IV, V and VI may be substituted and $R_{16}$ is hydrogen or arylsulfonyl.

9. A process according to either of claims 7 and 8 for trichromatic dyeing or printing, wherein use is made of at least one red-dyeing dye of the formula (6), (7) or (8), in a dye of the formula (6) $R_1$ being trifluoromethyl, chlorine, acetylamino, $-SO_2N(n\text{-}C_4H_9)_2$, phenoxysulfonyl, phenylsulfonyl, 1-azacycloheptane-N-sulfonyl, cyclohexyloxycarbonylamino, benzoylamino which may be substituted in the phenyl ring by chlorine, phenylaminosulfonyl which may be substituted in the phenyl ring by methyl, cyclohexylaminosulfonyl, N-($C_1$-$C_2$alkyl)phenyl- or N-($C_1$-$C_2$alkyl)cyclohexylaminosulfonyl, $R_2$ being hydrogen, methyl, chlorine or acetylamino and $R_3$ being hydrogen or chlorine, and in a dye of the formula (7) D being chlorine-, sulfo-, methylaminosulfonyl-, ethylaminosulfonyl- or β-sulfoethylaninosulfonyl-substituted phenyl, methyl-, methoxycarbonyl- or ethoxycarbonyl-substituted thiophenyl or unsubstituted or methyl-, methoxy- or sulfo-substituted benzothiophenyl, $R_6$ being ethyl, $R_7$ being ethyl, β-sulfatoethyl, $-(CH_2)_{2-3}SO_3$ H or benzyl, and $R_6$ being hydrogen or methyl, and in a dye of the formula (8) $R_9$ being methyl.

10. A process according to any one of claims 7 to 9 for trichromatic dyeing or printing, wherein use is made of at least one yellow- or orange-dyeing dye of the formulae

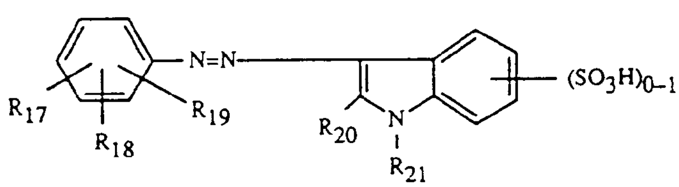

(35),

where $R_{17}$ is hydrogen, methyl, chlorine, methoxy, ethoxy, o-methylphenoxy, phenoxy, acetylamino, phenylsulfonyl, p-methylphenylsulfonyl, p-chlorophenylsulfonyl, naphthylsulfonyl, p-methylbenzoyl or p-chlorobenzoyl, $R_{18}$ is hydrogen, chlorine, methyl, trifluoromethyl, o-methylphenoxy, o-chlorophenoxy, o-chlorophenoxysulfonyl, $-SO_2NH_2$, N-$C_{1-2}$alkylaminosulfonyl, N,N-dimethylaminosulfonyl, N-β-sulfoethylaminosulfonyl, N-methyl-N-β-hydroxyethylaninosulfonyl, N-methyl-N-cyclohexylaminosulfonyl, N-phenylaminosulfonyl, N-o-methylphenylaminosulfonyl, N-o-chlorophenylaminosulfonyl, N-m-trifluoromethylphenylaminosulfonyl, N-ethyl-N-phenylaminosulfonyl, $-CONH_2$ or $-CON(CH_3)_2$, $R_{19}$ is hydrogen or chlorine, $R_{20}$ is methyl or phenyl and $R_{21}$ is hydrogen, methyl, ethyl or octyl,

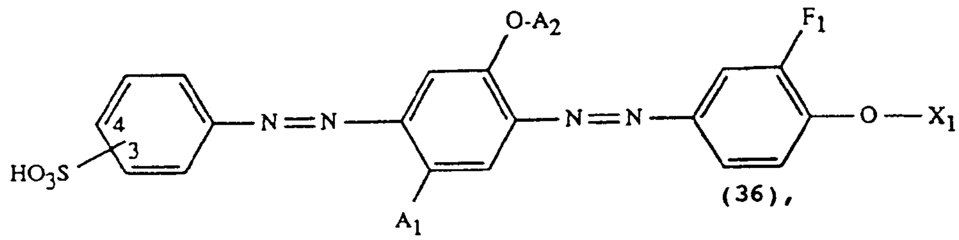

(36),

where $A_1$ is hydrogen or methyl, $F_1$ is hydrogen or methyl and $A_2$ and $X_1$ are each independently of the other hydrogen, methyl, ethyl, β-hydroxyethyl, β-hydroxypropyl, β-hydroxybutyl or α-ethyl-β-hydroxyethyl, and the sulfo group is attached in the 3- or 4-position,

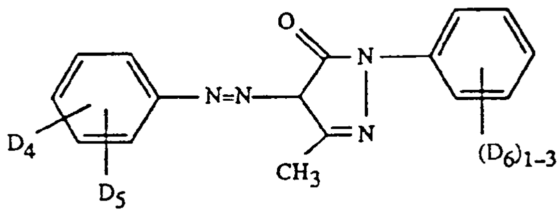

(37),

where $D_4$ is chlorine or phenylaminosulfonyl, $D_5$ is hydrogen or sulfo, $(D_6)_{1-3}$ is 1-3 substituents $D_6$, and $D_6$ is hydrogen, chlorine or sulfo,

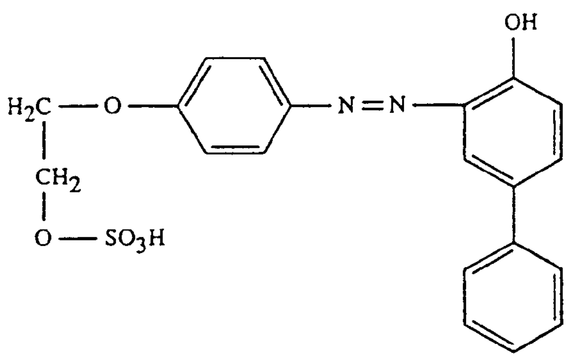

(38)

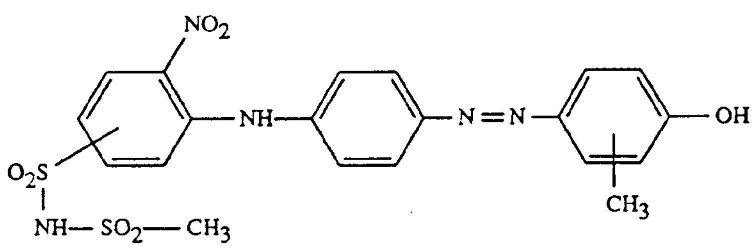

(39),

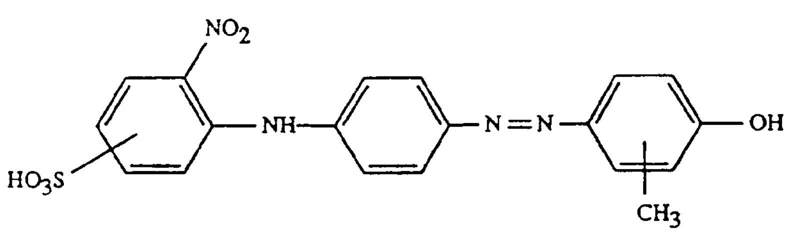

(40)

and

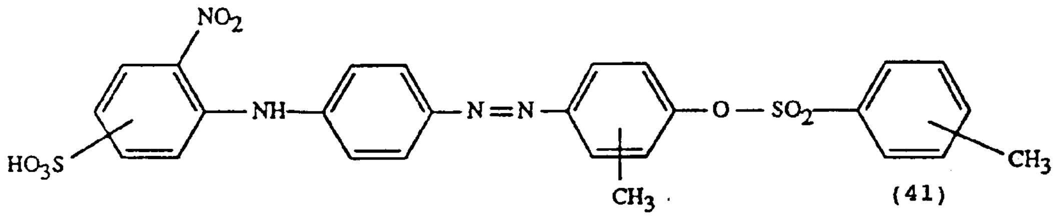

(41)

11. A process for trichromatic dyeing or printing according to any one of claims 7 to 10, wherein a dye mixture prepared according to any one of claims 1 to 4 is used together with the red-dyeing dye of the formula

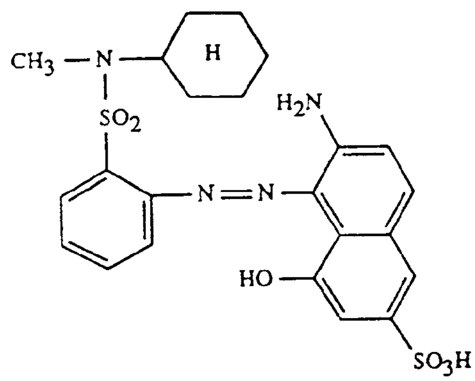

(29)

and the yellow-dyeing dye of the formula

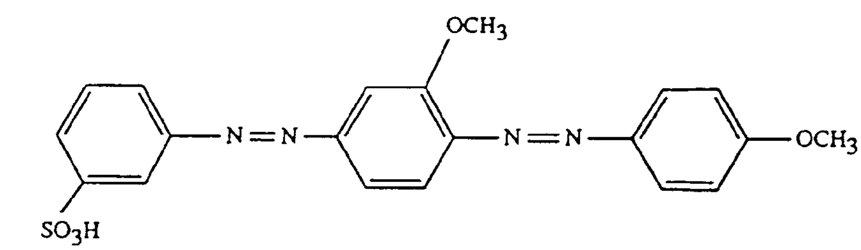

(36o)

or the orange-dyeing dye of the formula

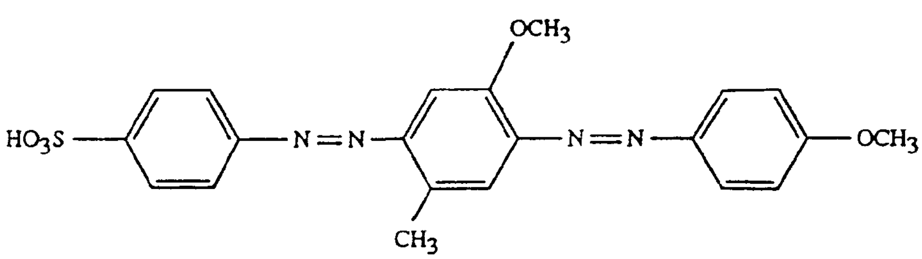

(36p),

12. The use of a dye mixture prepared according to claim 1 for dyeing and printing.

13. A dyeing or printing preparation which contains a dye mixture prepared according to any one of claims 1 to 4.

**14.** The material, in particular a textile material, dyed or printed according to any one of claims 7 to 9 or 11.

## Revendications

**Revendications pour les Etats contractants suivants : BE, CH, DE, DK, FR, GB, IT, LI, NL**

**1.** Mélange de colorants, **caractérisé** en ce qu'il contient un colorant de formule

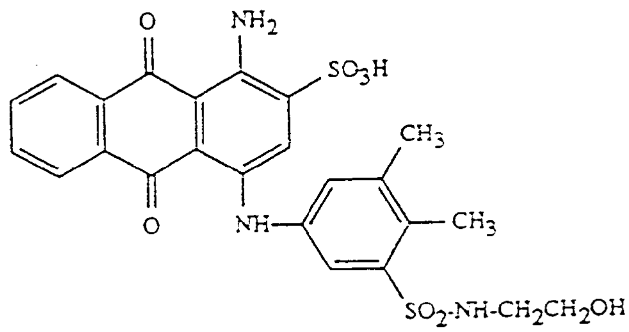

(1)

et un colorant de formule

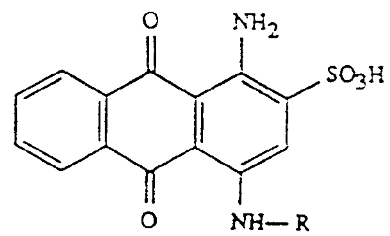

(2),

dans laquelle R représente un groupe cyclohexyle ou phényle, chacun des groupes mentionnés pour R pouvant être substitué par des groupes alkyle en $C_{1-4}$, acétylamino, N-(alkyle en $C_{1-4}$)-acétylamino, benzoylamino, uréido ou phénylsulfonylamino ou phénylsulfonyloxy dont le groupe phényle est éventuellement substitué par des groupes alkyle en $C_{1-4}$.

**2.** Mélange de colorants conforme à la revendication 1, **caractérisé** en ce qu'il contient le colorant de formule (1) et un colorant de formule (2) dans laquelle R représente un groupe cyclohexyle, phényle, 2-méthylphényle, 2,4,6-triméthylphényle, 3-acétylaminophényle, 4-acétylaminophényle, 3-acétylamino-4-méthylphényle, 4-(N-méthylacétylamino)-phényle, 3-uréidophényle, 4-benzoylaminophényle, 3-phénylsulfonylaminophényle, 2-méthyl-5-(4'-méthylphénylsulfonylamino)-phényle ou 4-(4'-méthylphénylsulfonyloxy)-phényle.

**3.** Mélange de colorants conforme à l'une des revendications 1 et 2, **caractérisé** en ce qu'il contient le colorant de formule (1) et un colorant de formule

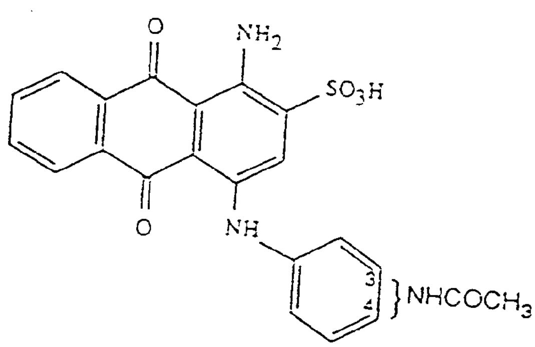

(3)

4. Mélange de colorants conforme à l'une des revendications 1 à 3, **caractérisé** en ce que le rapport des colorants de formule (1) et (2) ou (1) et (3) vaut de 95:5 à 5:95, en particulier de 80:20 à 20:80 et de préférence de 60:40 à 40:60.

5. Procédé de teinture ou d'impression de matières en polyamide naturelles ou synthétiques à l'aide d'un mélange de colorants, **caractérisé** en ce que l'on utilise un mélange de colorants conforme à l'une des revendications 1 à 4.

6. Procédé de teinture ou d'impression de matières en polyamide naturelles ou synthétiques, dans lequel on utilise un mélange de colorants conforme à l'une des revendications 1 à 4, en combinaison avec d'autres colorants.

7. Procédé conforme à la revendication 6, pour la teinture ou l'impression en trichromie, **caractérisé** en ce que l'on utilise un mélange de colorants conforme à l'une des revendications 1 à 4, en combinaison avec au moins un colorant donnant une couleur rouge et au moins un colorant donnant une couleur jaune ou orangée.

8. Procédé conforme à la revendication 7, pour la teinture ou l'impression en trichromie, **caractérisé** en ce que l'on utilise un mélange de colorants conforme à l'une des revendications 1 à 4, en combinaison avec au moins un colorant donnant une couleur rouge, de formule (6), (7) ou (8) :

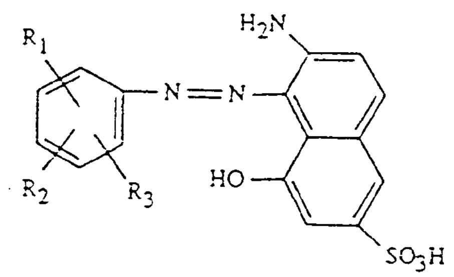

(6),

dans laquelle $R_1$ représente un groupe alkyle en $C_{1-8}$ éventuellement substitué, un atome d'halogène, un groupe phénylsulfonyle ou phénoxysulfonyle éventuellement substitué sur le noyau phényle par des groupes alkyle en $C_{1-4}$, un groupe cyclohexyloxycarbonylamino, un groupe alcanoylamino en $C_{2-4}$, un groupe benzoylamino éventuellement substitué sur le noyau phényle par des atomes d'halogène, un groupe 1-azacycloheptane-N-sulfonyle ou un groupe de formule $-SO_2NR_4R_5$, où $R_4$ représente un groupe alkyle en $C_{1-8}$, un groupe phényle ou cyclohexyle, éventuellement substitué par des groupes alkyle en $C_{1-4}$, et $R_5$ représente un atome d'hydrogène ou un groupe alkyle en $C_{1-8}$, $R_2$ représente un atome d'hydrogène ou d'halogène ou un groupe alkyle en $C_{1-8}$ ou alcanoylamino en $C_{2-4}$, et $R_3$ représente un atome d'hydrogène ou d'halogène,

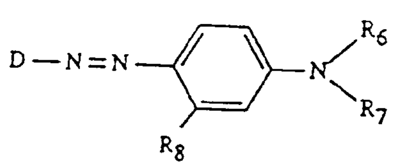

(7),

dans laquelle D représente un groupe phényle, thiophényle ou benzothiazolyle, éventuellement substitué, $R_6$ représente un groupe alkyle en $C_{1-8}$, $R_7$ représente un groupe alkyle en $C_{1-8}$ éventuellement substitué et $R_8$ représente un atome d'hydrogène ou un groupe alkyle en $C_{1-4}$, et

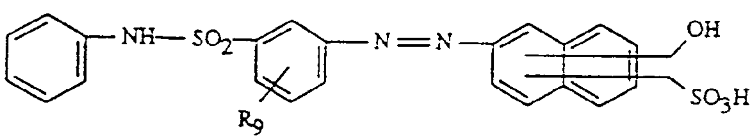

(8),

dans laquelle $R_9$ représente un groupe alkyle en $C_{1-4}$,
et en combinaison avec au moins un colorant donnant une couleur jaune ou orangée, de formule (9), (10), (11) , (12) ou (13) :

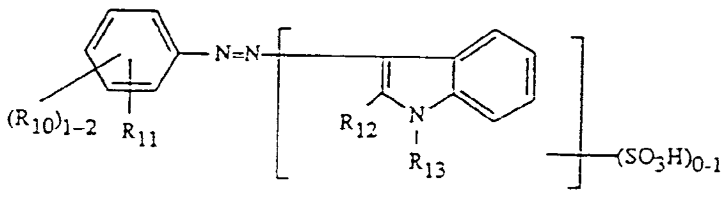

(9) ,

dans laquelle $R_{10}$ représente un atome d'hydrogène ou d'halogène, un groupe alkyle en $C_{1-4}$, alcoxy en $C_{1-4}$ ou alcanoylamino en $C_{2-4}$ ou encore un groupe aryle sulfonyle, aryloxy ou arylcarbonyle, éventuellement substitué, $R_{11}$ représente un atome d'hydrogène ou d'halogène ou un groupe alkyle, aryloxy ou aryloxysulfonyle, éventuellement substitué, ou encore un groupe de formule $-SO_2NR_{14}R_{15}$ ou $-CONR_{14}R_{15}$, $R_{12}$ représente un groupe alkyle ou aryle, éventuellement substitué, $R_{13}$ représente un atome d'hydrogène ou un groupe alkyle, et $R_{14}$ et $R_{15}$, indépendamment l'un de l'autre, représentent chacun un atome d'hydrogène ou un groupe alkyle, cycloalkyle ou aryle, éventuellement substitué,

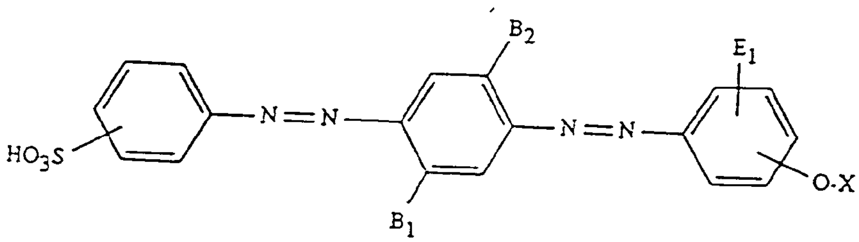

(10) ,

dans laquelle $B_1$, $B_2$ et $E_1$ représentent chacun un atome d'hydrogène ou un groupe alkyle en $C_{1-4}$, alcoxy en $C_{1-4}$ ou hydroxyalcoxy en $C_{2-4}$, et X représente un groupe alkyle en $C_{1-4}$ linéaire ou ramifié ou un groupe hydroxyalkyle en $C_{2-4}$ linéaire ou ramifié,

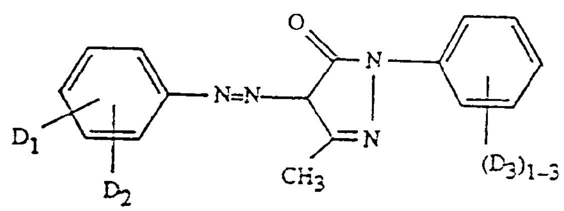

(11) ,

dans laquelle $D_1$ représente un groupe sulfo ou possède la signification indiquée pour $R_{10}$ à propos de la formule (9), $D_2$ possède la signification indiquée pour $R_{11}$ à propos de la formule (9), et $(D_3)_{1-3}$ représente de 1 à 3 substituants $D_3$, $D_3$ représentant un atome d'hydrogène ou d'halogène ou un groupe alkyle en $C_{1-4}$, alcoxy en $C_{1-4}$ ou sulfo,

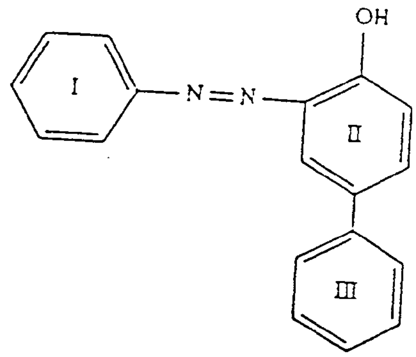

(12),

dans laquelle les noyaux benzéniques I, II et III peuvent porter des substituants, et

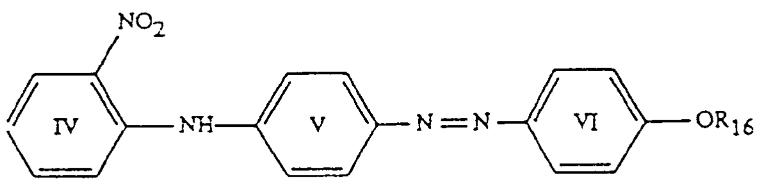

(13),

dans laquelle les noyaux benzéniques IV, V et VI peuvent porter des substituants et $R_{16}$ représente un atome d'hydrogène ou un groupe arylsulfonyle.

9. Procédé conforme à l'une des revendications 7 et 8, pour la teinture ou l'impression en trichromie, **caractérisé** en ce que l'on utilise au moins un colorant donnant une couleur rouge, de formule (6), (7) ou (8), et dans le colorant de formule (6), $R_1$ représente un atome de chlore ou un groupe trifluorométhyle, acétylamino, $-SO_2N(n-C_4H_9)_2$, phénoxysulfonyle, phénylsulfonyle, 1-azacycloheptane-N-sulfonyle, cyclohexyloxycarbonylamino, benzoylamino dont le noyau phényle porte éventuellement des substituants chloro, phénylaminosulfonyle dont le noyau phényle porte éventuellement des substituants méthyle, cyclohexylaminosulfonyle, N-(alkyle en $C_{1-2}$)-phénylaminosulfonyle ou N-(alkyle en $C_{1-2}$)-cyclohexylaminosulfonyle, $R_2$ représente un atome d'hydrogène ou de chlore ou un groupe méthyle ou acétylamino, et $R_3$ représente un atome d'hydrogène ou de chlore, et dans le colorant de formule (7), D représente un groupe phényle portant des substituants chloro, sulfo, méthylaminosulfonyle, éthylaminosulfonyle ou β-sulfoéthylaminosulfonyle, un groupe thiophényle portant des substituants méthyle, méthoxycarbonyle ou éthoxycarbonyle, ou un groupe benzothiophényle portant éventuellement des substituants méthyle, méthoxy ou sulfo, $R_6$ représente un groupe éthyle, $R_7$ représente un groupe éthyle, β-sulfoéthyle, $-(CH_2)_{2-3}-SO_3H$ ou benzyle, et $R_8$ représente un atome d'hydrogène ou un groupe méthyle, et dans le colorant de formule (8), $R_9$ représente un groupe méthyle.

10. Procédé conforme à l'une des revendications 7 à 9, pour la teinture ou l'impression en trichromie, **caractérisé** en ce que l'on utilise au moins un colorant donnant une couleur jaune ou orangée, de formule

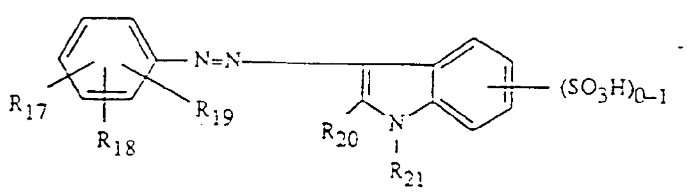

(35),

dans laquelle $R_{17}$ représente un atome d'hydrogène ou de chlore ou un groupe méthyle, méthoxy, éthoxy, o-méthylphénoxy, phénoxy, acétylamino, phénylsulfonyle, p-méthylphénylsulfonyle, p-chlorophénylsulfonyle, naphtylsulfonyle, p-méthylbenzoyle ou p-chlorobenzoyle, $R_{18}$ représente un atome d'hydrogène ou de chlore ou un groupe méthyle, trifluorométhyle, o-méthylphénoxy, o-chlorophénoxy, o-chlorophénoxysulfonyle, $-SO_2NH_2$, N-(alkyle en $C_{1-2}$)-aminosulfonyle, N,N-diméthylaminosulfonyle, N-(β-sulfoéthyl)-aminosulfonyle, N-méthyl-N-(β-hydroxyéthyl) amino-sulfonyle, N-méthyl-N-cyclohexyl-aminosulfonyle, N-phényl-aminosulfonyle, N-o-méthylphénylaminosulfonyle, N-o-chloro-phénylaminosulfonyle, N-m-trifluorométhylphénylaminosulfonyle, N-éthyl-N-phényl-aminosulfonyle, $-CONH_2$ ou $-CON(CH_3)_2$, $R_{19}$ représente un atome d'hydrogène ou de chlore, $R_{20}$ représente un groupe méthyle ou phényle et $R_{21}$ représente un atome d'hydrogène ou un groupe méthyle, éthyle ou octyle,

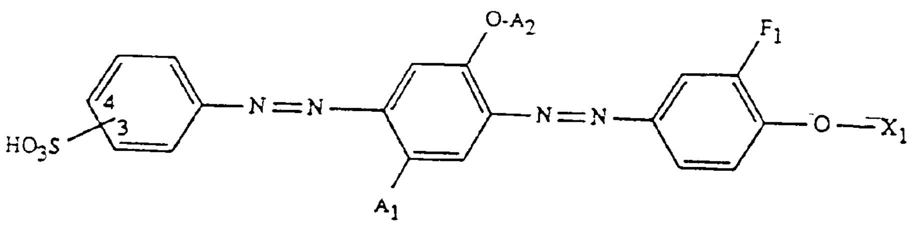

(36),

dans laquelle $A_1$ représente un atome d'hydrogène ou un groupe méthyle, $F_1$ représente un atome d'hydrogène ou un groupe méthyle, et $A_2$ et $X_1$, indépendamment l'un de l'autre, représentent chacun un atome d'hydrogène ou un groupe méthyle, éthyle, β-hydroxyéthyle, β-hydroxypropyle, β-hydroxybutyle ou α-éthyl-β-hydroxyéthyle, et le groupe sulfo est placé en position 3 ou 4,

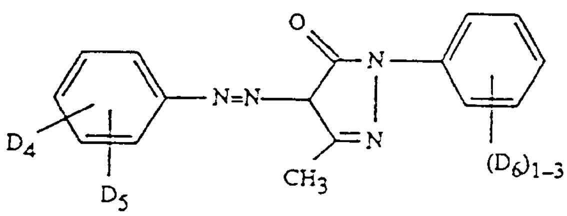

(37),

dans laquelle $D_4$ représente un atome de chlore ou un groupe phénylaminosulfonyle, $D_5$ représente un atome d'hydrogène ou un groupe sulfo, et $(D_6)_{1-3}$ représente de 1 à 3 substituants $D_6$ et $D_6$ représente un atome d'hydrogène ou de chlore ou un groupe sulfo,

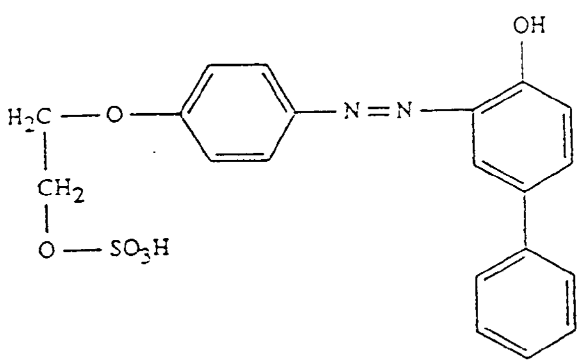

(38),

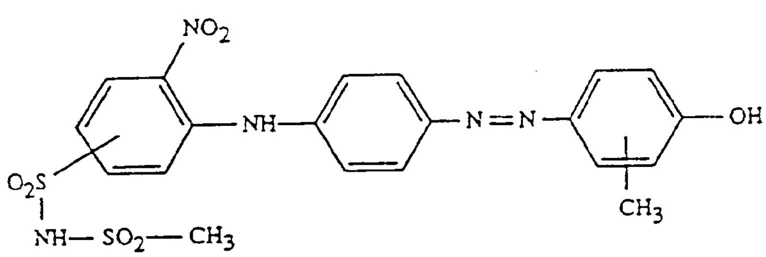

(39),

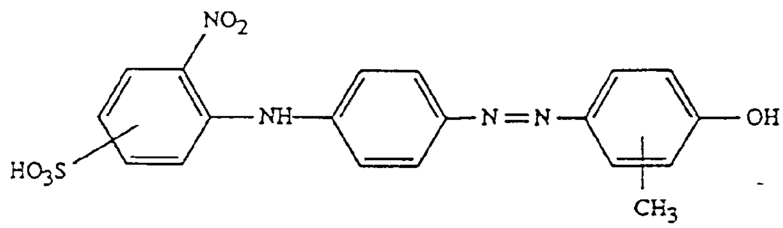

(40)

et

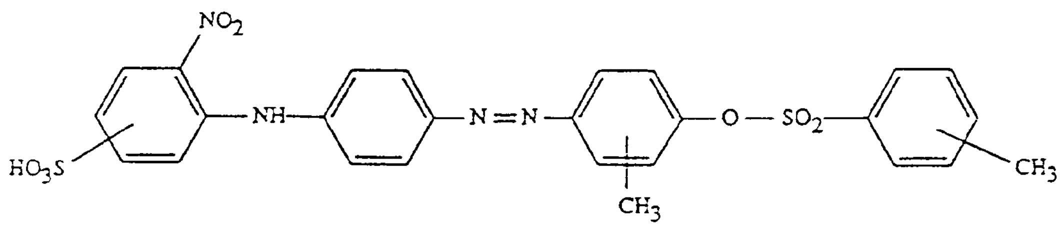

(41)

**11.** Procédé de teinture ou d'impression en trichromie, conforme à l'une des revendications 7 à 10, **caractérisé** en ce que l'on utilise un mélange de colorants conforme à l'une des revendications 1 à 4, conjointement avec le colorant donnant une couleur rouge et de formule

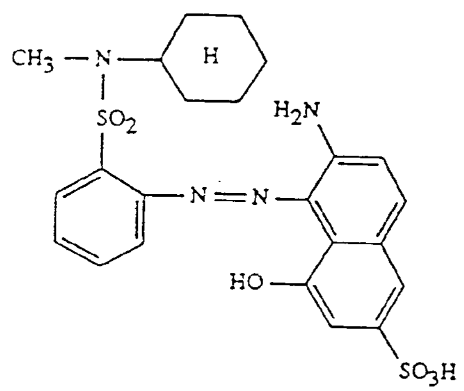

(29)

et avec le colorant donnant une couleur jaune et de formule

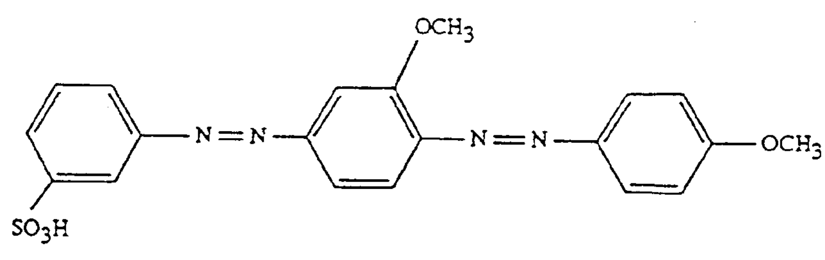

(360)

ou avec le colorant donnant une couleur orangée et de formule

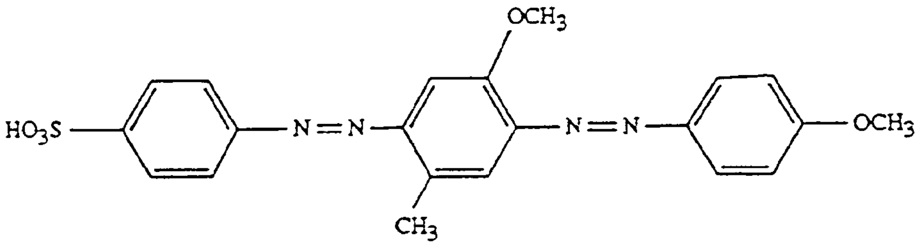 (36p)

12. Utilisation du mélange de colorants conforme à la revendication 1 pour la teinture et l'impression.

13. Préparations pour teinture ou impression, qui contiennent un mélange de colorants conforme à l'une des revendications 1 à 6.

14. Matière, en particulier matière textile, teinte ou imprimée conformément à l'une des revendications 7 à 9 et 11.

15. Procédé de préparation d'un mélange de colorants conforme à la revendication 1, **caractérisé** en ce que l'on fait réagir de l'acide 1-amino-4-bromoanthraquinone-2-sulfonique avec de la 4,5-diméthyl-3-β-hydroxyéthyl-aminosulfonylaniline et avec un composé de formule $NH_2$-R, dans laquelle R possède les significations indiquées dans la revendication 1.

**Revendications pour l'Etat contractant suivant : ES**

1. Procédé de préparation de mélanges de colorants, qui contiennent un colorant de formule

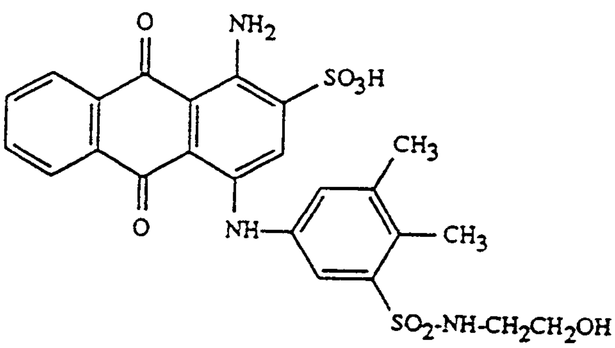 (1)

et un colorant de formule

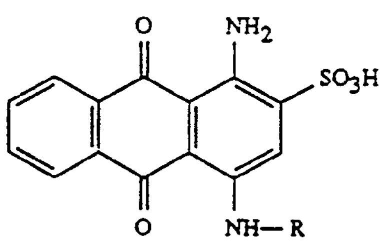 (2),

dans laquelle R représente un groupe cyclohexyle ou phényle, chacun des groupes mentionnés pour R pouvant être substitué par des groupes alkyle en $C_{1-4}$, acétylamino, N-(alkyle en $C_{1-4}$)-acétylamino, benzoylamino, uréido ou phénylsulfonylamino ou phénylsulfonyloxy dont le groupe phényle est éventuellement substitué par des groupes alkyle en $C_{1-4}$, **caractérisé** en ce que l'on fait réagir de l'acide 1-amino-4-bromo-anthraquinone-2-sulfonique avec de la 4,5-diméthyl-3-β-hydroxyéthyl-aminosulfonylaniline et avec un composé de formule $NH_2$-R, dans laquelle R possède les significations indiquées à proppos de

la formule (2), ou en ce que l'on mélange le colorant de formule (1) avec un colorant de formule (2).

2. Procédé de préparation de mélanges de colorants, conforme à la revendication 1, **caractérisé** en ce que l'on utilise un composé de formule $NH_2$-R ou un colorant de formule (2) où R représente un groupe cyclohexyle, phényle, 2-méthylphényle, 2,4,6-triméthylphényle, 3-acétylaminophényle, 4-acétylaminophényle, 3-acétylamino-4-méthylphényle, 4-(N-méthyl-acétylamino)-phényle, 3-uréidophényle, 4-benzoylaminophényle, 3-phénylsulfonylaminophényle, 2-méthyl-5-(4'-méthylphénylsulfonylamino)-phényle ou 4-(4'-méthylphényl-sulfonyloxy)-phényle.

3. Procédé de préparation de mélanges de colorants, conforme à l'une des revendications 1 et 2, **caractérisé** en ce que l'on utilise de la 3- ou 4-acétylaminoaniline comme composé de formule $NH_2$-R, ou bien un colorant de formule

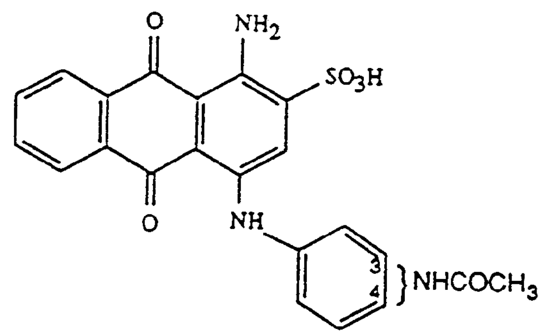

(3)

comme colorant de formule (2).

4. Procédé de préparation de mélanges de colorants, conforme à l'une des revendications 1 à 3, **caractérisé** en ce que le rapport de la 4,5-diméthyl-3-β-hydroxyéthylaminosulfonyl-aniline et du composé de formule $NH_2$-R, ou le rapport des colorants de formule (1) et (2) ou (1) et (3), vaut de 95:5 à 5:95, en particulier de 80:20 à 20:80 et de préférence de 60:40 à 40:60.

5. Procédé de teinture ou d'impression de matières en polyamide naturelles ou synthétiques à l'aide d'un mélange de colorants, **caractérisé** en ce que l'on utilise un mélange de colorants préparé selon l'une des revendications 1 à 4.

6. Procédé de teinture ou d'impression de matières en polyamide naturelles ou synthétiques, dans lequel on utilise un mélange de colorants préparé selon l'une des revendications 1 à 4, en combinaison avec d'autres colorants.

7. Procédé conforme à la revendication 6, pour la teinture ou l'impression en trichromie, **caractérisé** en ce que l'on utilise un mélange de colorants préparé selon l'une des revendications 1 à 4, en combinaison avec au moins un colorant donnant une couleur rouge et au moins un colorant donnant une couleur jaune ou orangée.

8. Procédé conforme à la revendication 7, pour la teinture ou l'impression en trichromie, **caractérisé** en ce que l'on utilise un mélange de colorants préparé selon l'une des revendications 1 à 4, en combinaison avec au moins un colorant donnant une couleur rouge, de formule (6), (7) ou (8) :

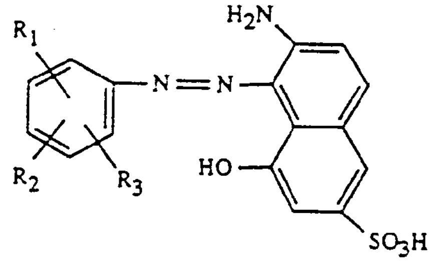

(6),

dans laquelle $R_1$ représente un groupe alkyle en $C_{1-8}$ éventuellement substitué, un atome d'halogène, un groupe phénylsulfonyle ou phénoxysulfonyle éventuellement substitué sur le noyau phényle par des groupes alkyle en $C_{1-4}$, un groupe cyclohexyloxycarbonylamino, un groupe alcanoylamino en $C_{2-4}$, un groupe benzoylamino éventuellement substitué sur le noyau phényle par des atomes d'halogène, un groupe 1-azacycloheptane-N-sulfonyle ou un groupe de formule $-SO_2NR_4R_5$, où $R_4$ représente un groupe alkyle en $C_{1-8}$, un groupe phényle ou cyclohexyle, éventuellement substitué par des groupes alkyle en $C_{1-4}$, et $R_5$ représente un atome d'hydrogène ou un groupe alkyle en $C_{1-8}$, $R_2$ représente un atome d'hydrogène ou d'halogène ou un groupe alkyle en $C_{1-8}$ ou alcanoylamino en $C_{2-4}$, et $R_3$ représente un atome d'hydrogène ou d'halogène,

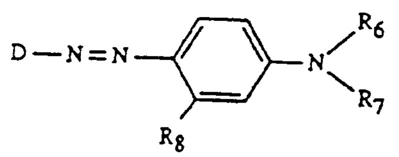

(7),

dans laquelle D représente un groupe phényle, thiophényle ou benzothiazolyle, éventuellement substitué, $R_6$ représente un groupe alkyle en $C_{1-8}$, $R_7$ représente un groupe alkyle en $C_{1-8}$ éventuellement substitué et $R_8$ représente un atome d'hydrogène ou un groupe alkyle en $C_{1-4}$, et

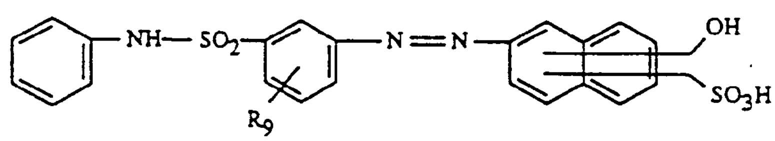

(8),

dans laquelle $R_9$ représente un groupe alkyle en $C_{1-4}$,

et en combinaison avec au moins un colorant donnant une couleur jaune ou orangée, de formule (9), (10), (11), (12) ou (13) :

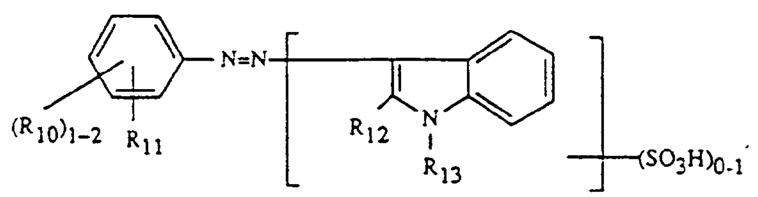

(9),

dans laquelle $R_{10}$ représente un atome d'hydrogène ou d'halogène, un groupe alkyle en $C_{1-4}$, alcoxy en $C_{1-4}$ ou alcanoylamino en $C_{2-4}$, ou encore un groupe aryle sulfonyle, aryloxy ou arylcarbonyle, éventuellement substitué, $R_{11}$ représente un atome d'hydrogène ou d'halogène ou un groupe alkyle, aryloxy ou aryloxysulfonyle, éventuellement substitué, ou encore un groupe de formule $-SO_2NR_{14}R_{15}$ ou $-CONR_{14}R_{15}$, $R_{12}$ représente un groupe alkyle ou aryle, éventuellement substitué, $R_{13}$ représente un atome d'hydrogène ou un groupe alkyle, et $R_{14}$ et $R_{15}$, indépendamment l'un de l'autre, représentent chacun un atome d'hydrogène ou un groupe alkyle, cycloalkyle ou aryle, éventuellement substitué,

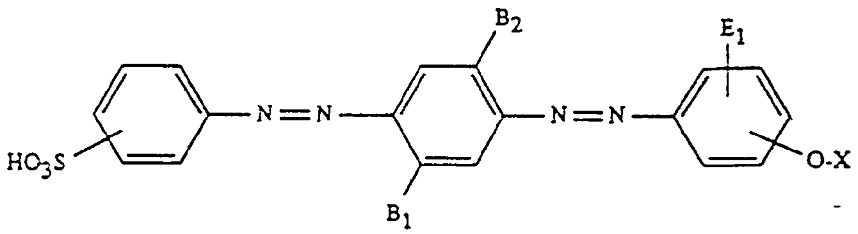

(10),

dans laquelle $B_1$, $B_2$ et $E_1$ représentent chacun un atome d'hydrogène ou un groupe alkyle en $C_{1-4}$, alcoxy en $C_{1-4}$ ou hydroxyalcoxy en $C_{2-4}$, et X représente un groupe alkyle en $C_{1-4}$ linéaire ou ramifié ou un groupe hydroxyalkyle en $C_{2-4}$ linéaire ou ramifié,

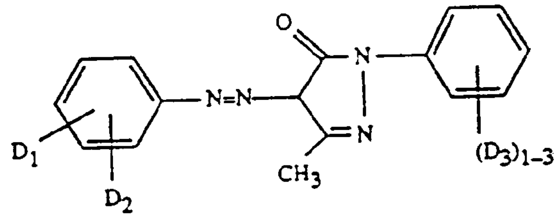

(11),

dans laquelle $D_1$ représente un groupe sulfo ou possède la signification indiquée pour $R_{10}$ à propos de la formule (9), $D_2$ possède la signification indiquée pour $R_{11}$ à propos de la formule (9), et $(D_3)_{1-3}$ représente de 1 à 3 substituants $D_3$, $D_3$ représentant un atome d'hydrogène ou d'halogène ou un groupe alkyle en $C_{1-4}$, alcoxy en $C_{1-4}$ ou sulfo,

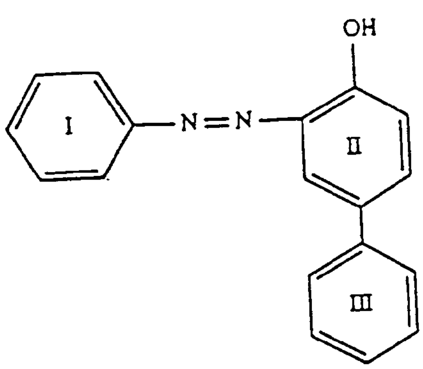

(12),

dans laquelle les noyaux benzéniques I, II et III peuvent porter des substituants, et

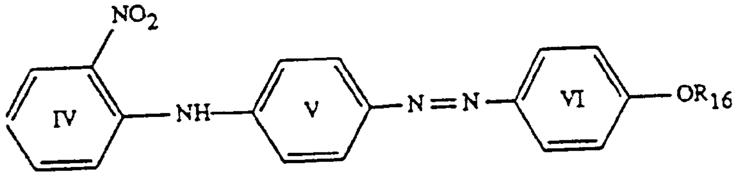

(13),

dans laquelle les noyaux benzéniques IV, V et VI peuvent porter des substituants et $R_{16}$ représente un atome d'hydrogène ou un groupe arylsulfonyle.

9. Procédé conforme à l'une des revendications 7 et 8, pour la teinture ou l'impression en trichromie, **carac-**

**térisé** en ce que l'on utilise au moins un colorant donnant une couleur rouge, de formule (6), (7) ou (8), et dans le colorant de formule (6), $R_1$ représente un atome de chlore ou un groupe trifluorométhyle, acétylamino, $-SO_2N(n-C_4H_9)_2$, phénoxysulfonyle, phénylsulfonyle, 1-azacycloheptane-N-sulfonyle, cyclohexyloxycarbonylamino, benzoylamino dont le noyau phényle porte éventuellement des substituants chloro, phénylaminosulfonyle dont le noyau phényle porte éventuellement des substituants méthyle, cyclohexylaminosulfonyle, N-(alkyle en $C_{1-2}$)-phénylaminosulfonyle ou N-(alkyle en $C_{1-2}$)-cyclohexylaminosulfonyle, $R_2$ représente un atome d'hydrogène ou de chlore ou un groupe méthyle ou acétylamino, et $R_3$ représente un atome d'hydrogène ou de chlore, et dans le colorant de formule (7), D représente un groupe phényle portant des substituants chloro, sulfo, méthylaminosulfonyle, éthylaminosulfonyle ou β-sulfoéthylaminosulfonyle, un groupe thiophényle portant des substituants méthyle, méthoxycarbonyle ou éthoxycarbonyle, ou un groupe benzothiophényle portant éventuellement des substituants méthyle, méthoxy ou sulfo, $R_6$ représente un groupe éthyle, $R_7$ représente un groupe éthyle, β-sulfoéthyle, $-(CH_2)_{2-3}-SO_3H$ ou benzyle, et $R_6$ représente un atome d'hydrogène ou un groupe méthyle, et dans le colorant de formule (8), $R_9$ représente un groupe méthyle.

**10.** Procédé conforme à l'une des revendications 7 à 9, pour la teinture ou l'impression en trichromie, **caractérisé** en ce que l'on utilise au moins un colorant donnant une couleur jaune ou orangée, de formule

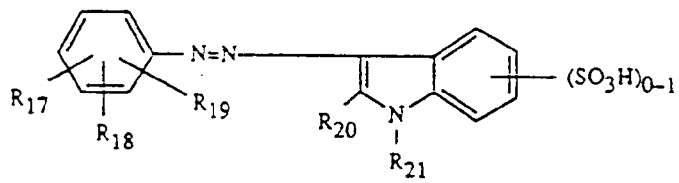

(35),

dans laquelle $R_{17}$ représente un atome d'hydrogène ou de chlore ou un groupe méthyle, méthoxy, éthoxy, o-méthylphénoxy, phénoxy, acétylamino, phénylsulfonyle, p-méthylphénylsulfonyle, p-chlorophénylsulfonyle, naphtylsulfonyle, p-méthylbenzoyle ou p-chlorobenzoyle, $R_{18}$ représente un atome d'hydrogène ou de chlore ou un groupe méthyle, trifluorométhyle, o-méthylphénoxy, o-chlorophénoxy, o-chlorophénoxysulfonyle, $-SO_2NH_2$, N-(alkyle en $C_{1-2}$)-aminosulfonyle, N,N-diméthylaminosulfonyle, N-(β-sulfoéthyl)-aminosulfonyle, N-méthyl-N-(β-hydroxyéthyl)-amino-sulfonyle, N-méthyl-N-cyclohexyl-aminosulfonyle, N-phényl-aminosulfonyle, N-o-méthylphénylaminosulfonyle, N-o-chloro-phénylaminosulfonyle, N-m-trifluorométhylphénylaminosulfonyle, N-éthyl-N-phényl-aminosulfonyle, $-CONH_2$ ou $-CON(CH_3)_2$, $R_{19}$ représente un atome d'hydrogène ou de chlore, $R_{20}$ représente un groupe méthyle ou phényle et $R_{21}$ représente un atome d'hydrogène ou un groupe méthyle, éthyle ou octyle,

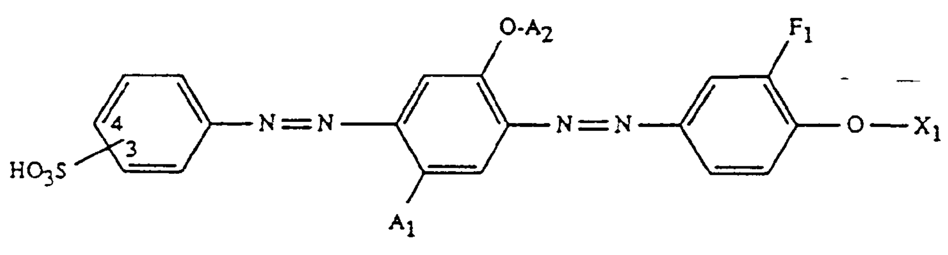

(36),

dans laquelle $A_1$ représente un atome d'hydrogène ou un groupe méthyle, $F_1$ représente un atome d'hydrogène ou un groupe méthyle, et $A_2$ et $X_1$, indépendamment l'un de l'autre, représentent chacun un atome d'hydrogène ou un groupe méthyle, éthyle, β-hydroxyéthyle, β-hydroxypropyle, β-hydroxybutyle ou α-éthyl-β-hydroxyéthyle, et le groupe sulfo est placé en position 3 ou 4,

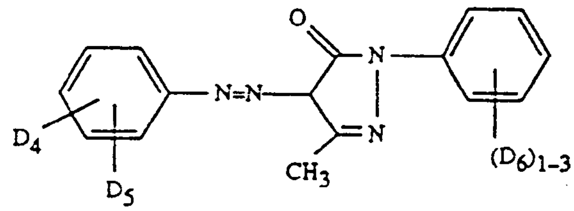 (37),

dans laquelle $D_4$ représente un atome de chlore ou un groupe phénylaminosulfonyle, $D_5$ représente un atome d'hydrogène ou un groupe sulfo, et $(D_6)_{1-3}$ représente de 1 à 3 substituants $D_6$ et $D_6$ représente un atome d'hydrogène ou de chlore ou un groupe sulfo,

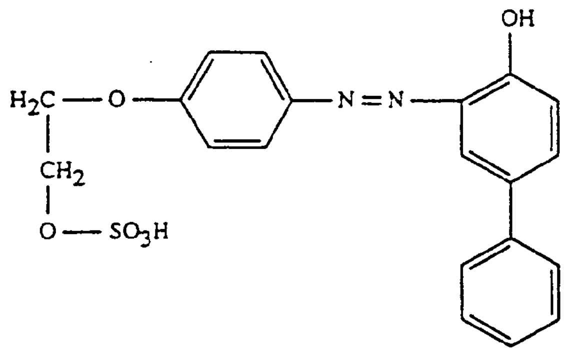 (38),

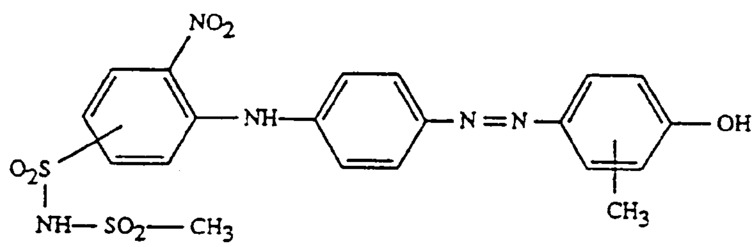 (39),

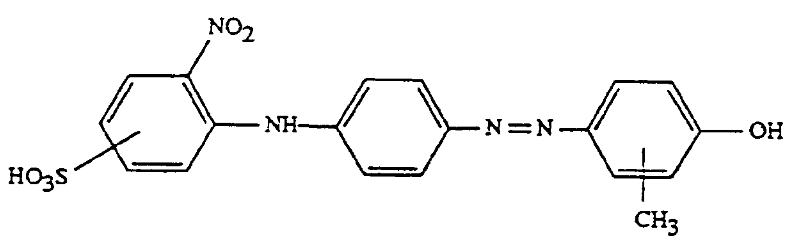 (40)

et

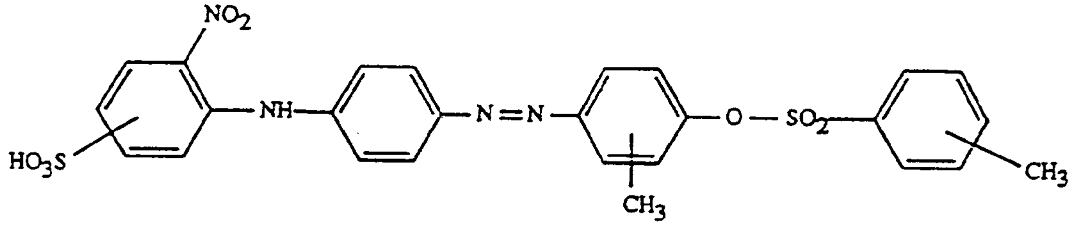 (41)

**11.** Procédé de teinture ou d'impression en trichromie, conforme à l'une des revendications 7 à 10, **caractérisé** en ce que l'on utilise un mélange de colorants préparé selon l'une des revendications 1 à 4, conjointement avec le colorant donnant une couleur rouge et de formule

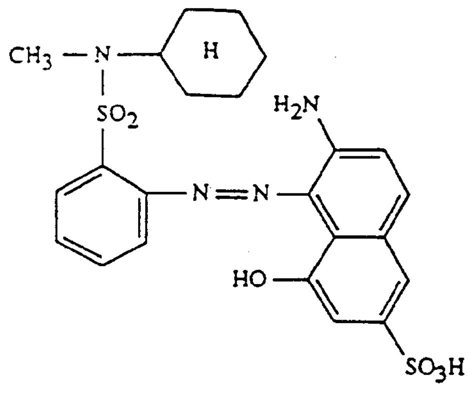

(29)

et avec le colorant donnant une couleur jaune et de formule

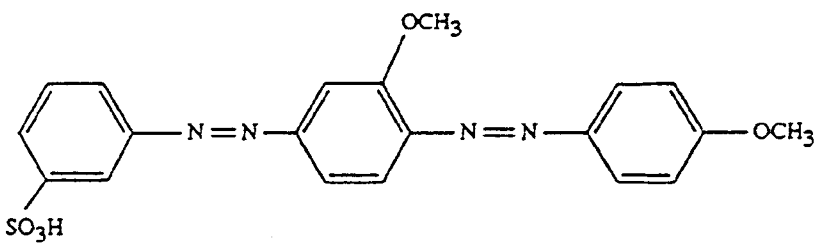

(36o)

ou avec le colorant donnant une couleur orangée et de formule

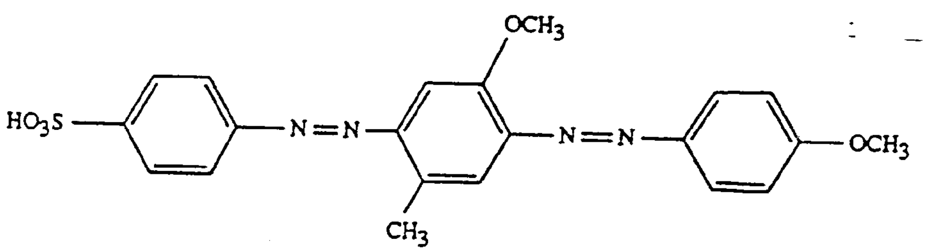

(36p)

**12.** Utilisation du mélange de colorants préparé selon la revendication 1 pour la teinture et l'impression.

**13.** Préparations pour teinture ou impression, qui contiennent un mélange de colorants préparé selon l'une des revendications 1 à 6.

**14.** Matière, en particulier matière textile, teinte ou imprimée conformément à l'une des revendications 7 à 9 et 11.